(19) Europäisches Patentamt
European Patent Office
Office européen des brevets

(11) EP 1 859 327 B1

(12) EUROPÄISCHE PATENTSCHRIFT

(45) Veröffentlichungstag und Bekanntmachung des Hinweises auf die Patenterteilung:
**26.08.2009 Patentblatt 2009/35**

(21) Anmeldenummer: **06704733.2**

(22) Anmeldetag: **02.03.2006**

(51) Int Cl.:
***G05B 19/02*** *(2006.01)* ***G05D 3/12*** *(2006.01)*

(86) Internationale Anmeldenummer:
**PCT/AT2006/000091**

(87) Internationale Veröffentlichungsnummer:
**WO 2006/094322 (14.09.2006 Gazette 2006/37)**

(54) **VERFAHREN UND POSITIONSREGELUNGSEINRICHTUNG ZUR FLACHHEITSBASIERTEN STEUERUNG DES BETRIEBES EINER LASTTRAGVORRICHTUNG**

METHOD AND POSITION REGULATING DEVICE FOR CONTROLLING THE OPERATION OF A LOAD BEARING APPARATUS, BASED ON TWO DIMENSIONS

PROCEDE ET DISPOSITIF DE REGULATION DE POSITION DESTINES A LA COMMANDE DU FONCTIONNEMENT D'UN SYSTEME PORTE-CHARGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.03.2005 AT 3832005**
**18.03.2005 AT 4602005**

(43) Veröffentlichungstag der Anmeldung:
**28.11.2007 Patentblatt 2007/48**

(73) Patentinhaber: **TGW Transportgeräte GmbH**
**4600 Wels (AT)**

(72) Erfinder:
- **ROHRAUER, Markus**
  **A-4490 St. Florian (AT)**
- **OBWALLER, Rainer**
  **A-4600 Wels (AT)**

(74) Vertreter: **Secklehner, Günter**
**Rosenauerweg 16**
**4580 Windischgarsten (AT)**

(56) Entgegenhaltungen:
**DE-A1- 10 064 182**

- **TORSTEN WEY, MARKUS LEMMEN: "Flachheitsbasierte Regelung - Folgeregelung eines hydraulischen Differentialzylinders" 1997, FORSCHUNGSBERICHT NR. 11/97, GERHARD-MERCATOR UNIVERSITÄT-GH , DUSIBURG , XP002395713 das ganze Dokument**
- **REGELUNGS-TECHNISCHE PRAXIS, R.OLDENBOURG VERLAG GMBH. MUNCHEN, DE, Nr. 45, 1997, XP001247434**
- **"Flachheitsbasierte Steuerung eines Timoshenko-Balkens" ZAMM Z. ANGEW. MATH. MECH, Bd. 83, Nr. 2, 27. Januar 2003 (2003-01-27), Seiten 119-127, XP002395711**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur flachheitsbasierten Bewegungssteuerung einer rechnergesteuerten Lasttragvorrichtung, eine Positionsregelungseinrichtung sowie eine Lasttragvorrichtung, wie in den Oberbegriffen der Ansprüche 1, 11, 12, 22 und 23 beschrieben.

Der zunehmende Kosten- und Leistungsdruck verlangt eine technisch-wirtschaftliche Optimierung von Regalbediengeräten, insbesondere den Fahr- und Hubantrieben einschließlich, deren Regelung, da diese neben rein mechanischen Auslegungskriterien maßgeblich das dynamische Verhalten prägen. Zu berücksichtigen ist, dass sich die Spielzeiten von Hub- und Fahrantrieb aus reinen Bewegungszeiten und Abklingzeiten für die beispielsweise durch Beschleunigen oder Bremsen angeregten Schwingungen vom Mast zusammensetzen. Bei einem schwingenden Mast kann die Übergabe des Ladegutes von der Hubeinheit auf den Regalstellplatz wegen einer möglichen Beschädigungsgefahr zunächst nicht durchgeführt werden. Vielmehr muss das Abklingen der Amplitude auf einen Grenzwert abgewartet werden. Hieraus lässt sich entnehmen, dass nicht zuletzt das dynamische Verhalten maßgeblich den Durchsatz und damit die Wirtschaftlichkeit eines Regallagersystems beeinflusst. Der Forderung nach einer Durchsatzsteigerung durch höhere Beschleunigungen und Geschwindigkeiten steht somit entgegen, dass hierdurch größere Schwingungsamplituden und längere Abklingzeiten unvermeidlich sind. Im Ergebnis erhöht sich somit die Spielzeit trotz Verringerung der Bewegungszeit. Zur Lösung des somit vorliegenden Optimierungsproblems mit widersprüchlichen Zielsetzungen, werden die Fahr- und Hubantriebe bekannter Regalbediengeräte in einem Regelkreis eingebunden, mit dem die Abklingzeit der Schwingungen am Mast reduziert werden soll.

In vergangener Zeit lagen auch Bestrebungen darin, die am Mast angeregten Schwingungen bzw. Mastauslenkung oder die Krümmung des Mastes in ausgelenktem Zustand über einen Messwertaufnehmer zu erfassen und die Messwerte in einen Regler einer Positionsregelungseinrichtung der Fahr- und Hubantriebe einzukoppeln, um auf diese Weise die Sollstellkraft der Fahr- und Hubantriebe über die gesamte Betriebsfahrt an den jeweils vorherrschenden Betriebszustand anpassen zu können. Damit liegt neben dem konventionellen Positionsregelkreis noch ein geschlossener Regelkreis vor, mittels dem eine aktive Dämpfung der Schwingungen des Mastes erreicht wird. Eine solche aktive Schwingungsdämpfung ist beispielsweise aus der DE 196 41 192 A1, JP 11-301815 A und JP 09-272606 A bekannt. Die Rückkoppelung der Messwerte in die Positionsregelungseinrichtung der Fahr- und Hubantriebe verlangsamt einen Stelleingriff, zumal in der vom Regalbediengerät bzw. von der Hubeinheit angefahrenen Zielposition das Abklingen der Schwingungen auf einen Grenzwert abgewartet werden muss und dadurch alleinig aufgrund der Regelungsstruktur die Spielzeiten für die Übergabe von Ladegütern zwischen Regalbediengerät und Regelstellplatz erheblich erhöht werden und das Regallagersystem nicht den Anforderungen der hohen Leistungsfähigkeit gerecht werden kann.

Die EP 0 806 715 B1 beschreibt ein Verfahren zum Regeln des Antriebs eines Regalbediengerätes ebenfalls mit aktiver Schwingungsdämpfung unter Verwendung eines den aktuellen dynamischen Zustand des Regalbediengerätes berücksichtigenden, adaptiven Zustandsreglers, der ein breites Spektrum an Optimierungsmöglichkeiten erlaubt. Hierzu wird das momentane dynamische Verhalten des Regalbediengerätes aus vorhandenen Daten eines Zustands- und Störbeobachterreglermoduls, unter Nutzung von Informationen über die Gerätedynamik beinhaltenden Mess- und Stellgrößen und anhand von Koeffizienten-Kennfeldern, errechnet. Die Kennfelder enthalten konstruktive Einzelheiten bzw. dynamische Eigenschaften des Regalbediengerätes und wird ausgehend von einer Basiseinstellung gerätedynamischer Größen des Regalbediengerätes und einem iterativen Schätzalgorithmus von einem eine automatische selbstlernende Koeffizientenidentifikation durchführenden Reglermodul ermittelt und auf der Grundlage mathematischer Gleichungen des errechneten momentanen dynamischen Verhaltens, beim Regeln des Antriebs, Schwingungen des Regalbediengerätes aktiv gedämpft. Auch wenn dieses Reglerkonzept ein breites Spektrum an Optimierungsmöglichkeiten offen hält, steht diesem ein extrem hoher Aufwand in der Auslegung des Zustandsreglers gegenüber, zumal der Zustandsregler eine Vielzahl von unterschiedlichen Betriebszuständen berücksichtigen muss, so etwa die konstruktive Ausgestaltung, die dynamischen Eigenschaften des Regalbediengerätes und dgl.

Ein Verfahren zur flachheitsbasierten Bewegungssteuerung eines Differentialzylinders für ein elastisches Handhabungssystem ist aus dem Forschungsbericht "Flachheitsbasierte Regelung **-** Folgeregelung eines hydraulischen Differentialzylinders", Ausgabe 11/97 bekannt. Der Differentialzylinder ist mit einem Ventil verbunden und umfasst eine flachheitsbasierte Regelung, letztere von einer Vorsteuerung eine vorab berechnete Solltrajektorie für die Bewegungssteuerung des Kolbens zwischen den Endlagen aufgeprägt wird. Anhand der Solltrajektorie wird ein zeitlicher Verlauf einer Stellgröße, dh. die Steuerspannung am Ventil berechnet. Störgrößen, beispielsweise Parameteränderungen führen zu Abweichungen zwischen der Soll- und Isttrajektorie. Mit einer zusätzlichen Regelung wird die Folgebewegung der Kolben-Position entlang der Solltrajektorie stabilisiert.

Weiters ist aus der Veröffentlichung "Regelungstechnische Praxis, R. Oldenbourg Verlag GmbH, Nr. 45, 1997" ein Verfahren zur flachheitsbasierten Bewegungssteuerung eines Fahrzeugmodells bekannt, welches entlang einer Solltrajektorie, die das Einparken des Fahrzeugsmodells in eine Parklücke beschreibt, geführt wird. Störgrößen, beispielsweise Schlupf bei der gesteuerten Bewegung, fuhren zu einer Abweichung von der Solltrajektorie. Durch eine Folgeregelung kann die Folgebewegung entlang der Solltrajektorie stabilisiert werden.

Die DE 100 64 182 A1 offenbart einen Kran oder Bagger zum Umschlagen von einer an einem Lastseil hängenden Last, der eine computergesteuerte Regelung zur Dämpfung der Lastpendelung, ein Bahnplanungsmodul, eine Zentripetalkraftkompensationseinrichtung und zumindest einen Achsregler für das Drehwerk, Wippwerk und Hubwerk aufweist.

Schließlich beschreibt eine weitere Veröffentlichung "ZAMM Z. Angew. Math. Mech. 83, Nr. 2, Seiten 119-127 vom 27. Jänner 2003 eine "Flachheitsbasierte Steuerung eines Timoshenko-Balkens".

Der Erfindung liegt die Aufgabe zugrunde, ein Verfahren und eine Positionsregelungseinrichtung bereitzustellen, die eine einfache und zuverlässige Steuerung des Betriebes einer Lasttragvorrichtung gestatten und dabei im Betrieb eine Schwingungsanregung der Lasttragvorrichtung unterdrückt werden kann sowie eine exakte Positionierung der Hubeinheit an einer Start- und Zielposition in kürzester Zeit ermöglicht.

Die Aufgabe der Erfindung wird durch die im Anspruch 1, 11 und 23 wiedergegebenen Maßnahmen und Merkmale gelöst. Von Vorteil ist, dass eine Überschreitung der Grenzwerte mechanischer als auch elektrischer Komponenten, wie Biegespannung im Mastfußbereich, ungleichmäßige Belastung der Höhenführungsrollen der Fahreinheit, Überbelastung der elektrischen Antriebe der Fahr- und Hubeinheit, zuverlässig vermieden wird, weil die Fahrgeschwindigkeiten sowie Beschleunigungswerte der Fahr- und Hubeinheiten auf ein zulässiges Maximum ausgelegt werden. Erfindungsgemäß werden die durch das Beschleunigen und Verzögern der Fahr- und Hubeinheit angeregten dynamischen Verformungen, insbesondere Schwingungen, des Mastes bereits während der Fahrt zwischen Start- und Zielposition durch Regelung der Fahr- und Hubeinheit entlang deren optimierten Solltrajektorien Schwingungen begrenzt vorgegeben bzw. unterdrückt, sodass in der Zielposition der Hubeinheit zeitintensive Abklingzeiten der Schwingungen nicht mehr abgewartet werden müssen. Daraus resultieren zwei wesentliche Vorteile. Einerseits wird eine erhebliche Verringerung der Spielzeit für den Positioniervorgang der Hubeinheit beispielsweise gegenüber einem Regalfach und den Ein- oder Auslagervorgang eines Ladegutes in ein bzw. aus einem Regalfach erreicht, andererseits werden die dynamischen Verformungen bzw. wechselnde Beanspruchung an einem Mastes der Lasttragvorrichtung deutlich reduziert. Dies kommt auch dem Bestreben nach Leichtbau entgegen. Dabei ergibt sich der Vorteil, dass in der Beschleunigungs- und Verzögerungsphase geringere Massen zu beschleunigen bzw. abzubremsen sind. Dies führt zu einer Verringerung der erforderlichen Antriebsleistung und einer höheren Positioniergenauigkeit der Hubeinheit gegenüber beispielsweise einem Regalfach. Dazu kommt, dass die Standzeit bzw. Verfügbarkeit der Lasttragvorrichtung angehoben werden kann. Zudem zeichnet sich die Vorsteuerung durch ihren einfachen Aufbau aus und wirkt diese in Kombination mit einem Regler gezielt auf die Positionierung der Fahr- und Hubeinheit ein. Ein nach dem Stand der Technik neben dem Positionsregler zusätzlich eingesetzter Schwingungsdämpfungsregler kann gemäß der Erfindung vollständig entfallen. Diese Schwingungsdämpfungsregler sind in einen Regelkreis eingebunden und erhält von einem die Schwingungen erfassenden, zusätzlichen Messwertaufnehmer eine Regelgröße, aus der eine Dämpfungskraft abgeleiteten wird, die eine vom Positionsregler vorgegebene Sollstellkraft für den Fahr- und Hubantrieb korrigiert. Gemäß der Erfindung können diese zeitintensiven Rechen- und Regelschritten vermieden werden. Es genügt eine Positionsregelungseinrichtung, wodurch der schaltungstechnische Aufwand reduziert und die Kosten gesenkt werden.

Vorteilhafte Maßnahmen sind auch in den Ansprüchen 2 und 13 beschrieben, da das dynamische Systemverhalten der Lasttragvorrichtung als auch der Ein- und Auslagervorrichtung mittels der Systemgrößen genauer beschrieben werden kann und die Vorsteuerung eine noch bessere Auswertung des Systemverhaltens liefert.

Von Vorteil sind auch die Maßnahmen nach den Ansprüchen 3 und 14, da nach dem Prinzip der flachheitsbasierten Steuerung ein Steueralgorithmus gefunden werden kann, ohne ein Differentialgleichungssystem lösen zu müssen. Dadurch kann der Rechneraufwand in Grenzen gehalten sowie die Rechenzeit verringert werden. Somit ist eine besonders rasche Berechnung der Solltrajektorien für die Systemgrößen auch im Betrieb der Lasttragvorrichtung und Ein- und Auslagervorrichtung "online" möglich.

Die Maßnahmen nach den Ansprüchen 4, 5, 15 und 16 sind von Vorteil, wodurch die im mathematischen Modell nicht berücksichtigten Störeinflüsse, wie beispielsweise Temperaturschwankung am Aufstellungsort der Lasttragvorrichtung, Reibungsverluste im Antriebssystem, instabiles Ladegut und dgl., die zu Abweichungen der auf die Fahr- und Hubeinheit bzw. die Ein- und Auslagervorrichtung einwirkenden, tatsächlichen Stellkräfte und festgelegten Sollstellkräfte führen können, wirkungsvoll korrigiert und der zeitliche Verlauf der tatsächlichen Stellkräfte an den zeitlichen Verlauf der Solltrajektorie der Sollstellkräfte angepasst werden. Mit diesem Anpassungsvorgang werden gleichzeitig die während der Betriebsfahrt der Lasttragvorrichtung bzw. der Verstellung der Ein- und Auslagervorrichtung durch die Störeinflüsse angeregten Schwingungen wirkungsvoll beseitigt. Als Regler wird beispielsweise ein PD-Regler oder eine "flachheitsbasierte Regelung" eingesetzt, mit dem oder die eine hervorragende Dämpfung der Schwingungen erreicht wird. Da nun auch die gegebenenfalls durch die Störeinflüsse angeregten Schwingungen eliminiert werden, wird auch die Dauerbelastung des spannungskritischen Mastfußes stark minimiert. Die Istwerte der tatsächlichen Stellkräfte werden beispielsweise aus dem ausgeübten Drehmoment oder dem aufgenommenen Motorstrom der Antriebsmotoren der Fahr- und Hubeinheit bzw. Ein- und Auslagervorrichtung erfasst und ausgewertet.

Von Vorteil sind auch die Maßnahmen nach den Ansprüchen 6 und 17, da nun die mechanischen und dynamischen Verformungen des Mastes und Belastungen der Antriebe der Fahr- und Hubeinheit bzw. Ein- und Auslagervorrichtung miterfasst werden können. Wird beispielsweise je ein Messwertaufnehmer, wie ein Dehnmessstreifen (DMS), am Mastfuß an den winkelig versetzten Seitenwänden befestigt, kann über diesen eine Messung des Mastfußbiegemomentes in Fahrtrichtung und senkrecht zur Fahrtrichtung der Lasttragvorrichtung erfolgen und daraus auf die Mastschwingungen zurückgeschlossen werden. Da nun bereits niedrigste Abweichungen der Mast-Sollbiegung von der Mast-Istbiegung bzw. Mastauslenkungen in Fahrtrichtung (x-Richtung) und senkrecht zur Fahrtrichtung (z-Richtung) der Lasttragvorrichtung über Messwertaufnehmer erfasst werden, können diese durch Regelung der Fahr- und Hubeinheit sowie Ein- und Auslagervorrichtung bzw. deren Antriebe und den laufenden Stelleingriff zu einem Zeitpunkt korrigiert werden, wenn ihre Abweichung bzw. Amplitude noch sehr gering ist. Auf diese Weise wird eine weitere Stabilisierung der Solltraj ektorie erreicht und die oben genannten Abweichungen der tatsächlichen Stellkräfte von den festgelegten Sollstellkräften der Fahr- und Hubeinheit sowie Ein- und Auslagervorrichtung in Grenzen gehalten. Dadurch wird eine noch bessere Schonung der mechanischen Komponenten als auch der Antriebe der Fahr- und Hubeinheit der Lasttragvorrichtung sowie der Ein- und Auslagervorrichtung erreicht.

Gemäß den Ansprüchen 7 und 18 liegt ein linearisierender Ausgang vor. Wesentlich ist dabei, dass Schwankungen der Istverläufe der Referenztrajektorien von den Sollverläufen der Referenztrajektorien für die Fahr- und Hubeinheit oder Ein- und Auslagervorrichtung korrigiert werden und sich somit eine stabilere Regelungsstruktur ergibt. Neigt der Ausgang durch Störeinflüsse zu diesen Schwankungen, kann dieser einfach über konventionelle lineare Regler stabilisiert werden.

Die Maßnahmen nach den Ansprüchen 8 und 19 sind von Vorteil, da nun beispielsweise für unterschiedliche Einsatzbedingungen der Lasttragvorrichtung unterschiedliche, auf mechanische und/oder dynamische Belastungen optimierte Referenztrajektorien geplant werden und die jeweils am Besten geeignete Referenztrajektorie zur Steuerung des Betriebes der Lasttragvorrichtung bzw. Ein- und Auslagervorrichtung verwendet wird. Beispielsweise können für auf unterschiedliche Umgebungsbedingungen optimierte Referenztrajektorien im Speicher hinterlegt werden, sodass standardmäßig aufgebaute Vorsteuerungen einer Type Lasttragvorrichtung verwendet werden können, ohne auf die genauen Einsatzbedingungen abgestimmte, unterschiedliche Vorsteuerungen Rücksicht nehmen zu müssen, sodass die Typenvielfalt von unterschiedlichen Vorsteuerungen drastisch reduziert wird. Dies hat den Vorteil, dass in der Herstellung der Lasttragvorrichtungen eine Verwechslungsgefahr zwischen unterschiedlichen Vorsteuerungen für unterschiedliche Einsatzgebiete ausgeschlossen wird. Erst in der Inbetriebnahme der Lasttragvorrichtung, wird über ein Mittel (Eingabevorrichtung), beispielsweise einem Rechner oder dem Lagerverwaltungssystem, die für das entsprechende Einsatzgebiet am Besten geeignete Referenztrajektorie aktiviert und die anderen Referenztrajektorien deaktiviert bzw. eingefroren und nur die aktiv geschaltete Referenztrajektorie für den Betrieb der Lasttragvorrichtung zur Berechnung der Solltrajektorien herangezogen.

Vorteilhafte Maßnahmen sind auch in den Ansprüchen 9 und 20 beschrieben, wonach für unterschiedliche Typen von Lasttragvorrichtungen, beispielsweise mit unterschiedlicher(n) Masthöhe oder Antrieben für die Fahr- und Hubeinheit, oder Ein- und Auslagervorrichtungen mit unterschiedlichen Gewichten, Anzahl der Masten und dgl., nicht eigens unterschiedliche Referenztrajektorien geplant werden müssen, sondern eine einzige Referenztrajektorie jeweils für die Fahr- und Hubeinheit oder Ein- und Auslagervorrichtung festgelegt wird, die mit Korrekturfaktoren beaufschlagt werden und dementsprechend für jede Type von Lasttragvorrichtung oder Ein- und Auslagervorrichtung wiederum optimierte Solltrajektorien ermittelt werden können. Dies hat den Vorteil, dass die Zahl der abzuspeichernden Referenztrajektorien vermindert und somit der für die Hinterlegung der Referenztrajektorien erforderliche Speicherplatz reduziert wird. Die jeder der unterschiedlichen Typen Lasttragvorrichtungen oder Ein- und Auslagervorrichtungen zugewiesenen Korrekturfaktoren werden über geeignete Mittel (Eingabevorrichtung) von einem Bediener aus einer Liste auszuwählender Korrekturfaktoren in die Vorsteuerung eingegeben, beispielsweise über das Lagerverwaltungssystem oder einen zusätzlichen Rechner, und werden durch Berechnung oder experimentell bestimmt. Beispielsweise können die Solltrajektorien für die Fahr- und Hubeinheit oder Ein- und Auslagervorrichtung jeweils mit Korrekturfaktoren entsprechend der Type Lasttragvorrichtung oder Ein- und Auslagervorrichtung beaufschlagt werden.

Auch die Maßnahmen der Ansprüche 10 und 21 sind von Vorteil, da stets für die Fahrt der Lasttragvorrichtung oder Verstellung der Ein- und Auslagervorrichtung zwischen einer Start- und Zielposition, die optimierten Solltrajektorien berechnet werden und somit garantiert ist, dass die Fahr- und Hubeinheit oder die Ein- und Auslagervorrichtung unter Berücksichtigung derer mechanischen und dynamischen Grenzwerte mit maximal möglicher Geschwindigkeit bzw. Beschleunigung verfahren werden.

Die Aufgabe der Erfindung wird aber auch durch die im Anspruch 12, 22 und 23 beschriebenen Maßnahmen und Merkmale gelöst. Von Vorteil ist, dass eine Überschreitung der Grenzwerte mechanischer als auch elektrischer Komponenten, wie Biegespannung im Mastfußbereich, ungleichmäßige Belastung der Höhen- und Seitenführungsrollen der Lasttragvorrichtung, Überbelastung des elektrischen Antriebes der Ein- und Auslagervorrichtung zuverlässig vermieden wird, weil die Verstell geschwindigkeiten sowie Beschleunigungswerte der Ein-und Auslagervorrichtung auf ein zulässiges Maximum ausgelegt werden. Erfindungsgemäß werden die durch das Beschleunigen und Verzögern der Ein- und Auslagervorrichtung angeregten dynamischen Verformungen des Mastes sowie der Ein- und Auslagervorrichtung bereits während der Verstellung zwischen Start- und Zielposition durch Regelung des Stellantriebes für die Ein- und Auslagervorrichtung entlang optimierter Solltrajektorien begrenzt vorgegeben bzw. unterdrückt, sodass in der Zielposition der Ein- und Auslagervorrichtung zeitintensive Abklingzeiten der Schwingungen des Mastes in z-Richtung nicht mehr abgewartet werden müssen. Demnach ist die dynamische Verformung in der Zielposition bereits auf Null reduziert. Daraus resultieren wesentliche Vorteile, wie etwa die reduzierte Beanspruchung der lasttragenden, unteren Fahreinheit der Lasttragvorrichtung, die Minimierung der Spielzeiten für die Ein- und Auslagerung von Ladegütern, eine Optimierung der Gassenbreite sowie eine Reduzierung des Ein- und Ausfahrweges der Ein- und Auslagervorrichtung in z-Richtung. Dazu kommt, dass das für das zuverlässige Aufnehmen wenigstens eines Ladegutes an der Ein- und Auslagervorrichtung erforderliche Überfahrmaß an der von einer Gasse entfernten Seitenwand des Ladegutes minimiert, die Ein- und Auslagerwege der Ein-und Auslagervorrichtung verkürzt und die Spielzeit für den Ein- und Auslagervorgang weiters reduziert werden. Darüber hinaus kann der Ein- und Auslagervorgang mit hoher Zuverlässigkeit und ohne Gefahr von möglichen Kollisionen oder unerwünschten Verkantungen des Ladegutes mit der Ein- und Auslagervorrichtung erfolgen.

Schließlich ist auch die Ausgestaltung nach Anspruch 24 von Vorteil, da nun die aus den Solltrajektorien ermittelten Sollstellkräfte im wesentlichen ohne längere Übertragungszeiten in Kauf nehmen zu müssen, den Stellgliedern aufgeprägt werden, wodurch ein Stelleinriff sofort Auswirkung auf das dynamische Verhalten der Lasttragvorrichtung zeigt.

Die Erfindung wird im Nachfolgenden anhand der in den Zeichnungen dargestellten Ausführungsbeispiele näher erläutert.

Es zeigen:

- Fig. 1 eine schematische Darstellung eines Regallagersystems mit einem der in Voransicht dargestellten Regallager und einer Lasttragvorrichtung;
- Fig. 2 eine erste Ausführung einer erfindungsgemäßen Positionsregelungseinrichtung für die Lasttragvorrichtung nach Fig. 1, dargestellt als Blockschaltbild;
- Fig. 3 ein Diagramm des zeitlichen Verlaufs des ersten, flachen Ausgangs als Referenztrajektorie einer Fahreinheit der Lasttragvorrichtung;
- Fig. 4 ein Diagramm des zeitlichen Verlaufs des zweiten, flachen Ausgangs als Referenztrajektorie einer Hubeinheit der Lasttragvorrichtung;
- Fig. 5 bis 8 Diagramme zu den zeitlichen Verläufen der Systemgrößen, wie Sollstellkräfte und Sollpositionen als Solltrajektorien, abgeleitet aus den zeitlichen Verläufen der flachen Ausgänge der Fahr- und Hubeinheit;
- Fig. 9 Verläufe der Durchbiegung der Mastspitze in x-Richtung zum Vergleich der Steuerung der Lasttragvorrichtung mit einer flachheitsbasierten Steuerung in voller Linie und einer herkömmlichen Steuerung der Lasttragvorrichtung in strichlierter Linie;
- Fig. 10 Verläufe des Biegemomentes am Mastfuß in x-Richtung zum Vergleich der Steuerung der Lasttragvorrichtung mit einer flachheitsbasierten Steuerung in voller Linie und einer herkömmlichen Steuerung der Lasttragvorrichtung in strichlierter Linie;
- Fig. 11 ein Blockschaltbild einer weiteren Ausführung einer erfindungsgemäßen Positionsregelungseinrichtung.
- Fig. 12 das Regellagersystem nach Fig. 1 mit der Lasttragvorrichtung und der an ihr angeordneten Ein- und Auslagervorrichtung in unterschiedlichen Arbeitsstellungen, in Stirnansicht und schematischer Darstellung;
- Fig. 13 eine Positionsregelungseinrichtung für die Ein- und Auslagerungsvorrichtung nach Fig. 12, dargestellt als Blockschaltbild;
- Fig. 14 ein Diagramm des zeitlichen Verlaufs des ersten flachen Ausgangs als Referenztrajektorie der Ein- und Auslagerungsvorrichtung;
- Fig. 15 ein Diagramm des zeitlichen Verlaufs des zweiten, flachen Ausgangs als Referenztrajektorie der Hubeinheit der Lasttragvorrichtung;

Fig. 16 bis 19 Diagramme zu den zeitlichen Verläufen der Systemgrößen, wie Sollstellkräfte und Sollpositionen als Solltrajektorien, abgeleitet aus den zeitlichen Verläufen der flachen Ausgänge der Ein- und Auslagervorrichtung sowie der Hubeinheit, wobei die Hubeinheit vor einem Regalfach etwa auf halber Masthöhe in die Zielposition verstellt ist und in dieser während dem Einoder Auslagervorgang des Ladegutes verharrt;

Fig. 20 Verläufe der Durchbiegung des Mastes etwa auf halber Masthöhe in zRichtung zum Vergleich der Steuerung der Lasttragvorrichtung mit einer flachheitsbasierten Steuerung in voller Linie und einer herkömmlichen Steuerung der Lasttragvorrichtung in strichlierter Linie;

Fig. 21 ein Blockschaltbild einer Positionsregelungseinrichtung für die Lasttragvorrichtung und deren Ein- und Auslagervorrichtung;

Fig. 22 ein Blockschaltbild einer weiteren Ausführung einer Positionsregelungseinrichtung mit einer flachheitsbasierten Regelung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

In Fig. 1 ist ein Regallagersystem schematisch dargestellt, das eine beispielhaft dargestellte und entlang einer Führungsbahn 1 verfahrbare Lasttragvorrichtung 2 sowie zu beiden Seiten der Führungsbahn 1 angeordnete Regallager 3 umfasst. Die Lasttragvorrichtung 2 ist nach diesem Ausführungsbeispiel durch ein Regalförderfahrzeug, insbesondere ein Regalbediengerät gebildet. Dieses Regalbediengerät weist einen an einer unteren Fahreinheit 4 über Konsolen 5 biegesteif befestigten, lotrechten Mast 6 und eine entlang diesem mittels Hubantrieb 7 vertikal verstellbare Hubeinheit 8 sowie eine auf dieser angeordnete Ein- und Auslagervorrichtung 9 zum Ein- und Auslagern von Ladegütem 10 in ein bzw. aus einem Regalfach 11 der Regallager 3 auf. Die Hubeinheit 8 ist mit einer nur schematisch dargestellten Führungsvorrichtung 12 und der Mast 6 mit einer nur schematisch dargestellten Führungsbahn 13 versehen, sodass die Hubeinheit 8 über die Führungsvorrichtung 12 an der Führungsbahn 13 am Mast 6 verschiebbar gelagert ist.

Die untere Fahreinheit 4 ist über an dieser drehbar gelagerte Höhen- und Seitenführungsrollen 14, 15 an der unteren Führungsbahn 1 gelagert und durch Antrieb zumindest einer der Höhenführungsrollen 14 entlang der Führungsbahn 1 in Gassenrichtung gemäß eingetragenen Doppelpfeil (x-Richtung) verfahrbar. Die Führungsbahn 1 verläuft entlang der zwischen den Regallagern 4 ausgebildeten Gasse und ist über Befestigungsklemmen 16 am Boden einer Halle montiert. Vorzugsweise ist die Führungsbahn 1 flanschförmig nach der Art einer I-Schiene ausgebildet.

Auf einem senkrechten Steg der Führungsbahn 1 liegen die paarweise angeordneten Seitenführungsrollen 15 abrollbar an und auf einem vom Boden abgewandten, horizontal verlaufenden Obergurt stützen sich die Höhenführungsrollen 14 ab. Die Höhen- und Seitenführungsrollen 14, 15 sind in Längsrichtung der Fahreinheit 4 zueinander beabstandet und zu beiden Seiten des Mastes 6 in Fahrtrichtung des Regalbediengerätes - gemäß Doppelpfeil - hintereinander angeordnet. Die angetriebene Höhenführungsrolle 14 ist an einen Fahrantrieb 17 gekoppelt und direkt von diesem angetrieben.

Andererseits ist es aber auch möglich, dass das Regalförderfahrzeug mit seinen Höhenführungsrollen 14 unmittelbar am die Führungsbahn 1 bildenden Boden einer Halle abgestützt ist.

Der Mastkopf ist mit einer Konsole versehen, die gleichzeitig eine obere Fahreinheit 20 bzw. ein Fahrwerk bildet, an der paarweise angeordnete Seitenführungsrollen 31 frei drehbar gelagert sind. Diese liegen an senkrechten Stegen einer oberen Führungsbahn 32 abrollbar an. Die Führungsbahn 32 ist durch eine Führungsschiene mit beispielsweise profilartigen Querschnitt gebildet und beispielsweise zwischen den Regallagern 3 an mit diesen verbundenen Quertraversen oder an einer Decke einer Halle befestigt. Die obere Fahreinheit 20 dient nach dieser Ausführung ausschließlich der Seitenführung des Mastkopfes der Lasttragvorrichtung 2 entlang der Führungsbahn 32.

Wie in Fig. 1 weiters eingetragen, ist die Hubeinheit 8 über zumindest ein Antriebsorgan 18, insbesondere ein Zugmittel, mit dem Hubantrieb 7 gekoppelt und ist um ein im Bereich des Mastfußes an der Konsole 5 gelagertes Antriebsrad 19 und ein im Bereich des Mastkopfes an der Konsole drehbar gelagertes Umlenkrad 21 geführt sowie mit dessen beiden freien Enden mit der Hubeinheit 8 fest verbunden. Das Antriebsrad 19 ist an den Hubantrieb 7 gekoppelt und unmittelbar durch diesen angetrieben. Das bandartige Zugmittel ist beispielsweise durch eine Kette, Zahnriemen und dgl. gebildet. Zweckmäßig wird das Zugmittel durch einen Zahnriemen gebildet, der mit dem Antriebsrad 19 formschlüssig in Eingriff steht und im Wesentlichen schlupffrei eine Hubbewegung auf die Hubeinheit 8 überträgt und die Hubeinheit 8 gemäß eingetragenen Doppelpfeil (y-Richtung) verstellt.

Der Hub- und Fahrantrieb 7, 17 sind jeweils durch einen Elektromotor, wie beispielsweise Asynchronmotor, Servomotor oder Schrittschaltmotor gebildet.

Zur Positionierung des Regalbediengerätes bzw. der Fahr- und Hubeinheit 4, 8 beispielsweise gegenüber ein Regalfach 11, ist eine Positionsregelungseinrichtung 22 vorgesehen, die ein Wegmesssystem 23 als Istwertgeber für die Fahreinheit 4, ein Wegmesssystem 24 als Istwertgeber für die Hubeinheit 8, eine noch näher zu beschreibende flachheitsbasierte Vorsteuerung 25 sowie nach einer ersten Ausführung einen ersten Positionsregler 26 für die Fahreinheit 4 und einen zweiten Positionsregler 27 für die Hubeinheit 8 umfasst. Das Wegmesssystem 23 ist beispielsweise durch einen Abstandssensor bzw. Laser- oder Infrarotmesssystem gebildet, während das Wegmesssystem 24 beispielsweise durch einen mit dem Hubantrieb 7 gekoppelten Dreh- bzw. Inkrementalgeber gebildet ist. Mittels der Wegmesssysteme 23 wird jeweils die aktuelle Position der Fahr- und Hubeinheit 4, 8 als Istwert bzw. Istposition erfasst und im Stillstand des Regalbediengerätes als Startposition definiert. Hingegen wird eine Endposition bzw. Zielposition der Fahr- und Hubeinheit 4, 8 durch das Lagerverwaltungssystem, insbesondere von einem übergeordneten Leitrechner vorgegeben, die mittels der noch näher zu beschreibenden "Flachheitsbasierten Steuerung", daher Vorgabe von Referenztrajektorien für die Fahr- und Hubeinheit 4, 8 anfahrbar ist. Die Zielposition entspricht beispielsweise einem Regalfach 11, in das bzw. aus dem ein Ladegut 10 eingelagert bzw. ausgelagert werden soll.

Die Positionsregelungseinrichtung 22 und Leistungselektronik (nicht gezeigt) für den Hub- und Fahrantrieb 7, 17 sind in einem Schaltschrank 28 angeordnet, der an der Lasttragvorrichtung 2 befestigt ist.

Die Hub- und Fahrantrieb 7, 17 werden jeweils von einem schematisch eingetragenen Stellglied 29, 30 angesteuert bzw. mit Spannung zur Steuerung der Motordrehzahl und deren Fahrgeschwindigkeit versorgt. Die Stellglieder 29, 30 sind beispielsweise durch einen Frequenzumrichter, Servoantriebsverstärker, Schrittschaltantriebsverstärker, Stromrichter und dgl. gebildet und Bestandteil der Positionsregelungseinrichtung 22 sowie mit dieser schaltungstechnisch verbunden. Ein zusätzlicher Regler zur Dämpfung von Schwingungen, die durch Störeinflüsse im Betrieb des Regalbediengerätes angeregt werden können, kann durch Einsatz des erfindungsgemäßen Verfahrens, wie dieses später noch näher beschrieben wird, entfallen. Dadurch vereinfacht sich der Aufbau der Positionsregelungseinrichtung 22 wesentlich.

Fig. 2 zeigt das Strukturbild der Positionsregelungseinrichtung 22 des Regalbediengerätes gemäß Fig. 1. Die Positionsregelungseinrichtung 22 umfasst die Vorsteuerung 25, die ihrerseits durch zumindest einen Speicher 35 und zumindest einen Rechnerbaustein 36, insbesondere Mikroprozessor, mit einem Logiksystem 37, insbesondere eine Programmlogik, Steuereingängen 38 und Steuerausgängen 39 umfasst. Der Speicher 35 ist schaltungstechnisch mit dem Mikroprozessor verbunden, sodass dessen Speicherinhalt an den Mikroprozessor geliefert werden kann. Genauso gut kann auch der Speicher 35 im Rechnerbaustein 36 integriert sein. Die Steuereingänge 38 sind mit dem Lagerverwaltungssystem (nicht dargestellt), beispielsweise einem Leitrechner, verbunden, wovon einer mit der von der Fahreinheit 4 anzufahrenden Zielposition $x_{end}$ und der andere mit der von der Hubeinheit 8 anzufahrenden Zielposition $y_{end}$ beaufschlagt werden.

In den Zielpositionen des Hub- und Fahrantriebes 7, 17 ist die Hubeinheit 8 bzw. die Ein-und Auslagervorrichtung 9 so vor einem Regalfach 11 des Regallagers 4 positioniert, dass ein an der Hubeinheit 8 befindliches Ladegut 10 in das Regalfach 11 eingelagert oder ein im Regälfach 11 befindliches Ladegut 10 auf die Hubeinheit 8 ausgelagert werden kann.

Im Speicher 35 sind auf eine Type von Regalbediengerät abgestimmte Referenztrajektorien als mathematische Funktion, wie im späteren noch genauer beschrieben wird, abrufbar hinterlegt, wovon eine für das System Fahreinheit 4 und die andere für das System Hubeinheit 8 bestimmt ist. Zusätzlich können im Speicher 35 mechanische und/oder dynamische Grenzwerte bzw. Parameter des Regalbediengerätes hinterlegt werden, beispielsweise das maximal zulässige Mastfußbiegemoment bzw. Mastfußspannung, die maximal zulässige Gewichtskraft vom Ladegut 10 an der Hubeinheit 8, die maximale Amplitude der Schwingungsauslenkung der Mastspitze in x-Richtung, die maximale Stellkraft bzw. Antriebskraft an der Fahreinheit 4 und dgl.

Die Referenztrajektorien beschreiben einen optimalen, zeitlichen Verlauf des Systemverhaltens vom Regalbediengerät, das auf der Grundlage mathematischer Gleichungssysteme berechnet wird. Das Systemverhalten ist durch die maximal zulässigen mechanischen und dynamischen Belastungen/Grenzwerte des Regalbediengerätes sowie zeitminimierte Bewegung der Fahr- und Hubeinheit 4, 8 von einer Startposition zu einer Zielposition definiert und ist in einem mathematischen Modell zur Bestimmung der Referenztrajektorien beschrieben. Über eine Leitung werden die Referenztrajektorien aus dem Speicher 35 an den Rechnerbaustein 36 angelegt.

Dem Rechnerbaustein 36 der Vorsteuerung 25 werden also die vom Lagerverwaltungssystem vorgegebenen Zielpositionen $x_{end}$, $y_{end}$ an den Steuereingängen 38 zugeführt und von diesem, basierend auf die aus dem Speicher 35 ausgelesenen Referenztrajektorien (siehe Fig. 3 und 4), den Ist- bzw. Startpositionen $x_{Ist}$, $y_{Ist}$ und den Zielpositionen $x_{end}$, $y_{end}$ die Solltrajektorien für die Systemgrößen zumindest der Sollstellkräfte $F_{xsoll}$, $F_{ysoll}$ (siehe Fig. 5 und 6) und die Sollpositionen $x_{soll}$, $y_{soll}$ (siehe Fig. 7 und 8) für die Fahr- und Hubeinheiten 4, 8 bzw. deren Hub- und Fahrantriebe 7, 17 nach einem geeigneten Algorithmus berechnet, wobei die Sollstellkräfte $F_{xsoll}$, $F_{ysoll}$ und Sollpositionen $x_{soll}$, $y_{soll}$ an die Steuerausgänge 39 angelegt werden sowie in Positionsregelkreise für die Fahr- und Hubeinheiten 4, 8 einfließen.

Wie im Nachfolgenden beschrieben wird, umfassen die Positionsregelkreise die Positionsregler 26, 27, die beispielsweise durch PD-Regler gebildet sind. Das idealisierte mathematische Modell zur Berechnung der Referenztrajektorien berücksichtigt keine äußeren Störeinflüsse auf das System Regalbediengerät, wie beispielsweise Schwankungen der Umgebungstemperatur. Aus diesem Grund kann im realen Betrieb des Regalbediengerätes der zeitliche Verlauf der Systemgrößen bzw. Istwerte der Istposition (Messgröße) von der Solltrajektorie abweichen. Eine Minimierung der Abweichung der aktuellen Istwerte von der Solltrajektorie der Systemgrößen, wird mittels der Positionsregler 26, 27 erreicht. Selbstverständlich ist es möglich, die abgespeicherten Referenztrajektorien je nach vorherrschender Umgebungsbedingung anzupassen oder verschiedene Trajektorienverläufe jeweils für verschiedene Umgebungsbedingungen zu bestimmen und die jeweils am Besten geeignete Trajektorie zur Steuerung des Betriebes vom Regalbediengerät zu verwenden.

Mit den Positionsregler 26, 27 können nun auch auf einfache Weise die bei der Planung der Referenztrajektorien nicht berücksichtigten Störgrößen, wie beispielsweise die Reibung zwischen der angetriebenen Höhenführungsrolle 14 und der Fahrschiene oder die gesagten Umgebungseinflüsse am Aufstellungsort des Regallagersystem und dgl. berücksichtigt werden.

In vorteilhafter Weise müssen nur die Abweichungen, die sich durch die äußeren Störeinflüsse ergeben, durch die Positionsregler 26, 27 ausgeregelt werden, während die prinzipiellen zeitlichen Verläufe der Systemgrößen $F_{xsoll}$, $F_{ysoll}$, $x_{soll}$, $y_{soll}$ durch den jeweils berechneten Trajektorienverlauf vorgegeben werden. Aus der ersten Ableitung der Sollpositionen $x_{soll}$, $y_{soll}$ nach der Zeit erhält man die Sollgeschwindigkeiten $v_{xsoll}$, $v_{ysoll}$ für die Fahr- und Hubeinheit 4, 8 sowie deren Solltrajektorien (nicht dargestellt). Durch die Regelung der Fahr- und Hubeinheiten 4, 8 bzw. deren Fahr- und Hubantriebe 7, 17 entlang vorbestimmter Solltrajektorien kann bei der Positionierung der Hubeinheit 8 gegenüber ein Regalfach 11 in der Zielposition ein Schwingen des Mastes 6 bzw. eine Mastauslenkung weitestgehend unterdrückt werden, wie dies in Fig. 9 gezeigt ist.

Mit den Positionsreglern 26, 27 können aber nicht nur die oben genannten Abweichungen effizient ausgeregelt und die vom Lagerverwaltungssystem vorgegebenen Zielpositionen $x_{end}$, $y_{end}$ exakt angefahren werden, sondern auch die von den Störeinflüssen hervorgerufenen Abweichungen von den Solltrajektorien abgeglichen werden, da durch die Korrektur zwischen zeitlichem Verlauf der Istwerte der Systemgrößen und den vorgegebenen Solltrajektorien der Systemgrößen gleichermaßen eine Stabilisierung der Solltrajektorien erreicht wird. Durch diesen positiven Nebeneffekt kann ein zusätzlicher Dämpfungsregler, wie dieser nach dem Stand der Technik eingesetzt wird, vollständig entfallen, womit Kosten für die Positionsregelungseinrichtung und die Spielzeiten für die Positioniervorgänge der Fahr- und/oder Hubeinheit 4, 8 in der Zielposition erheblich reduziert werden können.

Wie in Fig. 2 weiters eingetragen, ist dem Positionsregler 26 für die Fahreinheit 4 und dem Positionsregler 27 für die Hubeinheit 8 jeweils ein Vergleichsglied 40, 41 vorgeschaltet, an denen eine Regelabweichung (e) zwischen gemessenen Istwerte der Systemgrößen (Isttrajektorien) und festgelegten Solltrajektorien der Systemgrößen, insbesondere der Sollposition $x_{soll}$, $y_{soll}$ und der Istposition $x_{Ist}$, $y_{Ist}$ berechnet werden. Die Positionsregler 26, 27 werden mit der Regelabweichung (e) beaufschlagt. Aus der Regelabweichung (e) wird nach einem festgelegten Regelgesetz eine Störgröße, insbesondere eine Differenzkraft $\Delta F_x$, $\Delta F_y$ berechnet, die jeweils einem den Positionsreglern 26, 27 nachgeschalteten Vergleichsglied 42, 43 zur Störgrößenaufschaltung zugeführt und an diesem den festgelegten Solltrajektorien der Systemgrößen, insbesondere den Sollstellkräften $F_{xsoll}$, $F_{ysoll}$ als Korrekturwert überlagert sowie aktuelle Stellkräfte $F_x$, $F_y$ ermittelt werden. Die Stellglieder 29, 30 der Fahr- und Hubantriebe 7, 17 werden mit den aus dem Soll-Ist-Vergleich der Solltrajektorien für die Systemgrößen, insbesondere die Sollstellkräfte $F_{xsoll}$, $F_{ysoll}$ und den Störgrößen, insbesondere den Differenzkräften $\Delta F_x$, $\Delta F_y$ errechneten, korrigierten Stellkräften $F_x$, $F_y$ beaufschlagt. Mit der Differenzkraft $\Delta F_x$, $\Delta F_y$ werden die oben beschrieben Abweichungen infolge von Störeinflüssen korrigiert bzw. ausgeglichen. Demnach entspricht die Störgröße, insbesondere die Differenzkraft $\Delta F_x$, $\Delta F_y$ einem Korrekturfaktor für die Störeinflüsse. Die aktuellen Stellkräfte $F_x$, $F_y$ werden mittels der Stellglieder 29, 30 der Fahr- und Hubantriebe 7, 17, beispielsweise dem Frequenzumrichter in eine Spannung entsprechender Frequenz umsetzt, durch die beispielsweise Asynchronmotoren auf eine der Frequenz proportionale Drehzahl beschleunigt oder abgebremst werden. Die Stellglieder 29, 30 des Hub- und Fahrantriebes 7, 17 werden mit den aktuellen Stellkräften $F_x$, $F_y$ beaufschlagt.

Im Nachfolgenden wird nun die Berechnung der Referenztrajektorien für die Betrachtung der Lasttragvorrichtung 2 nach dem Prinzip der "Flachheitsbasierten Steuerung" (flatness based control) erläutert. "Flachheitsbasierte Steuerungen" finden in den jüngsten Entwicklungen der Industrie großen Einzug. Die Differentialalgebra bildet die mathematische Grundlage der "Flachheitsbasierten Steuerung", gemäß Fliess, M. Es können alle Zustands- und Eingangsgrößen des Systems ohne Integration oder Lösung von Differentialgleichungen in Abhängigkeit zumindest eines "flachen Ausgangs" bzw. linearisierenden Systemausganges berechnet werden. Die Anzahl der flachen Ausgänge ist gleich der Anzahl der Eingangsgrößen. Gemäß dem gegenständlichen Regalbediengerät können flache Ausgänge bestimmt werden. Liegt ein "flacher Ausgang" vor, können die Zustands- und Eingangsgrößen als Funktion vom "flachen Ausgang" und dessen zeitlichen Ableitungen berechnet werden.

Sind für die Fahr- und Hubeinheit 4, 8 die linearisierende Systemausgänge gefunden, werden im ersten Schritt die zugehörigen Referenztrajektorieen entworfen und "offline" berechnet, darauf folgend die Solltrajektorien während dem Betrieb "online" berechnet und anschließend die Positionsregler 26, 27 zur Stabilisierung der Folgebewegung entlang dieser Solltrajektorie ausgelegt.

Das Systemverhalten des Regalbediengerätes im ersten Modell für die x- und y-Richtung wird durch ein partielles Differentialgleichungssystem beschrieben, das im Allgemeinen nicht mehr exakt lösbar ist. Daher bedient man sich beispielsweise dem Näherungsverfahren von Ritz. Das Ergebnis ist ein mathematisches Modell, jetzt ein gewöhnliches Differentialgleichungssystem der Form

$$M(q)\ \ddot{q} + K(q,\dot{q}) = Q$$

welches gleichzeitig Ausgangspunkt des Entwurfs der "Flachheitsbasierten Steuerung" ist. Dieser Ausdruck beschreibt die Bewegungsgleichung des Regalbediengerätes, wobei M(q) die Massenmatrix bezeichnet, der Term K $(q,\dot{q})$ fasst die restlichen Terme wie Fliehkräfte, Corioliskräfte zusammen und Q bezeichnet die verallgemeinerten Kräfte. Anhand dem Entwurfsmodell kann eine mathematische Berechnung des optimalen Verlaufs der Referenztrajektorien durchgeführt werden. Dabei ist es zudem möglich die oben angeführten mechanischen und dynamischen Grenzwerte zu berücksichtigen.

Die oben genannte Differentialgleichung kann im Zustandraum in ein System nichtlinearer Differentialgleichungen

$$\dot{\bar{x}} = f(\bar{x},\bar{u})$$

$$\bar{y} = h(\bar{x},\bar{u})$$

umgeschrieben werden.

Die Zustandsgrößen im Vektor lauten:

$$\bar{x} = \begin{pmatrix} x \\ v_x \\ q_x \\ v_{q_x} \\ y \\ v_y \end{pmatrix}$$

- $x$ Position der Fahreinheit
- $v_x$ Geschwindigkeit der Fahreinheit
- $q_x$ Mastauslenkung in x-Richtung
- $v_{qx}$ Geschwindigkeit der Mastauslenkung in x-Richtung
- $y$ Position der Hubeinheit
- $v_y$ Geschwindigkeit der Hubeinheit

Die Zustandsgrößen sind Größen mit der Eigenschaft, dass der Systemausgang $\bar{y}$ eindeutig durch den Verlauf von $\bar{u}(t)$ beginnend von einem Startpunkt $t_0$ und den Werten von $\bar{x}(t_0)$ festgelegt ist.

Die Eingangsgrößen im Vektor lauten:

$$\bar{u} = \begin{pmatrix} F_x \\ F_y \end{pmatrix}$$

$F_x$ Stellkraft auf die Fahreinheit
$F_y$ Stellkraft auf die Hubeinheit

Die Ausgangsgrößen im Vektor lauten:

$$\bar{y} = \begin{pmatrix} x \\ y \\ q_x \end{pmatrix}$$

x Position der Fahreinheit
y Position der Hubeinheit
$q_x$ Mastauslenkung in x-Richtung

Die Ausgangsgrößen ermöglichen es, das Verhalten des Systems zu beobachten. Sind sie messtechnisch erfassbar, so nennt man sie auch Messgrößen (Regelgrößen). Die Ausgangsgrößen sind jene Messgrößen, die für die Regelung notwendig sind, wie die Istwerte der x- und y-Positionen und/oder Fahrgeschwindigkeit $v_x$, $v_y$ der Fahr- und Hubeinheit 4, 8. Gemäß der Ausführung in Fig. 11 werden auch die Istwerte des dynamischen Verhaltens, wie z.B. die Solldurchbiegung $q_x$ und/oder deren Geschwindigkeit $\dot{q}_x$ erfasst.
Die Zustands- und Eingangsgrößen definieren die Systemgrößen.
Da für das mathematische Modell des Regalbediengerätes die Eigenschaft der "Flachheit" gezeigt werden kann, existieren Größen, auch flache Ausgänge genannt,

$$\xi_1(\bar{x}) \text{ und } \xi_2(\bar{x})$$

$\xi_1(\bar{x})$ erster flacher Ausgang
$\xi_2(\bar{x})$ zweiter flacher Ausgang

welche ihrerseits durch die Zustandsgrößen ausgedrückt werden, mit der Eigenschaft, dass alle Systemgrößen durch diese flachen Ausgänge und deren Zeitableitungen ausgedrückt werden können.

$$
\begin{aligned}
x &= x\left(\xi_1, \dot{\xi}_1, \ddot{\xi}_1, \ldots, \xi_1^{(\alpha_1)}, \xi_2, \dot{\xi}_2, \ddot{\xi}_2, \ldots, \xi_1^{(\alpha_2)}\right) \\
v_x &= v_x\left(\xi_1, \dot{\xi}_1, \ddot{\xi}_1, \ldots, \xi_1^{(\beta_1)}, \xi_2, \dot{\xi}_2, \ddot{\xi}_2, \ldots, \xi_1^{(\beta_2)}\right) \\
q_x &= q_x\left(\xi_1, \dot{\xi}_1, \ddot{\xi}_1, \ldots, \xi_1^{(\chi_1)}, \xi_2, \dot{\xi}_2, \ddot{\xi}_2, \ldots, \xi_1^{(\chi_2)}\right) \\
v_{q_x} &= v_{q_x}\left(\xi_1, \dot{\xi}_1, \ddot{\xi}_1, \ldots, \xi_1^{(\delta_1)}, \xi_2, \dot{\xi}_2, \ddot{\xi}_2, \ldots, \xi_1^{(\delta_2)}\right) \\
y &= y\left(\xi_1, \dot{\xi}_1, \ddot{\xi}_1, \ldots, \xi_1^{(\varepsilon_1)}, \xi_2, \dot{\xi}_2, \ddot{\xi}_2, \ldots, \xi_1^{(\varepsilon_2)}\right) \\
v_y &= v_y\left(\xi_1, \dot{\xi}_1, \ddot{\xi}_1, \ldots, \xi_1^{(\varphi_1)}, \xi_2, \dot{\xi}_2, \ddot{\xi}_2, \ldots, \xi_1^{(\varphi_2)}\right) \\
F_x &= F_x\left(\xi_1, \dot{\xi}_1, \ddot{\xi}_1, \ldots, \xi_1^{(\phi_1)}, \xi_2, \dot{\xi}_2, \ddot{\xi}_2, \ldots, \xi_1^{(\phi_2)}\right) \\
F_y &= F_y\left(\xi_1, \dot{\xi}_1, \ddot{\xi}_1, \ldots, \xi_1^{(\gamma_1)}, \xi_2, \dot{\xi}_2, \ddot{\xi}_2, \ldots, \xi_1^{(\gamma_2)}\right)
\end{aligned}
$$

Aus diesen Beziehungen werden die Solltrajektorien der Systemgrößen zur Steuerung des Regalbediengerätes durch Vorgabe des Zeitverlaufs der Größen $\xi_{1d}(t)$ und $\xi_{2d}(t)$ ermittelt, ohne ein Differentialgleichungssystem lösen zu müssen. Dies ist wichtig, da ein nichtlineares System, wie es auch das dynamische Verhalten des Regalbediengerätes beschreibt, im Allgemeinen nicht lösbar ist und daher keine andere Möglichkeit besteht, auf die Eingangsgrößen rückzurechnen.

Die Solltrajektorien der Systemgrößen ergeben sich somit zu

$$
\begin{aligned}
x_d &= x\left(\xi_{1d}, \dot{\xi}_{1d}, \ddot{\xi}_{1d}, \ldots, \xi_{1d}^{(\alpha_1)}, \xi_{2d}, \dot{\xi}_{2d}, \ddot{\xi}_{2d}, \ldots, \xi_{2d}^{(\alpha_2)}\right) \\
v_{xd} &= v_x\left(\xi_{1d}, \dot{\xi}_{1d}, \ddot{\xi}_{1d}, \ldots, \xi_{1d}^{(\beta_1)}, \xi_{2d}, \dot{\xi}_{2d}, \ddot{\xi}_{2d}, \ldots, \xi_{2d}^{(\beta_2)}\right) \\
q_{xd} &= q_x\left(\xi_{1d}, \dot{\xi}_{1d}, \ddot{\xi}_{1d}, \ldots, \xi_{1d}^{(\chi_1)}, \xi_{2d}, \dot{\xi}_{2d}, \ddot{\xi}_{2d}, \ldots, \xi_{2d}^{(\gamma_2)}\right) \\
v_{q_x d} &= v_{q_x}\left(\xi_{1d}, \dot{\xi}_{1d}, \ddot{\xi}_{1d}, \ldots, \xi_{1d}^{(\delta_1)}, \xi_{2d}, \dot{\xi}_{2d}, \ddot{\xi}_{2d}, \ldots, \xi_{2d}^{(\delta_2)}\right) \\
y_d &= y\left(\xi_{1d}, \dot{\xi}_{1d}, \ddot{\xi}_{1d}, \ldots, \xi_{1d}^{(\varepsilon_1)}, \xi_{2d}, \dot{\xi}_{2d}, \ddot{\xi}_{2d}, \ldots, \xi_{2d}^{(\varepsilon_2)}\right) \\
v_{yd} &= v_y\left(\xi_{1d}, \dot{\xi}_{1d}, \ddot{\xi}_{1d}, \ldots, \xi_{1d}^{(\varphi_1)}, \xi_{2d}, \dot{\xi}_{2d}, \ddot{\xi}_{2d}, \ldots, \xi_{2d}^{(\varphi_2)}\right) \\
F_{xd} &= F_x\left(\xi_{1d}, \dot{\xi}_{1d}, \ddot{\xi}_{1d}, \ldots, \xi_{1d}^{(\phi_1)}, \xi_{2d}, \dot{\xi}_{2d}, \ddot{\xi}_{2d}, \ldots, \xi_{2d}^{(\phi_2)}\right) \\
F_{yd} &= F_y\left(\xi_{1d}, \dot{\xi}_{1d}, \ddot{\xi}_{1d}, \ldots, \xi_{1d}^{(\gamma_1)}, \xi_{2d}, \dot{\xi}_{2d}, \ddot{\xi}_{2d}, \ldots, \xi_{2d}^{(\gamma_2)}\right)
\end{aligned}
$$

Schaltet man nun die Solltrajektorien für die Stellgrößen $F_{xd}(t)$ und $F_{yd}(t)$ auf das Regalbediengerät auf, so bewegt sich das System genau entlang dieser berechneten Systemgrößen.

Die Zeitverläufe $\xi_{1d}(t)$ und $\xi_{2d}(t)$ werden im Nachfolgenden auch als Referenztrajektorien, bezeichnet. Für die Steuerung des Regalbediengerätes ist es ausreichend, wenn die Sollstellkräfte $F_{xsoll}$, $F_{ysoll}$, die Sollpositionen $x_{soll}$, $y_{soll}$ und/oder die Sollgeschwindigkeiten $v_{xsoll}$ und $v_{ysoll}$ in die Positionsregelungseinrichtung 22 einfließen. Gemäß der Ausführung in Fig. 11 ist auch die Solldurchbiegung $q_{soll}$ und deren Geschwindigkeit $\dot{q}_x$ notwendig.

Die Referenztrajektorien werden nun unter Berücksichtigung der mechanischen und/oder dynamischen Grenzwerte des Regalbediengerätes geplant, wozu vorerst die Anfangs- und Endwerte für Start- und Zielposition der Fahr- und Hubeinheit festgelegt werden müssen. Zu berücksichtigen gilt, dass die Fahr- und Hubeinheit 4, 8 vom Regalbediengerät entlang der Solltrajektorien in endlicher Zeit von einer Ruhelage in der Startposition in eine Ruhelage in der Zielposition bewegt werden, wodurch das Regalbediengerät schwingungsfrei die Zielposition erreicht.

Daraus ergeben sich folgende Ansätze

$$
\begin{array}{ll}
x(0) = x_0 & x(T_{end}) = x_{end} \\
q_x(0) = 0 & q_x(T_{end}) = 0 \\
y(0) = y_0 & y(T_{end}) = Y_{end} \\
\dot{x}(0) = 0 & \dot{x}(T_{end}) = 0 \\
\dot{q}_x(0) = 0 & \dot{q}_x(T_{end}) = 0 \\
\dot{y}(0) = 0 & \dot{y}(T_{end}) = 0 \\
F_x(0)=0 & F_x(T_{end})=0 \\
F_y(0) = m_h g & Fy(T_{end}) = m_h g
\end{array}
$$

$m_h$ ... Masse Hubeinheit

| | |
|---|---|
| $x(0)$ bzx.$x(T_{end})$ | Start- und Zielposition der Fahreinheit |
| $y(0)$ bzx.$x(T_{end})$ | Start- und Zielposition der Hubeinheit |
| $F_x(0)$ bzx.$F_x(T_{end})$ | Stellkraft an der Fahreinheit in der Start- und Zielposition |
| $F_y(0)$ bzx.$F_y(T_{end})$ | Stellkraft an der Hubeinheit in der Start- und Zielposition |
| $q_x(0)$ bzw.$q_x(T_{end})$ | Mastauslenkung in der Start- und Zielposition in x-Richtung |
| $\dot{x}(0)$ bzw.$\dot{x}(T_{end})$ | Fahrgeschwindigkeit des Fahreinheit in der Start- und Zielposition |
| $\dot{y}(0)$ bzw.$\dot{y}(T_{end})$ | Fahrgeschwindigkeit des Hubeinheit in der Start- und Zielposition |
| $\dot{q}_x(0)$ bzw.$\dot{q}_x(T_{end})$ | Mastauslenkungsgeschwindigkeit in der Start- und Zielposition in x-Richtung |

Wie aus diesem Ansatz ersichtlich wird, werden die Referenztrajektorien so geplant, dass zum Zeitpunkt der Beendigung der Verzögerungsphase und mit Erreichen der Zielposition die Mastauslenkung $q_x$ und dessen Geschwindigkeit $\dot{q}_x$ auf Null gesetzt wird. Von Vorteil ist auch die Wahl der Stellkraft $F_x = 0$ in der Start- und Zielposition und wenn die Stellkraft $F_y$ dem statischen Wert entspricht, wodurch Kraftsprünge zu Beginn und Ende einer Betriebsfahrt vermieden werden. Damit lässt sich eine Schonung der Mechanik und der Fahr- und Hubantriebe 7, 17 erreichen.

Das Regalbediengerät, insbesondere die Fahr- und Hubeinheit 4, 8 werden auf der Fahrt zwischen der Startposition und Zielposition unter Berücksichtigung der mechanischen und dynamischen Grenzwerte, wie Antriebsmoment, Motordrehzahl, Mastauslenkung, Mastfußbiegespannung und dgl., stets mit maximaler Fahrgeschwindigkeit, Beschleunigung bzw. maximal zulässiger Stellkraft $F_x$, $F_y$ bewegt. Mit anderen Worten wird die Fahr- und Hubeinheit 4, 8 jeweils aus der Startposition mit einer durch die Grenzwerte begrenzten, maximalen Stellkraft $F_x$, $F_y$ beschleunigt und danach auf eine durch die Grenzwerte begrenzte, maximale negative Stellkraft $F_x$, $F_y$ beschleunigt bzw. verzögert. Dadurch wird das Regalbediengerät stets mit der maximal möglichen Fahrgeschwindigkeit bzw. Beschleunigung verfahren, was eine zeitminimierte Positionierung des Regalbediengerätes in der Start- und/oder Zielposition erlaubt.

Die in Fig. 3 und 4 dargestellten, geplanten Referenztrajektorien wirken sich nach dieser Ausführung auf das Regalbediengerät derart aus, dass auf die Beschleunigungsphase unmittelbar die Verzögerungsphase folgt. Dabei wird das Regalbediengerät so beschleunigt und verzögert, dass beim Übergang von der Maximalbeschleunigung in der Beschleunigungsphase auf eine negative maximale Beschleunigung in der Verzögerungsphase, der Mast 6 in x-Richtung nur eine einzige Schwingungsperiode von einer negativen Biegung auf eine positive Biegung vollzieht und mit Beendigung der Verzögerungsphase in der Zielposition das Regalbediengerät schwingungsfrei positioniert ist. Mit anderen Worten wird eine schwingungsfreie Positionierung der Hubeinheit 8 zumindest in der Zielposition erlaubt. Dies wird erreicht, indem die Mastauslenkung und deren Geschwindigkeit in der Start- und/oder Zielposition Null gesetzt und die Referenz- und Solltrajektorien so geplant und berechnet werden, dass diese Bedingung erfüllt ist. Dadurch kann in vorteilhafter Weise der Mast 6 dünnwandiger ausgestaltet oder die Masthöhe bei gleich bleibenden, günstigen dynamischen Verhalten größer dimensioniert werden.

Durch eine entsprechende Planung der Referenztrajektorien ist jede beliebige Fahrkurve möglich, wie auch beispielsweise eine Konstantfahrt zwischen der Beschleunigungs- und Verzögerungsphase bei großen Verfahrwegen in x- und/oder y-Richtung des Regalbediengerätes.

Die sich daraus ergebende positive Wirkung ist aus den Fig. 9 und 10 ersichtlich. Nach Fig. 9 ist auf der x-Achse des Diagramms die Zeit (t) in Sekunden, auf der y-Achse die Durchbiegung bzw. Mastauslenkung der Mastspitze in Millimeter aufgetragen. Die in strichlierte Linie eingetragene Kurve zeigt den zeitlichen Verlauf der Mastauslenkung einer aus dem Stand der Technik bekannten Positionsregelungseinrichtung ohne Schwingungsdämpfung. Die in voller Linie eingetragene Kurve zeigt den zeitlichen Verlauf der Mastauslenkung unter Verwendung der "Flachheitsbasierten Steuerung". Nach Fig. 10 ist auf der x-Achse des Diagramms die Zeit (t) in Sekunden, auf der y-Achse das Biegemoment am Mastfuß in kNm aufgetragen. Die in strichlierte Linie eingetragene Kurve zeigt den zeitlichen Verlauf des Biegemomentes am Mastfuß von einer aus dem Stand der Technik bekannten Positionsregelungseinrichtung ohne Schwingungsdämpfung. Die in voller Linie eingetragene Kurve zeigt den zeitlichen Verlauf des Biegemomentes am Mastfuß unter Verwendung der "Flachheitsbasierten Steuerung".

Soll nun beispielsweise die Fahreinheit 4 aus der Startposition x(0) = 0 m in die Zielposition $x(T_{end})$ = 20 m und die Hubeinheit 8 aus der Startposition y(0) = 0,5 m in die Zielposition $y(T_{end})$ = 15,5 m mit einer maximalen Beschleunigung bzw. Geschwindigkeit bewegt werden, ergibt sich der in den Fig. 9 und 10 dargestellte, zeitliche Verlauf der Durchbiegung bzw. Mastauslenkung der Mastspitze und des Biegemomentes am Mastfuß. Die Fahrzeit zwischen Start- und Zielposition entspricht $T_{end}$ und ist beispielsweise mit 8,2 sec so gewählt, dass die Grenzwerte eingehalten bzw. geringfügig unterschritten sind.

In Fig. 11 ist ein Blockschaltbild einer modifizierten Positionsregelungseinrichtung 22 für die Lasttragvorrichtung 2 gemäß Fig. 1 dargestellt. Diese umfasst wiederum die oben beschriebene Vorsteuerung 25 und im Unterschied zur Ausführung in Fig. 2 ausschließlich einen Regler 44, der von Seiten der Vorsteuerung 25 die Solltrajektorien für die Systemgrößen bzw. den diese bildenden zeitlichen Verlauf der Sollpositionen der Fahr- und Hubeinheit 4, 8 als auch der dynamischen Verformungen der Lasttragvorrichtung 2 erhält. An den Steuerausgängen 39 werden wiederum die Sollstellkräfte $F_{xsoll}$, $F_{ysoll}$, Sollpositionen $x_{soll}$, $y_{soll}$ als auch die Soll-Mastdurchbiegung $q_{xsoll}$ angelegt sowie dem Positionsregel für die Fahr- und Hubeinheit 4, 8 aufgeprägt. Die dynamischen Verformungen werden wiederum auf die oben beschriebene Weise nach dem mathematischen Modell der "Flachheitsbasierten Steuerung" berechnet, wonach aus den das Systemverhalten der Lasttragvorrichtung 2 beschreibenden Referenztrajektorien der zeitliche Verlauf der dynamischen Verformungen als Solltrajektorie berechnet und dem Regler 44 zugeführt wird. Nach dieser Ausführung wird die Solltrajektorie für die dynamischen Verformungen der Lasttragvorrichtung 2, insbesondere die Solldurchbiegung $q_{xsoll}$ des Mastes 6 ermittelt.

Wie in Fig. 1 in strichpunktierte Linien eingetragen, ist am Mast 6, beispielsweise im Bereich des Mastfußes an einer in Fahrtrichtung (x-Richtung) des Regalbediengerätes vorderen oder hinteren Mastwand ein Messwertaufnehmer 45 als Istwertgeber zur laufenden Erfassung des Mastbiegemomentes angeordnet. Der Messwertaufnehmer 45 ist beispielsweise durch einen Dehnmessstreifen oder piezoresistiven Sensor gebildet und schaltungstechnisch mit der Positionsregelungseinrichtung 22 verbunden. Aus den erfassten Istwerten des Mastbiegemomentes kann die Geschwindigkeit des Mastbiegemomentes $q_x$ errechnet und daraus auf die Mastschwingungen bzw. auf den zeitlichen Verlauf der Durchbiegung des Mastes 6 geschlossen werden. Der zeitliche Verlauf der Istwerte der Systemgrößen und die vorgegebenen Solltrajektorien der Systemgrößen bzw. die Soll- und Istwerte der Durchbiegung $q_{xsoll}$, $q_{xIst}$ des Mastes 6 werden wiederum an einem nicht dargestellten Vergleichsglied zusammengeführt und mittels diesem eine Regelabweichung berechnet, mit der der Regler 44 beaufschlagt wird. Vom Regler 44 wird nun aus der Regelabweichung zwischen der Sollposition $x_{soll}$, $y_{soll}$ und der Istposition $x_{Ist}$, $y_{Ist}$ sowie der Regelabweichung zwischen der Soll-Durchbiegung und Ist-Durchbiegung $q_{xsoll}$, $q_{xIst}$ des Mastes 6 nach einem festgelegten Regelgesetz wiederum die Störgröße, insbesondere die Differenzkraft $\Delta F_x$, $\Delta F_y$ berechnet, die jeweils einem den Regler 44 nachgeschalteten Vergleichsglied 42, 43 zugeführt, mit den Sollstellkräften $F_{xsoll}$, $F_{ysoll}$ verglichen und den Sollstellkräften $F_{xsoll}$, $F_{ysoll}$ aufgeschaltet sowie aktuelle Stellkräfte $F_x$, $F_y$ ermittelt werden. Diese Ausführung hat den Vorteil, dass auch Positionsabweichungen der Hubeinheit 8 in der Start- oder Zielposition aufgrund von belastungsbedingten Durchbiegungen gegenüber die durch die Wegmesssysteme 23, 24 ermittelten Istpositionen automatisch korrigiert werden können.

In der Fig. 12 ist das Regallagersystem nach Fig. 1 mit der entlang der Fahrschienen in der Gasse (x-Richtung) verfahrbaren Lasttragvorrichtung 2 und die zu beiden Seite der Gasse im Abstand voneinander angeordneten Regallager 3 in Stirnansicht gezeigt. Die Lasttragvorrichtung 2 umfasst die oben beschriebene, vertikal in y-Richtung verstellbare Hubeinheit 8 und die auf ihr angeordnete Ein- und Auslagervorrichtung 9. Im gezeigten Ausführungsbeispiel ist die Ein- und Auslagervorrichtung 9 durch zwei in z-Richtung - gemäß eingetragenem Doppelpfeil- synchron ausfahrbare Teleskoparme 46 gebildet. Die z-Richtung verläuft senkrecht zur Längserstreckung der Gasse bzw. x-Richtung. Die Teleskoparme 46 umfassen beispielsweise jeweils zwei an der Hubeinheit 8 gelagerte Tragrahmen 47, zumindest einen Mittelschlitten 48, zumindest einen Oberschlitten 49 und zumindest ein bevorzugt am Mittelschlitten 48 angeordnetes Antriebsmittel 50, beispielsweise eine nicht näher dargestellte Zahnstange auf. Die Oberschlitten 49 sind in ihren gegenüberliegenden Stirnenden und im Mittenabschnitt mit aus einer Ruheposition in eine Arbeitposition verstellbaren Mitnahmeorganen 51a, 51b, 51c versehen. In der Ruheposition sind die Mitnahmeorganen 51a, 51b, 51c in eine innerhalb der Umrisskontur der Oberschlitten 49 angeordnete Ausnehmung verstellt und in der Arbeitposition in eine mit dem Ladegut 10 überlappende Lage verbracht, sodass das Ladegut 10 zwischen einer Plattform der Hubeinheit 8 und einem Regalfach 11 verschoben werden kann. Vorzugsweise sind die Mitnahmeorgane 51a, 51b, 51c jeweils um eine parallel zur Längserstreckung der Teleskoparme 46 verlaufende Achse zwischen der Ruhe- und Arbeitsposition verschwenkbar an den Oberschlitten 49 gelagert.

Die Mittel- und Oberschlitten 48, 49 sind zu dem Tragrahmen 47 und zueinander relativ verstellbar. Jeder Mittelschlitten 48 ist mit einem Antriebsorgan 52, beispielsweise einem endlos umlaufenden Zugmittel, wie Ketten- oder Riementrieb, antriebsverbunden, wobei ein Obertrum des endlos umlaufenden Antriebsorganes 52 und das Antriebsmittel 50 miteinander in formschlüssigem Eingriff stehen und die Teleskoparme 46 mit einer Antriebskraft beaufschlagen. Die endlos ausgebildeten Antriebsorgane 52 sind jeweils um ein Antriebsrad 53 und mehrere Abtriebsräder 54 geführt und über zumindest einen Stellantrieb 55 synchron angetrieben. Wie nicht weiters eingetragen, sind der Tragrahmen 47 und Oberschlitten 49 jedes Teleskoparmes 46 über zwei Riemen miteinander gekoppelt, wobei die Riemen jeweils um an den gegenüberliegenden Enden des Mittelschlittens 48 gelagerte Rollen umgelenkt sowie mit einem ersten freien Ende am Tragrahmen 47 und einem zweiten freien Ende am Oberschlitten 49 befestigt sind. Die beiden Antriebsräder 53 sind bevorzugt über eine nicht dargestellte Gelenkwelle mit dem gemeinsamen Stellantrieb 55 gekoppelt.

Hinsichtlich der detaillierten Ausbildung der Teleskoparme 46 der Ein- und Auslagervorrichtung 9 wird die detaillierte Offenbarung aus der US 2003/0185656 A1 zum Gegenstand dieser Offenbarung gemacht.

Der Stellantrieb 55 ist durch einen Elektromotor, wie beispielsweise Asynchronmotor, Servomotor oder Schrittschaltmotor gebildet und von einem in Fig. 1 und 13 schematisch eingetragenen Stellglied 56 angesteuert bzw. mit Spannung zur Steuerung der Motordrehzahl und deren Fahrgeschwindigkeit versorgt. Das Stellglied 56 ist beispielsweise durch einen Frequenzumrichter, Servoantriebsverstärker, Schrittschaltantriebsverstärker, Stromrichter und dgl. gebildet und Bestandteil der Positionsregelungseinrichtung sowie mit dieser schaltungstechnisch verbunden.

Die Ein- und Auslagervorrichtung 9 ist mit Hilfe der Hubeinheit 8 der Lasttragvorrichtung 2 in die x- und y-Zielposition einerseits in den Bereich eines beliebig auswählbaren Regalfaches 11 der Regallager 3 stellbar sowie andererseits an eine diesen zugeordnete, nicht dargestellte Zuführ-Förderanlage und/oder Abtransport-Förderanlage anschließbar.

Wie aus der Zusammenschau der Fig. 1 und 12 ersichtlich, sind in den Regalfächern 11 in z-Richtung (Ein- und Auslagerrichtung der Ladegüter 10) jeweils mehrere mittig zueinander ausgerichtete Ladegüter 10, beispielsweise Behälter, Karton, in einer Reihe hintereinander liegend ablegbar. Mittels der Ein- und Auslagervorrichtung 9, insbesondere den Teleskoparmen 46, sind ausgehend von der Gasse wahlweise von einem der beidseits dieser angeordneten Regallager 3 zumindest zwei Tiefenpositionen in z-Richtung anfahrbar und zwar unabhängig, ob das in vollen Linien gezeigte, der Gasse benachbarte Ladegut 10 oder das von der Gasse entfernte, in strichlierte Linien gezeigte Ladegut 10 ein- oder auszulagern ist.

Im Sinne der Erfindung ist es auch möglich, dass die Ein- und Auslagervorrichtung 9 durch einen mobilen Transportwagen gebildet ist, der mit dem Stellantrieb 55 für die von der Hubeinheit 8 losgelöste Fahrbewegung versehen ist. Ein derartiger Transportwagen ist beispielsweise in der WO 03/004385 A2 oder DE 43 30 795 A1 offenbart.

Die Anforderung an die Wirtschaftlichkeit des beschriebenen Regallagersystems erfordert die Optimierung des dynamischen Verhaltens der Lasttragvorrichtung 2. Diese Optimierung beschränkt sich nicht alleine auf die Fahrbewegungen der Lasttragvorrichtung 2 in Gassenrichtung (x-Richtung) und der Hubeinheit 8 in vertikaler Richtung (y-Richtung), sondern wird auch maßgeblich von der Verstellbewegung der Ein- und Auslagervorrichtung 9 in Ein- und Auslagerrichtung (z-Richtung) bestimmt. Auch wenn die Lasttragvorrichtung 2 über die untere und obere Fahreinheit 4, 20 an den Führungsbahnen 1, 32 seitlich geführt ist, können mit zunehmender Verstellgeschwindigkeit bzw. Beschleunigungswerten der Ein- und Auslagervorrichtung 9 in der Ein- und Ausfahrbewegung relativ zur stillstehenden Hubeinheit 8, aber auch in Abhängigkeit vom zu transportierenden Gewicht des Ladegutes 10, Schwingungen an der Lasttragvorrichtung 2, insbesondere dem Mast 6 in z-Richtung angeregt werden, die sich auch auf die Ein- und Auslagervorrichtung 9 übertragen. Die Schwingungsamplitude erreicht in der Stellung der Hubeinheit 8 etwa auf halber Masthöhe ihr Maximum und führt zu dynamischen Verformungen der Lasttragvorrichtung 2 sowie ungünstigen Belastungen der Höhen- und Seitenführungsrollen 14, 15, 31.

Um diesem Nachteil entgegenzuwirken, wird im Nachfolgenden ein Verfahren und eine Positionsregelungseinrichtung vorgeschlagen, die im Betrieb der Lasttragvorrichtung 2 eine Schwingungsanregung derselben, insbesondere des Mastes 6, unterdrücken sowie eine exakte Positionierung der Ein- und Auslagervorrichtung 9 in z-Richtung an einer Start- und Zielposition in kürzester Zeit ermöglichen.

Fig. 13 zeigt das Strukturbild der Positionsregelungseinrichtung 22' der Ein- und Auslagervorrichtung 9 gemäß Fig. 1 und 12. Die Positionsregelungseinrichtung 22' umfasst die Vorsteuerung 25', die ihrerseits durch zumindest einen Speicher 35' und zumindest einen Rechnerbaustein 36', insbesondere Mikroprozessor, mit einem Logiksystem 37', insbesondere eine Programmlogik, Steuereingängen 38' und Steuerausgänge 39' gebildet ist. Der Speicher 35' ist schaltungstechnisch mit dem Mikroprozessor verbunden, sodass dessen Speicherinhalt an den Mikroprozessor geliefert werden kann. Genauso gut kann auch der Speicher 35' im Rechnerbaustein 36' integriert sein. Die Steuereingänge 38' sind mit dem Leitrechner verbunden und werden mit der von der Hubeinheit 8 sowie Ein- und Auslagervorrichtung 9 anzufahrenden Zielpositionen $y_{end}$, $z_{end}$ beaufschlagt.

Im Speicher 35' sind die auf eine Type von Ein- und Auslagervorrichtung 9 und Lasttragvorrichtung 2, insbesondere Hubeinheit 8 abgestimmte Referenztrajektorien als mathematische Funktion, wie noch genauer beschrieben wird, und mechanische und/oder dynamische Grenzwerte bzw. Parameter der Ein- und Auslagervorrichtung 9 und Lasttragvorrichtung 2 abrufbar hinterlegt. Die mechanischen und/oder dynamischen Grenzwerte betreffen beispielsweise die maximal zulässige Gewichtskraft des in das Regalfach 11 einzulagernden oder aus dem Regalfach 11 auszulagernden Ladegutes 10, die maximale Amplitude der Schwingungsauslenkung des Mastes 6 in z-Richtung, die maximale Stellkraft an der Ein- und Auslagervorrichtung 9 und dgl.

Die Referenztrajektorien beschreiben jeweils einen optimalen, zeitlichen Verlauf des Systemverhaltens der Ein- und Auslagervorrichtung 9 und Lasttragvorrichtung 2, die auf der Grundlage mathematischer Gleichungssysteme berechnet werden. Das Systemverhalten ist durch die maximal zulässigen, mechanischen und dynamischen Belastungen/Grenzwerte der Ein-und Auslagervorrichtung 9 und/oder Lasttragvorrichtung 2 sowie zeitminimierte Bewegung der Ein- und Auslagervorrichtung 9 von einer Startposition zu einer Zielposition definiert und ist in einem mathematischen Modell zur Bestimmung der Referenztrajektorien beschrieben.

Über eine Leitung werden die Referenztrajektorien aus dem Speicher 35' an den Rechnerbaustein 36' angelegt. Die Startposition der Ein- und Auslagervorrichtung 9 ist erreicht, wenn die Hubeinheit 8 ihre Zielpositionen in x- und y-Richtung erreicht hat und in diesen im Stillstand gehalten wird sowie die Ein- und Auslagervorrichtung 9, insbesondere die Teleskoparme 46, in ihre Grundstellung etwa mittig auf der Hubeinheit 8 verstellt ist. Die vom Leitrechner vorgegebene Zielposition $z_{end}$ entspricht der ersten oder zweiten Tiefenposition der ausgefahrenen Ein- und Auslagervorrichtung 9 am gassennahen oder gassenfernen Abstellplatz.

Dem Rechnerbaustein 36' der Vorsteuerung 25' werden also die vom Leitrechner vorgegebenen Zielpositionen $y_{end}$ und $z_{end}$ an den Steuereingängen 38' zugeführt und von diesem, basierend auf der aus dem Speicher 35' ausgelesenen zumindest einen Referenztrajektorie $\xi_{2d}$ (Fig. 15), bevorzugt beide Referenztrajektorien $\xi_{1d}$, $\xi_{2d}$ (siehe Fig. 14 und 15), den Ist- bzw. Startpositionen $y_{Ist}$, $z_{Ist}$ und den Zielpositionen $y_{end}$, $z_{end}$ die Solltrajektorien für die Systemgrößen, zumindest der Sollstellkräfte $F_{ysoll}$, $Fzsol_l$ (siehe Fig. 16 und 17) und Sollpositionen $y_{soll}$, $z_{soll}$ (siehe Fig. 18 und 19) für die Hubeinheit 8 und Ein- und Auslagervorrichtung 9 bzw. deren Hub- und Stellantriebe 7, 55 nach einem geeigneten Algorithmus berechnet, wobei die Sollstellkräfte $F_{ysoll}$, $F_{zsoll}$ und Sollposition $y_{soll}$, $z_{soll}$ an die Steuerausgänge 39' angelegt werden, sowie in den Positionsregelkreis für die Ein- und Auslagervorrichtung 9 einfließen.

Dieser Positionsregelkreis umfasst einen Regler 60, der beispielsweise durch einen PD-Regler gebildet ist. Mittels diesem Regler 60 können nun auf einfache Weise die bei der Planung der Referenztrajektorien nicht berücksichtigten Störgrößen, wie beispielsweise die Reibung beim Verschieben eines Ladegutes 10 zwischen der Hubeinheit 8 und dem Regalfach 11 oder die eine unterschiedliche Fördercharakteristik hervorrufende Beladung eines Ladegutes 10 und dgl., ausgeregelt werden. Letzteres ist dann von Bedeutung, wenn beispielsweise das Ladgut 10 durch einen Behälter gebildet ist, in dem ein Stückgut untergebracht ist, das während der Manipulation des Behälters zwischen der Hubeinheit 8 und dem Regalfach 11 in Bewegungen versetzt wird, die zu Verschiebungen des Behälters gegenüber die Ein- und Auslagervorrichtung 9 führen können.

In vorteilhafter Weise müssen nur die Abweichungen, die sich durch die äußeren Störeinflüsse ergeben, durch den Regler 60 ausgeregelt werden, während die prinzipiellen zeitlichen Verläufe zumindest der Systemgrößen $F_{ysoll}$, $F_{zsoll}$, $y_{soll}$, $z_{soll}$, durch den jeweils berechneten Trajektorienverlauf vorgegeben werden. Aus der ersten Ableitung der Sollpositionen $y_{soll}$, $z_{soll}$ nach der Zeit erhält man die Sollgeschwindigkeiten $v_{ysoll}$, $v_{zsoll}$ als Systemgrößen und deren Solltrajektorien (nicht dargestellt). Durch die Regelung der Hubeinheit 8 und Ein- und Auslagervorrichtung 9 bzw. deren Hub- und Stellantriebe 7, 55 entlang vorbestimmter Solltrajektorien, kann bei der Positionierung der Ein- und Auslagervorrichtung 9 in der Start- und Zielposition ein Schwingen des Mastes 6 bzw. eine Mastauslenkung in z-Richtung unterdrückt werden, wie dies in Fig. 20 gezeigt ist.

Mit dem Regler 60 können nicht nur die vom Lagerverwaltungssystem vorgegebenen Zielpositionen $y_{end}$, $z_{end}$ exakt angefahren werden, sondern auch durch die Störeinflüsse hervorgerufenen Abweichungen von den Solltrajektorien abgeglichen werden, da durch die Korrektur zwischen zeitlichem Verlauf der Istwerte der Systemgrößen und den vorgegebenen Solltrajektorien der Systemgrößen gleichermaßen eine Stabilisierung der Solltrajektorien erreicht wird.

Wie nicht weiters eingetragen, sind dem Regler 60 jeweils ein Vergleichsglied für die Hubeinheit 8 und Ein- und Auslagervorrichtung 9 vorgeschaltet, an denen eine Regelabweichung zwischen gemessenen Istwerte der Systemgrößen (Isttrajektorien) und festgelegten Solltrajektorien der Systemgrößen, insbesondere der Sollposition $y_{soll}$, $z_{soll}$ und der Istposition $y_{Ist}$, $z_{Ist}$ berechnet werden. Die Istwerte $z_{Ist}$ für den Ein- und Ausfahrweg der Ein- und Auslagervorrichtung 9 werden über ein Wegmesssystem 59 laufend erfasst. Dieses ist beispielsweise durch einen mit dem Stellantrieb 55 gekoppelten Dreh- bzw. Inkrementalgeber und dgl. gebildet. Der Regler 60 wird mit den Regelabweichungen beaufschlagt. Aus den Regelabweichungen wird nach einem festgelegten Regelgesetz eine Störgröße, insbesondere eine Differenzkraft $\Delta F_y$, $\Delta F_z$ berechnet, die jeweils einem dem Regler 60 nachgeschalteten Vergleichsglied 43', 61 zur Störgrößenaufschaltung zugeführt und an diesem den festgelegten Solltrajektorien der Systemgrößen, insbesondere den Sollstellkräften $F_{ysoll}$, $F_{zsoll}$ als Korrekturwert überlagert sowie aktuelle Stellkräfte $F_y$, $F_z$ ermittelt werden. Die Stellglieder 30, 56 der Hub- und Stellantriebe 7, 55 werden mit den aus dem Soll-Ist-Vergleich der Solltrajektorien für die Systemgrößen, insbesondere die Sollstellkräfte $F_{ysoll}$, $F_{zsoll}$ und den Störgrößen, insbesondere den Differenzkräften $\Delta F_y$, $\Delta F_z$

errechneten, korrigierten Stellkräften $F_y$, $F_z$ beaufschlagt. Mit der Differenzkraft $\Delta F_y$, $\Delta F_z$ werden die oben beschrieben Abweichungen infolge von Störeinflüssen korrigiert bzw. ausgeglichen. Demnach entspricht die Störgröße, insbesondere die Differenzkraft $\Delta F_y$, $\Delta F_z$ einem Korrekturfaktor für die Störeinflüsse. Die aktuellen Stellkräfte $F_y$, $F_z$ werden mittels der Stellglieder 30, 56 der Hub- und Stellantriebe 7, 55, beispielsweise dem Frequenzumrichter in eine Spannung entsprechender Frequenz umsetzt, durch die beispielsweise Asynchronmotoren auf eine der Frequenz proportionale Drehzahl beschleunigt oder abgebremst werden. Die Stellglieder 30, 56 werden mit den aktuellen Stellkräften $F_y$, $F_z$ beaufschlagt.

Wie in Fig. 13 in strichpunktierte Linien eingetragen, kann von der Vorsteuerung 25' eine weitere Solltrajektorie für die Systemgröße der dynamischen Verformung der Lasttragvorrichtung 2, insbesondere die Soll-Mastdurchbiegung $q_{zsoll}$ in z-Richtung festgelegt und dem Regler 60 aufgeprägt werden. Die dynamischen Verformungen des Mastes 6 werden wiederum nach dem mathematischen Modell der "flachheitsbasierten Steuerung" berechnet, wonach aus den das Systemverhalten der Ein- und Auslagervorrichtung 9 und/oder Lasttragvorrichtung 2 beschreibende(n) Referenztrajektorie(n) der zeitliche Verlauf der dynamischen Verformungen als Solltrajektorie berechnet wird.

Der zeitliche Verlauf der Istwerte der Systemgröße bzw. die diese bildende Durchbiegung $q_{zIst}$ des Mastes 6 in z-Richtung wird mittels einem Messwertaufnehmer 62 als Istwertgeber erfasst. Der Messwertaufnehmer 62 ist beispielsweise durch einen Dehnmessstreifen oder piezoresistiven Sensor gebildet, der mit der Positionsregelungseinrichtung 22' schaltungstechnisch verbunden und am Mast 6, beispielsweise im Bereich des Mastfußes an einer in Ein- und Ausfahrrichtung der Ein- und Auslagervorrichtung 9 vorderen oder hinteren Mastwand angeordnet ist, wie in Fig. 12 in strichpunktierte Linien eingetragen. Aus den erfassten Istwerten $q_{zIst}$ des Mastbiegemomentes in z-Richtung kann die Geschwindigkeit des Mastbiegemomentes $\dot{q}_z$ errechnet und daraus auf die Mastschwingungen bzw. auf den zeitlichen Verlauf der Durchbiegung des Mastes 6 in z-Richtung geschlossen werden.

Der zeitliche Verlauf der Istwerte der Systemgrößen $y_{Ist}$, $z_{Ist}$, $q_{zIst}$ (Isttrajektorien) und die vorgegebenen Solltrajektorien der Systemgrößen $y_{soll}$, $z_{soll}$, $q_{zsoll}$ werden wiederum an nicht dargestellten Vergleichsglieder zusammengeführt und mittels diesen eine Regelabweichung berechnet, mit der der Regler 60 beaufschlag wird. Vom Regler 60 wird nun aus der Regelabweichung zwischen der Sollposition $y_{soll}$, $z_{soll}$ und Istposition $y_{Ist}$, $z_{Ist}$ sowie der Regelabweichung zwischen der Soll-Durchbiegung $q_{zsoll}$ und der Ist-Durchbiegung $q_{zIst}$ des Mastes 6 nach einem festgelegten Regelgesetz wiederum die Störgröße, insbesondere die Differenzkraft $\Delta F_y$, $\Delta F_z$ berechnet, die jeweils einem dem Regler 60 nachgeschalteten Vergleichsglied 43',61 zugeführt, mit den Sollstellkräften $F_{ysoll}$, $F_{zsoll}$ verglichen und den Sollstellkräften $F_{y\text{-}soll}$, $F_{zsoll}$ aufgeschaltet sowie aktuelle Stellkräfte $F_y$, $F_z$ ermittelt werden. Diese Ausführung hat den Vorteil, dass auch Positions- bzw. Winkelabweichungen $\Delta\varphi$ einer Aufnahmeebene für das Ladegut 10 an der Hubeinheit 8 von einer Horizontalen in der Start- oder Zielposition aufgrund von belastungsbedingten Durchbiegung des Mastes 6 automatisch korrigiert werden können.

Im Nachfolgenden wird nun die Berechnung der Referenztrajektorien für die Betrachtung der Ein- und Auslagervorrichtung 9 und Lasttragvorrichtung 2 nach dem Prinzip der "Flachheitsbasierten Steuerung" (flatness based control) erläutert.

Das Systemverhalten des Regalbediengerätes im zweiten Modell für die y- und z-Richtung wird ebenfalls durch ein partielles Differentialgleichungssystem beschrieben, welches wiederum zum Beispiel mit dem Näherungsverfahren von Ritz, in ein gewöhnliches Differentialgleichungssystem der Form

$$M(q)\ \ddot{q} + K(q,\dot{q}) = Q$$

übergeführt werden kann. Dieses Modell ist wieder Ausgangspunkt für den Entwurf der "Flachheitsbasierten Steuerung". Dieses Entwurfsmodells wird auch dazu benützt, den optimalen Verlauf der Referenztrajektorien unter Einhaltung der oben angeführten mechanischen und dynamischen Grenzwerte zu bestimmen.

Die oben genannte Differentialgleichung kann im Zustandsraum in ein System nichtlinearer Differentialgleichungen

$$\dot{\vec{x}} = f(\vec{x},\vec{u})$$

$$\vec{y} = h(\vec{x},\vec{u})$$

umgeschrieben werden.

Die Zustandsgrößen im Vektor lauten:

$$\vec{x} = \begin{pmatrix} y \\ v_y \\ z \\ v_z \\ q_z \\ v_{q_z} \\ \varphi \\ v_\varphi \end{pmatrix}$$

$y$ Position des Ladegutes in vertikaler Richtung
$v_y$ Geschwindigkeit des Ladegutes in vertikaler Richtung
$z$ Position des Ladegutes in z-Richtung
$v_z$ Geschwindigkeit des Ladegutes in z-Richtung
$q_z$ Mastauslenkung in z-Richtung
$v_{qz}$ Geschwindigkeit der Mastauslenkung in z-Richtung
$\varphi$ Winkel der Hubeinheit gegenüber einer Horizontalen
$v_\varphi$ Winkelgeschwindigkeit der Hubeinheit

Die Zustandsgrößen sind Größen mit der Eigenschaft, dass der Systemausgang $\bar{y}$ eindeutig durch den Verlauf von $\bar{x}(t_0)$ beginnend von einem Startpunkt $t_0$ und den Werten von festgelegt ist.

Die Eingangsgrößen lauten:

$$\vec{u} = \begin{pmatrix} F_y \\ F_z \end{pmatrix}$$

$F_y$ Stellkraft auf die Hubeinheit zum Heben des Ladegutes
$F_z$ Stellkraft auf den Stellantrieb der Ein- und Auslagervorrichtung

Die Ausgangsgrößen im Vektor lauten:

$$\vec{y} = \begin{pmatrix} y \\ z \\ q_z \end{pmatrix}$$

$y$ Position des Ladegutes in vertikaler Richtung
$z$ Position des Ladegutes in z-Richtung
$q_z$ Mastauslenkung in z-Richtung

Die Ausgangsgrößen ermöglichen es, das Verhalten des Systems zu beobachten. Sind sie messtechnisch erfassbar, so nennt man sie auch Messgrößen (Regelgrößen). Sind sie messtechnisch nicht zugänglich, werden aber trotzdem für die Regelung benötigt, so können sie auch durch einen Beobachter geschätzt werden. Im Fall des Regalbeidengerätes können die Ausgangsgrößen messtechnisch erfasst und dem Positionsregelkreis zugeführt werden, wie die Istwerte der z-Position und/oder die Geschwindigkeit $v_z$ des Ladegutes 10, die Istwerte der y-Position und/oder die Geschwindigkeit $v_y$ des Ladegutes 10 und die Mastdurchbiegung in z-Richtung $q_z$.

Da für das mathematische Modell des Regalbediengerätes beim Ein- und Ausfahren der Ein-und Auslagervorrichtung 9 die Eigenschaft der Flachheit gezeigt werden kann, existieren Größen, auch flache Ausgänge

$$\xi_1(\bar{x}) \text{ und } \xi_2(\bar{x})$$

$\xi_1(\bar{x})$ erster flacher Ausgang
$\xi_2(\bar{x})$ zweiter flacher Ausgang

genannt, welche ihrerseits durch die Zustandsgrößen ausgedrückt werden, mit der Eigenschaft, dass alle Systemgrößen durch diese flachen Ausgänge und deren Zeitableitungen ausgedrückt werden können.

$$\begin{aligned}
y &= y\left(\xi_1,\dot{\xi}_1,\ddot{\xi}_1,\ldots,\xi_1^{(\lambda_1)},\xi_2,\dot{\xi}_2,\ddot{\xi}_2,\ldots,\xi_2^{(\lambda_2)}\right)\\
v_y &= v_y\left(\xi_1,\dot{\xi}_1,\ddot{\xi}_1,\ldots,\xi_1^{(\kappa_1)},\xi_2,\dot{\xi}_2,\ddot{\xi}_2,\ldots,\xi_2^{(\kappa_2)}\right)\\
z &= z\left(\xi_1,\dot{\xi}_1,\ddot{\xi}_1,\ldots,\xi_1^{(\alpha_1)},\xi_2,\dot{\xi}_2,\ddot{\xi}_2,\ldots,\xi_2^{(\alpha_2)}\right)\\
v_z &= v_z\left(\xi_1,\dot{\xi}_1,\ddot{\xi}_1,\ldots,\xi_1^{(\beta_1)},\xi_2,\dot{\xi}_2,\ddot{\xi}_2,\ldots,\xi_2^{(\beta_2)}\right)\\
q_z &= q_z\left(\xi_1,\dot{\xi}_1,\ddot{\xi}_1,\ldots,\xi_1^{(\chi_1)},\xi_2,\dot{\xi}_2,\ddot{\xi}_2,\ldots,\xi_2^{(\chi_2)}\right)\\
v_{q_z} &= v_{q_z}\left(\xi_1,\dot{\xi}_1,\ddot{\xi}_1,\ldots,\xi_1^{(\delta_1)},\xi_2,\dot{\xi}_2,\ddot{\xi}_2,\ldots,\xi_2^{(\delta_2)}\right)\\
\varphi &= \varphi\left(\xi_1,\dot{\xi}_1,\ddot{\xi}_1,\ldots,\xi_1^{(\varepsilon_1)},\xi_2,\dot{\xi}_2,\ddot{\xi}_2,\ldots,\xi_2^{(\varepsilon_2)}\right)\\
v_\varphi &= v_\varphi\left(\xi_1,\dot{\xi}_1,\ddot{\xi}_1,\ldots,\xi_1^{(\varphi_1)},\xi_2,\dot{\xi}_2,\ddot{\xi}_2,\ldots,\xi_2^{(\varphi_2)}\right)\\
F_y &= F_y\left(\xi_1,\dot{\xi}_1,\ddot{\xi}_1,\ldots,\xi_1^{(\gamma_1)},\xi_2,\dot{\xi}_2,\ddot{\xi}_2,\ldots,\xi_2^{(\gamma_2)}\right)\\
F_z &= F_z\left(\xi_1,\dot{\xi}_1,\ddot{\xi}_1,\ldots,\xi_1^{(\varphi_1)},\xi_2,\dot{\xi}_2,\ddot{\xi}_2,\ldots,\xi_2^{(\varphi_2)}\right)
\end{aligned}$$

Aus diesen Beziehungen werden die Solltrajektorien der Systemgrößen zur Steuerung des Regalbediengerätes durch Vorgabe des Zeitverlaufs der Größen $\xi_{1d}$ (t) und $\xi_{2d}$(t) ermittelt, ohne ein Differentialgleichungssystem lösen zu müssen. Dies ist wichtig, da ein nichtlineares System, wie es auch das dynamische Verhalten des Regalbediengerätes Ein- und Ausfahren der Ein- und Auslagervorrichtung 9 beschreibt, im Allgemeinen nicht lösbar ist und daher in diesen Fällen keine andere Möglichkeit besteht, auf die Eingangsgrößen rückzurechnen ohne zu integrieren.

Die Solltrajektorien der Systemgrößen ergeben sich somit zu

$$y_d = y\left(\xi_{1d}, \dot{\xi}_{1d}, \ddot{\xi}_{1d}, \ldots, \xi_{1d}^{(\lambda_1)}, \xi_{2d}, \dot{\xi}_{2d}, \ddot{\xi}_{2d}, \ldots, \xi_{2d}^{(\lambda_2)}\right)$$
$$v_{yd} = v_y\left(\xi_{1d}, \dot{\xi}_{1d}, \ddot{\xi}_{1d}, \ldots, \xi_{1d}^{(\kappa_1)}, \xi_{2d}, \dot{\xi}_{2d}, \ddot{\xi}_{2d}, \ldots, \xi_{2d}^{(\kappa_2)}\right)$$
$$z_d = z\left(\xi_{1d}, \dot{\xi}_{1d}, \ddot{\xi}_{1d}, \ldots, \xi_{1d}^{(\alpha_1)}, \xi_{2d}, \dot{\xi}_{2d}, \ddot{\xi}_{2d}, \ldots, \xi_{2d}^{(\alpha_2)}\right)$$
$$v_{zd} = v_z\left(\xi_{1d}, \dot{\xi}_{1d}, \ddot{\xi}_{1d}, \ldots, \xi_{1d}^{(\beta_1)}, \xi_{2d}, \dot{\xi}_{2d}, \ddot{\xi}_{2d}, \ldots, \xi_{2d}^{(\beta_2)}\right)$$
$$q_{zd} = q_{1z}\left(\xi_{1d}, \dot{\xi}_{1d}, \ddot{\xi}_{1d}, \ldots, \xi_{1d}^{(\chi_1)}, \xi_{2d}, \dot{\xi}_{2d}, \ddot{\xi}_{2d}, \ldots, \xi_{2d}^{(\gamma_2)}\right)$$
$$v_{q_z d} = v_{q_{1z}}\left(\xi_{1d}, \dot{\xi}_{1d}, \ddot{\xi}_{1d}, \ldots, \xi_{1d}^{(\delta_1)}, \xi_{2d}, \dot{\xi}_{2d}, \ddot{\xi}_{2d}, \ldots, \xi_{2d}^{(\delta_2)}\right)$$
$$\varphi_d = \varphi\left(\xi_{1d}, \dot{\xi}_{1d}, \ddot{\xi}_{1d}, \ldots, \xi_{1d}^{(\varepsilon_1)}, \xi_{2d}, \dot{\xi}_{2d}, \ddot{\xi}_{2d}, \ldots, \xi_{2d}^{(\varepsilon_2)}\right)$$
$$v_{\varphi d} = v_\varphi\left(\xi_{1d}, \dot{\xi}_{1d}, \ddot{\xi}_{1d}, \ldots, \xi_{1d}^{(\phi_1)}, \xi_{2d}, \dot{\xi}_{2d}, \ddot{\xi}_{2d}, \ldots, \xi_{2d}^{(\phi_2)}\right)$$
$$F_{yd} = F_h\left(\xi_{1d}, \dot{\xi}_{1d}, \ddot{\xi}_{1d}, \ldots, \xi_{1d}^{(\gamma_1)}, \xi_{2d}, \dot{\xi}_{2d}, \ddot{\xi}_{2d}, \ldots, \xi_{2d}^{(\gamma_2)}\right)$$
$$F_{zd} = F_z\left(\xi_{1d}, \dot{\xi}_{1d}, \ddot{\xi}_{1d}, \ldots, \xi_{1d}^{(\varphi_1)}, \xi_{2d}, \dot{\xi}_{2d}, \ddot{\xi}_{2d}, \ldots, \xi_{2d}^{(\varphi_2)}\right)$$

Schaltet man nun die Solltrajektorien für die Stellgrößen, $F_{yd}(t)$ auf den Hubantrieb 7 der Hubeinheit 8 und $F_{zd}(t)$ auf den Stellantrieb 55 der Ein- und Auslagervornchtung 9 auf, so bewegt sich die Ein- und Auslagervornchtung 9 und das Ladegut 10 genau entlang dieser berechneten Systemgrößen. Die Zeitverläufe $\xi_{1d}(t)$ und $\xi_{2d}$ (t) werden im Nachfolgenden auch als Referenztrajektorien, bezeichnet. Für die Steuerung des Regalbediengerätes ist es ausreichend, wenn die Sollstellkräfte $F_{ysoll}$, $F_{zsoll}$, die Sollpositionen $y_{soll}$, $z_{soll}$ und/oder die Sollgeschwindigkeiten $v_{ysoll}$ und $v_{zsoll}$ in die Positionsregelungseinrichtung 22' einfließen.

Die Referenztrajektorien werden nun unter Berücksichtigung der mechanischen und/oder dynamischen Grenzwerte des Regalbediengerätes geplant, wozu vorerst die Anfangs- und Endwerte für Start- und Zielposition des Ladegutes 10 festgelegt werden müssen. Zu berücksichtigen gilt, dass das Ladegut 10 entlang der Solltrajektorien in endlicher Zeit von einer Ruhelage in der Startposition in eine Ruhelage in der Zielposition bewegt wird, wodurch nicht nur das Ladegut 10 sondern auch der Mast 6 bei entsprechender Planung schwingungsfrei in der Zielposition zum Stillstand kommt.

Daraus ergeben sich folgende Ansätze

| | |
|---|---|
| $y(0) = y_0$ | $y(T_{end}) = y_{end}$ |
| $z(0) = z_0$ | $z(T_{end}) = z_{end}$ |
| $q_z(0) = 0$ | $q_z(T_{end}) = 0$ |
| $\varphi(0) = 0$ | $\varphi(T_{end}) = 0$ |
| $v_\gamma(0)$ | $v_y(T_{end}) = 0$ |
| $v_z(0) = 0$ | $v_z(T_{end}) = 0$ |
| $v_{qr}(0) = 0$ | $v_{q2}\ (T_{end})=0$ |
| $v_\varphi(0) = 0$ | $v\varphi(T_{end}) = 0$ |
| $F_y(0) = m_h g$ | $F_y\ (T_{end}) = m_h g$ |
| $F_z(0) = 0$ | $F_z(T_{end}) = 0$ |

$m_h$ Masse Hubeinheit und Ladegut

| | |
|---|---|
| $z(0)$ bzw. $z(T_{end})$ | Start- und Zielposition des Ladegutes in z-Richtung |
| $y(0)$ bzw. $y(T_{end})$ | Start- und Zielposition des Ladegutes in y-Richtung |
| $\varphi(0)$ bzw. $\varphi(T_{end})$ | Start- und Zielwinkel der Hubeinheit |
| $F_y(0)$ bzw. $F_y(T_{end})$ | Stellkraft an der Hubeinheit und Ladegut in y-Richtung in der Start- und Zielposition |
| $F_z(0)$ bzw. $F_z(T_{end})$ | Stellkraft an der Ein- und Auslagervorrichtung und Ladegut in der Start- und Zielposition in z-Richtung |
| $q_z(0)$ bzw. $q_z(T_{end})$ | Mastauslenkung in der Start- und Zielposition in z-Richtung |
| $vy(0)$ bzw. $vy(T_{end})$ | Verstellgeschwindigkeit der Hubeinheit und des Lastgutes in der Start- und Zielposition in y- |

| | |
|---|---|
| | Richtung |
| dz(0) bzw. $_{Vz}(T_{end})$ | Verstellgeschwindigkeit der Ein- und Auslagervorrichtung und des Lastgutes in der Start- und Zielposition in z-Richtung |
| $v_\varphi(0)$ bzw. $v_\varphi$ $(T_{end})$ | Winkelgeschwindigkeit der Hubeinheit in der Start- und Zielposition |
| $vq_z(0)$ bzw. $v_{qz}(T_{end)}$ | Mastauslenkungsgeschwindigkeit in der Start- und Zielposition in z-Richtung |

Wie aus diesem Ansatz ersichtlich wird, werden die Referenztrajektorien so geplant, dass zum Zeitpunkt der Beendigung der Verzögerungsphase und mit Erreichen der Zielposition die Mastauslenkung $q_z$ und dessen Geschwindigkeit $\dot{q}_z$ auf Null gesetzt wird. Von Vorteil ist auch die Wahl der Stelllcraft $F_z$ = 0 in der Start- und Zielposition und wenn die Stellkraft $F_y$ dem statischen Wert entspricht, wodurch Kraftsprünge zu Beginn und Ende einer Betriebsfahrt vermieden werden.

Die Ein- und Auslagervorrichtung 9 wird auf der Verstellbewegung zwischen der Starposition und Zielposition unter Berücksichtigung der mechanischen dynamischen Grenzwerte an der Lasttragvorrichtung 2, wie Mastauslenkung in z-Richtung, Mastfußbiegespannung, stets mit maximaler Fahrgeschwindigkeit, Beschleunigung bzw. maximal zulässiger Stellkraft $F_z$ bewegt, wie sich aus Fig. 17 erschließen lässt. Mit anderen Worten, wird die Ein- und Auslagervorrichtung 9 aus der Startposition mit einer durch die Grenzwerte begrenzten, maximalen Stellkraft $F_z$ beschleunigt und danach auf eine durch die Grenzwerte begrenzte, maximale negative Stellkraft $F_z$ beschleunigt bzw. verzögert. Dadurch wird die Ein- und Auslagervorrichtung 9 stets mit der maximal möglichen Fahrgeschwindigkeit bzw. Beschleunigung verfahren, was eine zeitminimierte Positionierung der Ein- und Auslagervorrichtung 9 in der Start- und/oder Zielposition erlaubt.

Die in Fig. 14 und 15 dargestellten, geplanten Referenztrajektorien wirken sich nach dieser Ausführung auf die Lasttragvorrichtung 2 derart aus, dass beim Übergang von der Maximalbeschleunigung in der Beschleunigungsphase auf eine negative, maximale Beschleunigung in der Verzögerungsphase, der Mast 6 und die Ein- und Auslagervorrichtung 9 in z-Richtung nur eine einzige Schwingungsperiode von einer negativen Biegung in eine positive Biegung vollzieht und mit Beendigung der Verzögerungsphase in der Zielposition die Mastauslenkung den Wert Null annimmt und die Ein- und Auslagervorrichtung 9 schwingungsfrei sowie das Ladegut 10 zudem noch mit hoher Lagegenauigkeit positioniert sind. Dies wird erreicht, indem die Mastauslenkung in z-Richtung und deren Geschwindigkeit in der Start- und Zielposition Null gesetzt und die Referenz- und Solltrajektorien so geplant und berechnet werden, dass diese Bedingung erfüllt ist.

Die sich daraus ergebende positive Wirkung ist aus Fig. 20 ersichtlich. Die in strichlierte Linien eingetragene Kurve zeigt den zeitlichen Verlauf der Mastauslenkung in z-Richtung einer aus dem Stand der Technik bekannten Lasttragvorrichtung 2. Die in voller Linie eingetragene Kurve zeigt den zeitlichen Verlauf der Mastauslenkung in z-Richtung unter Verwendung der "Qachheitsbasierten Steuerung".

Soll nun beispielsweise die Ein- und Auslagervorrichtung 9 zur Einlagerung eines auf einer Palette abgelegten Ladegutes 10 mit einem Gewicht von etwa 1000 Kilogramm aus der Startposition z(0) = 0 und $y(0 = T_{end})$ = 8 m, in die Zielposition $z(T_{end})$ = 1,3 m am gassenfernen Abstellplatz mit einer maximalen Beschleunigung bzw. Geschwindigkeit bewegt werden, ergibt sich der in Fig. 20 dargestellte, zeitliche Verlauf der Durchbiegung bzw. Mastauslenkung in z-Richtung. Die Verstellzeit der Ein- und Auslagervorrichtung 9 zwischen Start- und Zielposition entspricht $T_{end}$ und ist trotz dem hohen Manipulationsgewicht dennoch nur mit 4 sec so gewählt, dass die Grenzwerte der Lasttragvorrichtung 2 eingehalten bzw. geringfügig unterschritten sind.

In der Fig. 21 ist ein Blockschaltbild der Positionsregelungseinrichtung 22" für die Lasttragvorrichtung 2 und der diese aufweisende Ein- und Auslagervorrichtung 9 gemäß Fig. 1 und 12 dargestellt. Diese umfasst wiederum die oben beschriebene Vorsteuerung 25" und einen Regler 63, der mit den Steuerausgängen 39" der Vorsteuerung 25" verbunden ist, der von Seiten der Vorsteuerung 25" die Solltrajektorien zumindest für die Systemgrößen wie Sollpositionen $x_{soll}$, $y_{soll}$, $z_{soll}$ und Soll-Mastdurchbiegung $q_{xsoll,}$ $q_{zsoll}$ in x- und z-Richtung erhält. Die Vorsteuerung 25" erhält an den Steuereingängen 38" die vom Leitrechner vorgegebenen Zielpositionen $x_{end}$, $y_{end}$ und $z_{end}$. An den weiteren Steuerausgängen 39" werden wiederum die Solltrajektorien für die Systemgrößen der Sollstellkräfte $F_{xsoll}$, $F_{ysoll}$, $F_{zoll}$ angelegt sowie den Positionsregelkreis für die Fahr- und Hubeinheit 4, 8 sowie der Ein- und Auslagervorrichtung 9 aufgeprägt. Der zeitliche Verlauf der Istwerte der Systemgrößen (Isttrajektorien) wird über die oben beschriebenen Wegmesssysteme 23, 24, 59 und Messwertauinehmer 45, 62 messtechnisch erfasst und mit den vorgegebenen Solltrajektorien der Systemgrößen an nicht weiters dargestellten Vergleichsgliedern zusammengeführt und mittels diesen Regelabweichungen berechnet, mit denen der Regler 63 beaufschlagt wird. Vom Regler 63 wird nun aus den Regelabweichungen zwischen der Soll- und Istposition $x_{soll}$, $y_{soll}$, $Z_{soll}$, $x_{Ist}$, $y_{Ist}$, $Z_{Ist}$ sowie der Soll-Durchbiegung und Ist-Durchbiegung $q_{xsoll}$, $q_{zsoll,}$ $q_{xIst}$, $q_{zIst}$ nach einem festgelegten Regelgesetz wiederum die Störgröße, insbesondere die Differenzkräfte $\Delta$Fx, $\Delta$Fy, $\Delta$Fz. berechnet, die jeweils einem dem Regler 63 nachgeschalteten Vergleichsglied 42", 43", 61 zugeführt, mit den Sollstellkräften $F_{xsoll}$, $F_{ysoll}$, $F_{zsoll}$ verglichen und den Sollstellkräften $F_{xsoll}$, $F_{ysoll}$, $F_{yoll}$ aufgeschaltet sowie die aktuellen Stellkräfte $F_x$, $F_y$, $F_z$ ermittelt werden. Die Stellglieder 29, 30, 56 werden mit den Stellkräften $F_x$, $F_y$, $F_z$ beaufschlagt.

Somit liegt ein Gesamtsystem vor, bei dem in der Vorsteuerung 25" alle mathematischen Funktionen bezüglich der x-, y- und z-Richtung abgebildet sind. Hierzu sind im Speicher 35" die oben beschriebenen Funktionen der Referenztrajektorien für die Fahr- und Hubeinheit 4, 8 als auch der Ein- und Auslagervorrichtung 9 abgespeichert, die im Betrieb der Lasttragvorrichtung 2 und der Ein- und Auslagervorrichtung 9 in den Rechnerbaustein 36" eingelesen und daraus die entsprechenden Verläufe der Solltrajektorien für die Systemgrößen, wie oben beschrieben, berechnet werden.

Wie aus dem oben beschriebenen hervorgeht, werden über die Vorsteuerung 25; 25'; 25" bzw. ihr mathematisches Modell Störeinflüsse, wie beispielsweise Maststeifigkeit, Massenverteilung, unterschiedliche Reibungsverhältnisse am Antriebssystem durch Schwankungen der Umgebungsbedingungen am Aufstellungsort des Regalbediengerätes oder Schwankungen der Stromwerte an den Fahr- und Hubantrieben 7, 17 und dgl., nicht berücksichtigt, was zwar erhebliche Vorteile in der Abarbeitung der Gleichungssysteme zur Berechnung der Solltrajektorien für die Sollstellkräfte $F_{xsoll}$, $F_{ysoll}$, $F_{zsoll}$, Sollpositionen $x_{soll}$, $y_{soll,}$ $y_{soll}$ und gegebenenfalls Solldurchbiegung $q_{xsoll}$, $q_{zsoll}$ in kürzesten Zykluszeiten ermöglicht, jedoch Abweichungen von der Solltrajektorie hervorrufen können, wenngleich diese sehr gering sind, die mittels zumindest einen Regler 26, 27; 44; 60; 63 minimiert werden müssen.

Genauso gut wäre es aber auch denkbar, dass in einer Referenzfahrt das dynamische Verhalten, beispielsweise die dynamischen Verformungen des Mastes 6 in x- und z-Richtung, der ausschließlich von der Vorsteuerung 25; 25'; 25'' angesteuerten Lasttragvorrichtung 2, über Messwertaufnehmer zu erfassen und anhand dieser Messwerte wenigstens einen Korrekturfaktor für die x- und/oder y-Richtung zu definieren, der so gewählt ist, dass die Störeinflüsse berücksichtigt sind und wiederum ein schwingungsfreies Positionieren des Regalbediengerätes, insbesondere der Hubeinheit 8, in den Zielpositionen möglich ist. Dieser Korrekturfaktor wird den Referenztrajektorien überlagert und daraus eine korrigierte Solltrajektorie für die Sollstellkräfte $F_{xsoll}$, $F_{ysoll,}$ $F_{xsoll,}$ die Sollpositionen $x_{soll}$, $y_{soll}$, $z_{soll}$ und gegebenenfalls der Solldurchbiegung $q_{xsoll}$, $q_{zsoll}$ berechnet. Diese Maßnahmen haben den Vorteil, dass ein zusätzlicher Regler zur Positionsregelung und die hiermit verbundene Schwingungsdämpfung entfallen kann und deshalb der schaltungstechnische Aufwand als auch die Steuerung der Lasttragvorrichtung 2 wesentlich reduziert werden kann. Das Regalbediengerät wäre sodann ausschließlich gesteuert.

Auch wenn die Berechnung der Referenztrajektorien mit Hilfe des mathematischen Modells der bevorzugten Ausführung entspricht, wäre es auch denkbar, dass die Referenztrajektorien experimentell bestimmt werden. Diese empirisch ermittelten, vorbestimmten Verläufe der Referenztrajektorien werden in dem Speicher 35; 35'; 35" hinterlegt, damit sie zur Regelung oder Steuerung der Fahr- und Hubeinheit 4, 8 als auch Ein- und Auslagervorrichtung 9 entlang dieser Trajektorien zur Verfügung stehen.

In Fig. 22 ist ein Blockschaltbild einer so genannten "Flachheitsbasierten Regelung" für die Lasttragvorrichtung 2 mit Ein- und Auslagervorrichtung 9 gezeigt. Diese umfasst die Vorsteuerung 25; 25'; 25", einen Regler 64, insbesondere Zustandsregler, ein erstes und zweites Rechnermodul 65, 66. Die mit $\bar{x}$ bezeichneten Zustandsgrößen $x_{Ist}$, $y_{Ist}$, $z_{Ist}$, $q_{xIst,}$ $q_{zIst}$, $v_{xIst,}$ $v_{yIst}$, $v_{zIst,}$ $\dot{q}_{xIst.}$, $\dot{q}_{zIst}$ werden messtechnisch erfasst oder mittels Beobachter geschätzt und im Rechenmodul 66 aus den Istwerten die Istverläufe von Referenztrajektorien (Isttrajektorien) nach $\xi = \psi(\bar{X})$ berechnet und danach dem Regler 64 zugeführt. An den Regler 64 werden zusätzlich die Sollverläufe der flachen Ausgänge als Referenztrajektorien $\bar{\xi}_d$ angelegt. Aus dem Vergleich zwischen dem Sollverlauf der Referenztrajeklorien und Istverlauf der Referenztrajektorien wird jeweils eine Regelabweichung berechnet und diese dem Rechnermodul 65 mit den Eingängen $v_1$, $v_2$, $v_3$ aufgeprägt. Das Rechnermodul 65 enthält mathematische Gleichungssysteme, mit denen aus den Istwerten der Zustandsgrößen $\bar{x}$ und Eingangsgrößen $v_1$, $v_2$, $v_3$, die Stellgrößen $F_x$, $F_y$, $F_z$ berechnet und mit denen die Stellglieder der Fahr- und Hubeinheit 4, 8 sowie Ein- und Auslagervorrichtung 9 beaufschlagt werden. Die mathematischen Gleichungssysteme in Form von Differentialgleichungssystemen, werden aus den flachen Ausgängen in Zusammenhang mit dem mathematischen Modell für das Regalbediengerät hergeleitet, wie im Nachfolgenden noch erläutert wird.

Dabei beschreiben

$$\bar{y} = \begin{pmatrix} x \\ y \\ z \\ q_x \\ q_z \end{pmatrix}$$

den Ausgang vom mathematischen Modell des Regalbediengerätes,

$$\bar{x} = \begin{pmatrix} x \\ v_x \\ y \\ v_y \\ z \\ v_z \\ q_x \\ v_{q_x} \\ q_z \\ v_{q_z} \end{pmatrix}$$

den Zustandsvektor,

$$\bar{\xi} = \begin{pmatrix} \xi_{1x} \\ \xi_2 \\ \xi_{1z} \end{pmatrix}$$

den Vektor der flachen Ausgänge und

$$\bar{\xi}_d = \begin{pmatrix} \xi_{1xd} \\ \xi_{2d} \\ \xi_{1zd} \end{pmatrix}$$

den Vektor der Referenztrajektorien des flachen Ausgangs, welcher laut Planung von der

Vorsteuerung 25; 25'; 25" vorgeben wird. Die Größen des Zustandsvektors $\overline{X}$ können entweder durch Messung oder durch einen Beobachter bestimmt werden.

Das mathematische Modell des Regalbediengerätes kann in der Form

$$\dot{\bar{x}} = f(\bar{x}, \bar{u})$$

$$\bar{y} = h(\bar{x}, \bar{u})$$

dargestellt werden. Da für dieses System die Eigenschaft der Flachheit gezeigt werden kann, existieren Größen

$$\bar{\xi} = \begin{pmatrix} \xi_{1x} \\ \xi_2 \\ \xi_{1z} \end{pmatrix}$$

auch flache Ausgänge genannt, sodass sämtliche Systemgrößen ($\bar{x}$, $F_x$, $F_y$, $F_z$) als Funktionen dieser Größen und deren zeitlichen Ableitungen beschreibbar sind. Es gelingt nun, mittels einer Zustandstransformation der Form

$$\bar{\xi} = \psi(\bar{x})$$

und einer darauf ableitbaren, nichtlinearen dynamischen Zustandsrückführung der Form

$$\dot{\bar{\eta}} = \bar{f}(\bar{\eta}, \bar{x}, \bar{v})$$

$$\bar{u} = \bar{h}(\bar{\eta}, \bar{x}, \bar{v})$$

mit einem neuen fiktiven Zustand $\bar{\eta}$, zwischen den neuen Eingangsgrößen

$$\bar{v} = \begin{pmatrix} v_1 \\ v_2 \\ v_3 \end{pmatrix}$$

und flachen, linearisierenden Ausgangsgrößen

$$\bar{\xi} = \begin{pmatrix} \xi_{1x} \\ \xi_2 \\ \xi_{1z} \end{pmatrix}$$

ein lineares Eingangs- und Ausgangsverhalten

$$\xi_{1x}^{(n)} = v_1$$

$$\xi_2^{(m)} = v_2$$

$$\xi_{1z}^{(o)} = v_3$$

zu schaffen. Die Bezeichnung $\xi_{1x}^{(n)}$ steht dabei für die n-te Zeitableitung von $\xi_{1x}$. Das gleiche gilt für $\xi_2^{(m)}, \xi_{1z}^{(o)}$. Die nichtlineare dynamische Zustandsrückführung ist ein berechnetes Differentialgleichungssystem, welches dazu dient, das nichtlineare Systemverhalten des Regalbediengerätes zwischen den Eingangs- und Ausgangsgrößen des Rechnermoduls 65 in ein fiktives lineares System zu transformieren. Dieses so erzeugte lineare System kann nun mittels linearen Reglerentwürfen stabilisiert werden. Eine Möglichkeit hierfür wäre ein lineares Zustandsregelgesetz, welches einem PD-Regler entspricht, der Form

$$v_{1x} = \xi_{1xd}^{(n)} - \sum_{j=0}^{n-1} a_j \left( \xi_{1x}^{(j)} - \xi_{1xd}^{(j)} \right)$$

$$v_2 = \xi_{2d}^{(m)} - \sum_{j=0}^{m-1} b_j \left( \xi_2^{(j)} - \xi_{2d}^{(j)} \right)$$

$$v_{1z} = \xi_{1zd}^{(o)} - \sum_{j=0}^{o-1} c_j \left( \xi_{1z}^{(j)} - \xi_{1zd}^{(j)} \right)$$

Man erkennt, dass wiederum, wie beim PD-Regler, die Differenz zwischen Ist- und Referenztrajektorie gebildet wird und mit Faktoren $a_j$,$b_j$ und $c_j$ gewichtet, die neuen Eingänge $v_1$, $v_2$ und $v_3$ korrigiert werden.

Es werden demnach nicht direkt die Solltrajektorien der Systemgrößen stabilisiert, sondern die Referenztrajektorien des flachen Ausgangs im transformierten System. Bewegt sich der flache Ausgang entlang der Referenztrajektorien, so bewegen sich auch die Systemgrößen entlang ihrer gewünschten Solltrajeldorien.

Wenngleich das in den Fig. 1 und 12 gezeigte Regalbediengerät nur einen an den Fahreinheiten 4, 20 befestigten Mast 6 aufweist, ist dies im Rahmen der Erfindung nicht als einschränkend zu verstehen. Vielmehr kann das erfindungsgemäße Verfahren und die erfindungsgemäße Positionsregelungseinrichtung 22; 22'; 22" auch an einem Regalbediengerät eingesetzt werden, bei dem eine untere Fahreinheit, eine obere Fahreinheit und ein diese miteinander verbindender Doppelmast vorgesehen ist. Das Regalbediengerät ist über die untere und obere Fahreinheit entlang von Führungsbahnen, insbesondere Fahrschienen, geführt, wozu die untere Fahreinheit die in Fig. 1 gezeigten Höhen- und Seitenführungsrollen umfasst, während die obere Fahreinheit ausschließlich die in Fig. 1 gezeigten Seitenführungsrollen aufweist. Innerhalb des Doppelmastes befindet sich die Hubeinheit mit der Ein- und Auslagervorrichtung und dem Ladegut. Derartige Regalbediengeräte sind bereits seit langem bekannt und ist beispielsweise in der DE 195 34 291 A1 offenbart. Der in dieser Druckschrift beschriebene Dämpfungsantrieb an der oberen Fahreinheit kann durch den Ansatz der "Flachheitsbasierten Steuerung/Regelung" entfallen. Damit verbunden ist eine erhebliche Kosteneinsparung in der Herstellung und im Betrieb des Regalbediengerätes.

Weiters ist es auch möglich, dass die Referenztrajektorien nicht vorausberechnet oder vorausbestimmt werden, sondern anhand dem mathematischen Modell der Vorsteuerung 25; 25'; 25", insbesondere dem Rechnerbaustein 36; 36'; 36" während des Betriebes der Lasttragvorrichtung 2 und Ein- und Auslagervorrichtung 9 in Echtzeit errechnet werden.

Die Referenztrajektorien lassen sich unter Berücksichtigung von unterschiedlichen Lasten, Hubhöhen und Geometrien, einem konstruktionsbedingt unterschiedlichem dynamischen Verhalten, unterschiedlicher Antriebe und Art der Kraftübertragung und unterschiedlicher statischer und dynamischer Verformungen des Mastes 6 optimieren. Für jede Type Lasttragvorrichtung 2 und Ein- und Auslagervorrichtung 9 wird eine optimierte Referenztrajektorie definiert.

Mit dem oben beschriebenen Verfahren wird erreicht, dass Lasttragvorrichtungen 2 gleichen Aufbaus bzw.

gleicher Struktur aber unterschiedlichen Einsatzzweckes, ein unterschiedliches dynamisches Verhalten aufweisen können. So kann es notwendig sein, dass die Grenzwerte der Lasttragvorrichtungen 2 unterschiedlich gewählt werden müssen. Beispielsweise muss in den einem Fall die Lasttragvorrichtung 2 oder Ein- und Auslagervorrichtung 9 mit höheren Beschleunigungswerten verfahren werden als in den anderem Fall. Die Auswirkung auf das dynamische Verhalten der Lasttragvorrichtungen 2 ist jedoch stets dieselbe. Mit anderen Worten wird die als Auswirkung auf die Beschleunigung und Verzögerung angeregte Mastauslenkung in x- und/oder z-Richtung kontrolliert durch Vorgabe ihrer aus den Referenztrajektorien berechneten Solltrajektorie gegen Stillstand der Lasttragvorrichtung 2 oder Ein- und Auslagervorrichtung 9 beseitigt. Die Referenztrajektorien sind so geplant, dass die Mastauslenkung q und deren Geschwindigkeit $\dot{q}$ in der Start- und Zielposition den Wert Null annimmt. Somit wird der Mast 6 lediglich einmal auf negative Biegung und einmal auf positive Biegung beansprucht. Ein unkrolliertes Schwingen des Mastes 6 zwischen Start- und Zielposition als auch in der Start- und Zielposition wird wirkungsvoll vermieden.

Wenngleich das(die) erfindungsgemäße Verfahren und Positionsregelungseinrichtung 22; 22'; 22" nur anhand einem Regalbediengerät beschrieben ist, wäre es aber genauso gut möglich, diese an einer anderen Ausführung einer Lasttragvorrichtung einzusetzen, bei der eine das Ladegut aufnehmende Plattform in x- und/oder y- und/oder z-Richtung bewegbar ist. Beispielsweise kann die Lasttragvorrichtung auch durch einen Verschiebewagen, ein Hebezeug und dgl., also ein fördertechnisches Gerät gebildet sein.

Abschließend sei auch noch darauf hingewiesen, dass die Differenzkräfte und Solltrajektorien üblicherweise den zeitlichen Verlauf der Steuersignale in Form von Steuerspannung, Motorstrom und Drehzahländerung an den Fahr-, Hub- und Stellantrieben 7, 17, 55 vorgeben. Daher ist zu jedem Zeitpunkt der Fahrt des Regalbediengerätes und der Ein- und Auslagervorrichtung 9 zwischen Start- und Zielposition beispielsweise der/das jeweils notwendige Motorstrom oder Antriebsdrehmoment am Fahr-, Hub- und Stellantrieb 7, 17, 55 durch Vorgabe der Solltrajektorien bekannt. Wenn oben von Solltrajektorien die Rede ist, wird darunter der zeitliche Verlauf der Systemgrößen, wie der Sollstellkräfte $F_{xsoll,}$ $F_{ysoll}$, $F_{zsoll}$, Sollpositionen $x_{soll}$, $y_{soll}$, $z_{soll}$, Soll-Mastdurchbiegung $q_{xsoll,}$ $q_{zsoll}$ und deren Sollgeschwindigkeiten $v_{xsoll}$, $v_{ysoll,}$ $v_{zsoll,}$ $\dot{q}_{xIst,}$ $\dot{q}_{zIst}$ verstanden.

Der Ordnung halber sei abschließend darauf hingewiesen, dass zum besseren Verständnis des Aufbaus des Regallagersystems dieses bzw. dessen Bestandteile teilweise unmaßstäblich und/oder vergrößert und/oder verkleinert dargestellt wurden.

Bezugszeichenaufstetlung

1 Führungsbahn
2 Lasttragvorrichtung
3 Regallager
4 Fahreinheit
5 Konsole

6 Mast
7 Hubantrieb
8 Hubeinheit
9 Ein- und Auslagervorrichtung
10 Ladegut

11 Regalfach
12 Führungsvorrichtung
13 Führungsbahn
14 Höhenführungsrolle
15 Seitenführungsrolle

16 Befestigungsklemme
17 Fahrantrieb
18 Antriebsorgan
19 Antriebsrad
20 Fahreinheit

21 Umlenkrad
22 Positionsregelungseinrichtung

22' Positionsregelungseinrichtung
22" Positionsregelungseinrichtung
23 Wegmesssystem
24 Wegmesssystem
25 Vorsteuerung
25' Vorsteuerung
25" Vorsteuerung

26 Positionsregler
27 Positionsregler
28 Schaltschrank
29 Stellglied
30 Stellglied

31 Seitcnfuhrungsrolle
32 Führungsbahn
35 Speicher
35' Speicher
35" Speicher

36 Rechnerbaustein
36' Rechnerbaustein
36" Rechnerbaustein
37 Logiksystem
37' Logiksystem
37" Logiksystem
38 Steuereingang
38' Steuereingang
38" Steuereingang
39 Steuerausgang
39' Steuerausgang
39" Steuerausgang
40 Vergleichsglied
41 Vergleichsglied
42 Vergleichsglied
42' Vergleichsglied
42" Vergleichsglied
43 Vergleichsglied
43' Vergleichsglied
43" Vergleichsglied
44 Regler
45 Messwertaufriehmer
46 Teleskoparm
47 Tragrahmen
48 Mittelschlitten
49 Oberschlitten
50 Antriebsmittel
51 a Mitnahmeorgan
51b Mitnahmeorgan
51c Mitnahmeorgan
52 Antriebsorgan
53 Antriebsrad
54 Abtriebsrad
55 Stellantrieb
56 Stellglied
60 Regler
61 Vergleichsglied
62 Messwertaufnehmer

63 Regler
64 Regler
65 Rechnermodul
66 Rechnermodul

**Patentansprüche**

1. Verfahren zur flachheitsbasierten Bewegungssteuerung einer Lasttragvorrichtung (2), **dadurch gekennzeichnet, dass** für eine durch einen Fahrantrieb (17) verstellbare Fahreinheit (4) und eine durch einen Hubantrieb (7) auf einem Mast (6) vertikal verstellbare Hubeinheit (8) der Lasttragvorrichtung (2) im Hinblick auf die maximal zulässigen, mechanischen und dynamischen Belastungen auf den Mast (6) und auf die elektrischen Fahr- und Hubantriebe (7, 17) optimierte und im Hinblick auf die Betriebsfahrt der Lasttragvorrichtung (2) zwischen einer Start- und Zielposition zeitminimierte Referenztrajektorien festgelegt und diese dabei so an das Systemverhalten der Lasttragvorrichtung (2) angepasst sind, dass auf der Betriebsfahrt der Lasttragvorrichtung (2) zwischen Start- und Zielposition die zulässige Verformung des Mastes (6) zumindest durch einen mechanischen Grenzwert vorgegeben wird und die Mastauslenkung (q) und deren Geschwindigkeit ($\dot{q}$) in der Zielposition der Lasttragvorrichtung (2) gleich Null sind, und dass aus den auf das Systemverhalten der Lasttragvorrichtüng (2) optimierten Referenztrajektorien die Solltrajektorien für Systemgrößen, zumindest für Stellgrößen, insbesondere die Sollstellkräfte ($F_{xsoll,}$ $F_{ysoll}$), der Fahr- und Hubeinheiten (4, 8) errechnet werden und die Fahr- und Hubantriebe (7, 17) mit den Stellgrößen zyklisch beaufschlagt und durch deren Regelung zwischen Start- und Zielposition entlang der Solltrajektorien geführt werden, sodass zum Bewegungsende die Zielposition der Fahr- und Hubeinheiten (4, 8) schwingungsfrei erreicht wird.

2. Verfahren nach Anspruch 1, **dadurch gekennzeichnet, dass** anhand der Referenztrajektorien weitere Solltrajektorien für Systemgrößen, wie die Sollposition ($x_{soll,}$ $y_{soll}$) der Fahrund Hubeinheit (4, 8), die Sollgeschwindigkeit ($v_{xsoll,}$ $v_{ysoll}$) der Fahr- und Hubeinheit (4, 8) oder die Verformung des Mastes (6) berechnet werden.

3. Verfahren nach Anspruch 1 oder 2, **dadurch gekennzeichnet, dass** die Solltrajektorien der Systemgröße auf der Grundlage mathematischer Gleichungen nach dem Prinzip der flachheitsbasierten Steuerung berechnet werden und deren flachen Ausgänge eine Rechengröße für das Systemverhalten der Lasttragvorrichtung (2) beschreiben, wobei der zeitliche Verlauf der flachen Ausgänge den optimierten Referenztrajektorien entsprechen und anhand deren auf der Grundlage mathematischer Gleichungen die Solltrajektorien berechnet werden.

4. Verfahren nach einem der Ansprüche 1 bis 3, **dadurch gekennzeichnet, dass** Abweichungen zwischen dem Verlauf der jeweils, berechneten Solltrajektorie der Systemgrößen und dem zeitlichen Verlauf der jeweils, erfassten Istwerte der Systemgrößen, wie die Stellkräfte ($F_{xIst}$ $F_{yIst}$), Ist position ($x_{Ist}$, $y_{Ist}$) der Fahr- und Hubeinheit (4, 8), die Istgeschwindigkeit ($v_{xIst}$, $v_{yIst}$) der Fahr- und Hubeinheit (4, 8) oder die Verformung des Mastes (6) mittels wenigstens einem Regler (26, 27; 44) korrigiert werden.

5. Verfahren nach einem der Ansprüche 1 bis 4, **dadurch gekennzeichnet, dass** der Regler (26, 27; 44) mit einer aus dem Soll-Ist-Vergleich der Solltrajektorie für die Sollposition ($x_{soll}$, $y_{soll}$) und/oder Sollgeschwindigkeit ($v_{xsoll}$, $v_{yoll}$) und dem zeitlichen Verlauf für die Istposition ($x_{Ist,}$ $y_{Ist}$) und/oder Istgeschwindigkeit ($v_{xIst}$, $v_{yIst}$) der Fahr- und Hubeinheit (4, 8) errechneten Regelabweichung (e) beaufschlagt wird und vom Regler (26, 27; 44) nach einem Regelalgorithmus Differenzkräfte ($\Delta F_x$, $\Delta F_y$) berechnet und den Solltrajektorien für die Sollstellkräfte ($F_{xsoll,}$ $F_{ysoll}$) aufgeprägt werden und dass Stellglieder (29, 30) der Fahr- und Hubantriebe (7, 17) mit den um die Differenzkräfte $\Delta F_x$, $\Delta F_y$) korrigierten Sollstellkräften ($F_{xsoll}$, $F_{ysoll}$) beaufschlagt werden.

6. Verfahren nach einem der Ansprüche 1 bis 5, **dadurch gekennzeichnet, dass** der Grenzwert durch die mechanischen und dynamischen Belastungen auf den Mast (6) während der Betriebsfahrt als Systemgröße ($q_{xIst}$) erfasst und Istwerte dem Regler (44) aufgeprägt werden.

7. Verfahren nach Anspruch 1, **dadurch gekennzeichnet, dass** in einem Regler (64) zwischen dem Sollverlauf der jeweils berechneten Referenztrajektorie und dem Istverlauf der aus den jeweils ermittelten Systemgrößen ($\bar{x}$) errechneten Referenztajektorie, Regelabweichungen ermittelt und einem Rechnermodul (65) als Eingangsgrößen ($v_1$, $v_2$) zugeführt werden und dass vom Rechnermodul (65) mittels mathematischer Gleichungen zwischen den Eingangsgrößen ($v_1$, $v_2$) und Ausgangsgrößen ($\xi_{1x}$, $\xi_2$) ein lineares Systemverhalten erwirkt sowie aus den Eingangsgrößen ($v_1$, $v_2$) und den ermittelten Systemgrößen ($\bar{x}$) die Stellkräfte ($F_x$, $F_y$) berechnet werden, mit denen die Stellglieder (29, 30) der Fahr- und Hubantriebe (7, 17) beaufschlagt werden.

**8.** Verfahren nach Anspruch 1, **dadurch gekennzeichnet, dass** mehrere Referenztrajektorien jeweils für die Fahr- und Hubeinheit (4, 8) festgelegt werden und über Mittel aus einer Liste festgelegter Referenztrajektorien die im Hinblick auf mechanische und dynamische Belastungen der Lasttragvorrichtung (2) jeweils am Besten geeignete und/oder auf den kornstruktiven Aufbau der Lasttragvorrichtung (2) abgestimmte Referenztrajektorie für die Fahr- und Hubeinheit (4, 8) ausgewählt wird.

**9.** Verfahren nach Anspruch 1, **dadurch gekennzeichnet, dass** ausschließlich eine Referenztrajektorie je für die Fahr- und Hubeinheit (4, 8) festgelegt wird und dass im Hinblick auf mechanische und dynamische Belastungen der Lasttragvorrichtung (2) und/oder auf den konstruktiven Aufbau der Lasttragvorrichtung (2) abgestimmte Korrekturfaktoren ermittelt werden und dass über Mittel von einem Bediener aus einer Liste festgelegter Korrekturfaktoren ein Korrekturfaktor je für die Fahr- und Hubeinheit (4, 8) ausgewählt wird, mit dem die Referenztrajektorien der Fahr- und Hubeinheit (4, 8) überlagert werden.

**10.** Verfahren nach Anspruch 1, **dadurch gekennzeichnet, dass** die Referenztrajektorien als Funktion der Start- und Zielposition sowie maximal zulässiger mechanischer und dynamischer Grenzwerte in einem Speicher (35) hinterlegt und im Betrieb der Lasttragvorrichtung (2) in einen Rechnerbaustein (36), insbesondere Mikroprozessor, eingelesen und durch Erfassen der Startposition sowie Vorgabe der Zielposition der Fahr- und Hubeinheiten (4, 8) auf Grundlage der Referenztrajektorien für die Fahr- und Hubeinheiten (4, 8) die Solltrajektorien der Systemgröße berechnet werden.

**11.** Positionsregelungseinrichtung (22) zur Durchführung des Verfahrens nach einem der Ansprüche 1 bis 10, die zumindest einen mit einem übergeordneten Rechner verbundenen Regler (26, 27; 44) und eine flachheitsbasierte Vorsteuerung (25) mit einem Rechnerbaustein (36), insbesondere Mikroprozessor, und mit diesem schaltungstechnisch verbundenen Speicher (35) umfasst, **dadurch gekennzeichnet, dass** mit der Positionsregelungseinrichtung (22) eine durch einen Fahrantrieb (17) verstellbare Fahreinheit (4) und eine durch einen Hubantrieb (7) auf einem Mast (6) vertikal verstellbare Hubeinheit (4, 8) der Lasttragvorrichtung (2) ansteuerbar ist, wobei im Speicher (35) zumindest für die Fahr- und Hubeinheit (4, 8) im Hinblick auf die maximal zulässigen, mechanischen und dynamischen Belastungen auf den Mast (6) und auf die elektrischen Fahr- und Hubantriebe (7, 17) optimierte und im Hinblick auf die Betriebsfahrt der Lasttragvorrichtung (2) zwischen einer Start- und Zielposition zeitminimierte Referenztiajektorien gespeichert sind und dass der Rechnerbaustein (36) ein Logiksystem (37) aufweist, mit dem aus den Referenztrajektorien auf Grundlage mathematischer Gleichungen Solltrajektorien für Systemgrößen, zumindest für Stellgrößen, insbesondere die Sollstellkräfte ($F_{xsoll}$, $F_{ysoll}$), der Fahr- und Hubeinheiten (4, 8) berechnet werden, und welcher über Steuereingänge (38) mit dem übergeordneten Rechner und über Steuerausgänge (39) mit Stellgliedern (29, 30) der Fahr- und Hubantriebe (7,17) verbunden ist, wobei die Stellglieder (29, 30) der Fahr- und Hubantriebe (7,17) zum weitestgehend schwingungsfreien Erreichen derer Zielpositionen mit den aus den Solltrajektorien ermittelten Stellgrößen beaufschlagt sind.

**12.** Verfahren zur flachheitsbasierten Bewegungssteuerung einer Lasttragvorrichtung (2), **dadurch gekennzeichnet, dass** zumindest eine im Hinblick auf die maximal zulässigen, mechanischen und dynamischen Belastungen der eine Fahreinheit (4) und eine auf einem Mast (6) vertikal verstellbare Hubeinheit (8) aufweisenden Lasttragvorrichtung (2) optimierte und im Hinblick auf die Verstellbewegung einer ein Ladegut (10) manipulierenden Ein- und Auslagervorrichtung (9) zwischen einer Start- und Zielposition zeitminimierte Referenztrajektorie festgelegt wird und diese dabei so an das Systemverhalten der Lasttragvorrichtung (2) angepasst, ist, dass auf der Verstellbewegung der Ein- und Auslagervorrichtung (9) zwischen Start- und Zielposition die zulässige Verformung des Mastes (6) zumindest durch einen mechanischen Grenzwert vorgegeben wird und die Mastauslenkung ($q_z$) und deren Geschwindigkeit ($\dot{q}_z$) in der Zielposition der Ein- und Auslagervorrichtung (9) gleich Null sind, und dass aus der auf das Systemverhalten der Lasttragvorrichtung (2) und der Verstellbewegung der Ein-und Auslagervorrichtung (9) optimierten Referenztrajektorie zumindest eine Solltrajektorie für eine Systemgröße, zumindest für eine Stellgröße, insbesondere die Sollstellkraft ($F_{zsoll}$), der Ein- und Auslagervorrichtung (9) errechnet wird und ein Stellantrieb (55) der Ein- und Auslagervorrichtung (9) mit der Stellgröße zyklisch beaufschlagt und durch dessen Regelung zwischen Start- und Zielposition entlang der Solltrajektorie geführt wird, sodass zum Bewegungsende die Zielposition der Ein- und Auslagervorrichtung (9) schwingungsfrei erreicht wird.

**13.** Verfahren nach Anspruch 12, **dadurch gekennzeichnet, dass** anhand der Referenztrajektorien weitere Solltrajektorien für Systemgrößen, wie die Sollposition ($Z_{soll}$) der Ein- und Auslagervorrichtung (9), die Sollgeschwindigkeit ($v_{zsoll}$) der Ein- und Auslagervorrichtung (9) oder die Verformung des Mastes (6) in z-Richtung berechnet werden.

**14.** Verfahren nach Anspruch 12 oder 13, **dadurch gekennzeichnet, dass** die Solltrajektorien der System größen auf der Grundlage mathematischer Gleichungen nach dem Prinzip der flachheitsbasierten Steuerung berechnet werden und deren flachen Ausgänge eine Rechengröße für das Systemverhalten der Lasttragvorrichtung (2) beschreiben, wobei der zeitliche Verlauf der flachen Ausgänge den optimierten Referenztrajektorien entsprechen und anhand deren auf der Grundlage mathematischer Gleichungen die Solltrajektorien berechnet werden.

**15.** Verfahren nach einem der Ansprüche 12 bis 14, **dadurch gekennzeichnet, dass** Abweichungen zwischen dem Verlauf der jeweils, berechneten Solltrajektorie der Systemgrößen und dem zeitlichen Verlauf der jeweils, erfassten Istwerte der Systemgrößen, wie die Stellkräfte ($F_{zIst}$), Istposition ($z_{Ist}$) der Ein- und Auslagenrorrichtung (9), die Istgeschwindigkeit ($v_{zIst}$) der Ein- und Auslagervorrichtung (9) oder die Verformung des Mastes (6) in z-Richtung, mittels wenigstens einem Regler (60) korrigiert werden.

**16.** Verfahren nach einem der Ansprüche 12 bis 15, **dadurch gekennzeichnet, dass** der Regler (60) mit einer aus dem Soll-Ist-Vergleich der Solltrajektorie für die Sollposition ($z_{soll}$) und/oder Sollgeschwindigkeit ($v_{zsoll}$) und dem zeitlichen Verlauf für die Istposition ($z_{Ist}$) und/oder Istgeschwindigkeit ($v_{zIst}$) der Ein- und Auslagervorrichtung (9) errechneten Regelabweichung (e) beaufschlagt wird und vom Regler (60) nach einem Regelalgorithmus eine Differenzkraft ($\Delta F_z$) berechnet und der Solltrajektorie für die Sollstellkraft ($F_{zsoll}$) aufgeprägt wird und dass ein Stellglieder (56) der Ein- und Auslagervorrichtung (9) mit der um die Differenzkraft ($\Delta F_z$) korrigierten Sollstellkraft ($F_{zsoll}$) beaufschlagt wird.

**17.** Verfahren nach einem der Ansprüche 12 bis 16, **dadurch gekennzeichnet, dass** der Grenzwert durch die mechanischen und dynamischen Belastungen auf den Mast (6) und/oder die Ein- und Auslagervorrichtung (9) während des Betriebes als Systemgröße ($q_{zIst}$) erfasst und Istwerte dem Regler (60) aufgeprägt werden.

**18.** Verfahren nach Anspruch 12, **dadurch gekennzeichnet, dass** in einem Regler (64) zwischen dem Sollverlauf der berechneten Referenztrajektorie und dem Istverlauf der aus der ermittelten Systemgröße ($\bar{x}$) errechneten Referenztajektorie, eine Regelabweichung ermittelt und einem Rechnermodul (65) als Eingangsgröße ($v_3$) zugeführt werden und dass vom Rechnermodul (65) mittels mathematischer Gleichungen zwischen der Eingangsgröße ($v_3$) und einer Ausgangsgröße ($\xi_{1z}$) ein lineares Systemverhalten erwirkt sowie aus der Eingangsgröße ($v_3$) und der ermittelten Systemgröße ($\bar{x}$) die Stellkraft ($F_z$) berechnet werden, mit der das Stellglied (56) der Ein- und Auslagervorrichtung (9) beaufschlagt wird.

**19.** Verfahren nach Anspruch 12, **dadurch gekennzeichnet, dass** mehrere Referenztrajektorien für die Ein- und Auslagervorrichtung (9) festgelegt werden und über Mittel aus einer Liste festgelegter Referenztrajektorien die im Hinblick auf mechanische und dynamische Belastungen der Lasttragvorrichtung (2) und/oder Ein- und Auslagervorrichtung (9) jeweils am Besten geeignete und/oder auf den konstruktiven Aufbau der Lasttragvorrichtung (2) und/oder Ein- und Auslagervorrichtung (9) abgestimmte Referenztrajektorie ausgewählt wird.

**20.** Verfahren nach Anspruch 12, **dadurch gekennzeichnet, dass** ausschließlich eine Referenztrajektorie für die Ein- und Auslagervorrichtung (9) festgelegt wird und dass im Hinblick auf mechanische und dynamische Belastungen und/oder den konstruktiven Aufbau der Lasttragvorrichtung (2) und/oder Ein- und Auslagervorrichtung (9) abgestimmte Korrekturfaktoren ermittelt werden und dass über Mittel von einem Bediener aus einer Liste festgelegter Korrekturfaktoren ein Korrekturfaktor für die Ein- und Auslagervorrichtung (9) ausgewählt wird, mit dem die Referenztrajektorie der Ein- rund Auslagervorrichtung (9) überlagert werden.

**21.** Verfahren nach Anspruch 12, **dadurch gekennzeichnet, dass** die Referenztrajektorie als Funktion der Start- und Zielposition sowie maximal zulässiger mechanischer und dynamischer Grenzwerte in einem Speicher (35') hinterlegt und im Betrieb der Lasttragvorrichtung (2) in einen Rechnerbaustein (36'), insbesondere Mikroprozessor, eingelesen und durch Erfassen der Startposition sowie Vorgabe der Zielposition der Ein- und Auslagervorrichtung (9) auf Grundlage der Referenztrajektorie für die Ein- und Auslagervorrichtung (9) die Solltrajektorien der Systemgrößen berechnet werden.

**22.** Positionsregelungseinrichtung (22') zur Durchführung des Verfahrens nach einem der Ansprüche 12 bis 21, die zumindest einen mit einem übergeordneten Rechner verbundenen Regler (60) und eine flachheitsbasierte Vorsteuerung (25') mit einem Rechnerbaustein (36'), insbesondere Mikroprozessor, und mit diesem schaltungstechnisch verbundenen Speicher' (35') umfasst, **dadurch gekennzeichnet, dass** mit der Positionsregelungseinrichtung (22') eine durch einen Fahrantrieb (17) verstellbare Fahreinheit (4) und eine durch einen Hubantrieb (7) auf einem Mast (6) vertikal verstellbare Hubeinheit (8) der Lasttragvorrichtung (2) sowie eine Ein- und Auslagervorrichtung (9) für ein Ladegut (10) ansteuerbar ist, wobei im Speicher (35') zumindest eine im Hinblick auf die maximal zulässigen, mechanischen und dynamischen Belastungen der Lasttragvorrichtung (2) optimierte und im Hinblick auf die Verstellbewegung der ein Ladegut (10) manipulierenden Ein- und Auslagervorrichtung (9) zwischen einer Start- und Zielposition zeitminimierte Referenzirajektorie gespeichert ist und dass der Rechnerbaustein (36') ein Logiksystem (37') aufweist, mit dem aus der Referenztrajektorie auf Grundlage mathematischer Gleichungen eine Solltrajektorie für eine Systemgröße, zumindest für eine Stellgröße, insbesondere die Sollstellkraft ($F_{zsoll}$), der Ein-und Auslagervorrichtung (9) berechnet wird, und welcher über Steuereingänge (38') mit dem übergeordneten Rechner und über Steuerausgänge (39') mit einem Stellglied (56) der Ein-und Auslagervorrichtung (9) verbunden ist, wobei das Stellglied (56) der Ein- und Auslagervorrichtung (9) zum schwingungsfreien Erreichen deren Zielposition mit der aus der Solltrajektorie ermittelten Stellgröße beaufschlagt ist.

**23.** Lasttragvorrichtung (2), insbesondere Förderfahrzeug, in einem Regallagersystem, die eine Fahreinheit (4), einen an dieser biegesteif befestigten, lotrechten Mast (6) und eine entlang diesem verstellbare Hubeinheit (8) mit einer Ein- und Auslagervorrichtung (9) sowie eine Positionsregelungseinrichtung (22; 22'; 22") umfasst, **dadurch gekennzeichnet, dass** die Positionsregelungseinrichtung (22; 22'; 22") nach Anspruch 11 oder 22 ausgebildet ist.

**24.** Lasttragvorrichtung (2) nach Anspruch 23, **dadurch gekennzeichnet, dass** die Positionsregelungseinrichtung (22; 22'; 22") unmittelbar auf der Lasitragvorrichtung (2) befestigt ist.

## Claims

**1.** Method of controlling the movements of a load-bearing apparatus (2) based on two dimensions, **characterised in that**, for a travel unit (4) displaceable by means of a travel drive (17) and a lift unit (8) vertically displaceable on a mast (6) by means of a lift drive (7) of the load-bearing apparatus (2), reference trajectories optimised in terms of the maximum permissible mechanical and dynamic loads on the mast (6) and with respect to the electric travel and lift drives (7, 17) and minimised in terms of the travel time of the load-bearing apparatus (2) during operation between a starting and a target position are fixed and these are then adapted to the system behaviour of the load-bearing apparatus (2) so that, when the load-bearing apparatus (2) is travelling between the starting and target position during operation, the permissible deformation of the mast (6) is predefined at least by one mechanical threshold value and the mast deflection (q) and speed (q) thereof when the load-bearing apparatus (2) is in the target position equals zero, and the desired trajectories for system variables, at least for position variables, in particular the desired actuating forces ($F_{xdesired}$, $F_{ydesired}$) of the travel and lift units (4, 8), are calculated from reference trajectories optimised for the system behaviour of the load-bearing apparatus (2), and the travel and lift drives (7, 17) are cyclically acted on by the position variables and guided along the desired trajectories by automatically controlling them between the starting and target position so that the travel and lift units (4, 8) reach the target position free of vibration at the end of the movement.

**2.** Method as claimed in claim 1, **characterised in that** other desired trajectories for system variables are calculated on the basis of the reference trajectories, such as the desired position ($X_{desired}$, $Y_{desired}$) of the travel and lift unit (4, 8), the desired speed ($V_{xdesired,}$ $V_{ydesired}$) of the travel and lift unit (4, 8) or the deformation of the mast (6).

**3.** Method as claimed in claim 1 or 2, **characterised in that** the desired trajectories of the system variables are calculated on the basis of mathematical equations based on the two-dimensional control principle and their flat outputs describe an operand for the system behaviour of the load-bearing apparatus (2), and the curve plotting the flat outputs over time corresponds to the optimised reference trajectories and desired trajectories are calculated from these on the basis of mathematical equations.

**4.** Method as claimed in one of claims 1 to 3, **characterised in that** variances between the curve plotting the respectively calculated desired trajectory of the system variables and the curve plotting the respectively detected actual values of the system variables over time, such as the actuating forces ($F_{xactual}$, $F_{yactual}$), the actual position ($x_{actual}$, $y_{actual}$) of the travel and lift unit (4, 8), the actual speed ($v_{xactual}$, $v_{yactual}$) of the travel and lift unit (4, 8) or the deformation of the mast (6), are corrected by means of at least one controller (26, 27; 44).

**5.** Method as claimed in one of claims 1 to 4, **characterised in that** a control variance (e) calculated from the desired-actual comparison of the desired trajectory for the desired position ($x_{desired}$, $y_{desired}$) and/or desired speed ($v_{xdesired,}$ $v_{ydesired}$) and the curve plotting overtime for the actual position ($x_{actual}$, $y_{actual}$) and/or actual speed ($v_{xactual}$, $v_{yactual}$) of the travel and lift unit (4, 8) is applied to the controller (26, 27; 44) and differential forces ($\Delta F_x$, $\Delta F_y$) are calculated by the controller (26, 27; 44) on the basis of a control algorithm and superimposed on the desired trajectories for the desired actuating forces ($F_{xdesired,}$ $F_{ydesired}$), and desired actuating forces ($F_{xdesired}$, $F_{ydesired}$) corrected by the differential forces ($\Delta F_x$, $\Delta F_y$) are applied to actuator members (29, 30) of the travel and lift drives (7, 17).

6. Method as claimed in one of claims 1 to 5, **characterised in that** the threshold value is detected as a system variable ($q_{xactual}$) using the mechanical and dynamic loads on the mast (6) during operational travel and actual values are superimposed on the controller (44).

7. Method as claimed in claim 1, **characterised in that** control variances between the desired curve of the respectively calculated reference trajectory and the actual curve of the reference trajectory calculated from the respectively determined system variables ($\overline{X}$) are determined in a controller (64) and forwarded to a computer module (65) as input variables ($v_1$, $v_2$), and a linear system behaviour is worked out by the computer module (65) by means of mathematical equations between the input variables ($v_1$, $v_2$) and output variables ($\xi_{1x}$, $\xi_2$) and the actuating forces ($F_x$, $F_y$) are calculated from the input variables ($v_1$, $v_2$), and the determined system variables ($\overline{X}$) are applied to the actuator members (29, 30) of the travel and lift drives (7, 17).

8. Method as claimed in claim 1, **characterised in that** several reference trajectories are fixed respectively for the travel and lift unit (4, 8) and from a list of fixed reference trajectories, the reference trajectory selected for the travel and lift unit (4, 8) is the one offering the best match in terms of mechanical and dynamic loads of the load-bearing apparatus (2) and/or the structural design of the load-bearing apparatus (2).

9. Method as claimed in claim 1, **characterised in that** one reference trajectory each is set exclusively for the travel and lift unit (4, 8), and correction factors adapted in terms of the mechanical and dynamic loads of the load-bearing apparatus (2) and/or the structural design of the load-bearing apparatus (2) are determined, and a correction factor each for the travel and lift unit (4, 8) is selected via means by an operator from the list of fixed correction factors and superimposed on the reference trajectories for the travel and lift unit (4,8).

10. Method as claimed in claim 1, **characterised in that** the reference trajectories are stored in a memory (35) as a function of the starting and target position as well as the maximum permissible mechanical and dynamic threshold value and read into a computer module (36), in particular a microprocessor, during operation of the load-bearing apparatus (2), and the desired trajectories of the system variables are calculated by detecting the starting position and predefining the target position of the travel and lift units (4, 8) on the basis of the reference trajectories for the travel and lift units (4, 8).

11. Position regulating device (22) for implementing the method as claimed in one of claims 1 to 10, comprising at least one controller (26, 27; 44) connected to a higher-level computer and a two-dimensionally based pre-control (25) with a computer module (36), in particular a microprocessor, and a memory (35) connected thereto in a circuit, **characterised in that** a travel unit (4) displaceable by means of a travel drive (17) and a lift unit (4, 8) vertically displaceable on a mast (6) by means of a lift drive (7) of the load-bearing apparatus (2) can be activated by the position regulating device (22), and the reference trajectories for at least the travel and lift unit (4, 8) optimised in terms of the maximum permissible mechanical and dynamic loads on the mast (6) and with respect to the electric travel and lift drives (7, 17) and minimised in terms of the travel time of the load-bearing apparatus (2) during operation between a starting and a target position are stored in the memory (35), and the computer module (36) has a logic system (37) by means of which desired trajectories for system variables, at least for position variables, in particular desired actuating forces ($F_{xdesired}$, $F_{ydesired}$) of the travel and lift units (4, 8), are calculated from the reference trajectories on the basis of mathematical equations, and which is connected via control inputs (38) to the higher-level computer and via control outputs (39) to actuator members (29, 30) of the travel and lift drives (7, 17), and the actuator members (29, 30) of the travel and lift drives (7, 17) reach their target positions largely free of vibration on the basis of the position variables determined from the desired trajectories.

12. Method of controlling the movement of a load-bearing apparatus (2) based on two dimensions, **characterised in that** at least one reference trajectory which is optimised in terms of the maximum permissible loads of a load-bearing apparatus (2) comprising a travel unit (4) and a lift unit (8) vertically displaceable on a mast (6) and minimised in terms of the time taken by a loading and unloading device (9) manipulating a load object (10) to move between a starting and target position is fixed and this is adapted to the system behaviour of the load-bearing apparatus (2) so that the permissible deformation of the mast (6) is predefined by at least one mechanical threshold value during the travelling movement of the loading and unloading device (9) between the starting and target position, and the mast deflection ($q_z$) and the speed thereof ($q_z$) equals zero when the loading and unloading device (9) is in the target position, and at least one desired trajectory for a system variable, at least for a position variable, in particular the desired actuating force ($F_{zdesired}$) of the loading and unloading device (9), is calculated from the reference trajectory optimised for the system behaviour of the load-bearing apparatus (2) and the travelling movement of the loading and unloading device (9), and an actuator drive (55) of the loading and unloading device (9) receives the position variable cyclically and is guided along the desired trajectory between the starting and target position by means of its controller so that the loading and unloading device (9) reaches the target position free of vibration at the end of the movement.

**13.** Method as claimed in claim 12, **characterised in that** other desired trajectories for system variables are calculated from the reference trajectories, such as the desired position ($z_{desired}$) of the loading and unloading device (9), the desired speed ($v_{zdesired}$) of the loading and unloading device (9) or the deformation of the mast (6) in the z direction.

**14.** Method as claimed in claim 12 or 13, **characterised in that** the desired trajectories for the system variables are calculated on the basis of mathematical equations based on the two-dimensional control principle, and their flat outputs describe am operand for the system behaviour of the load-bearing device (2), and the curve plotting the flat outputs over time correspond to the optimised reference trajectories and the desired trajectories are calculated from them on the basis of mathematical equations.

**15.** Method as claimed in one of claims 12 to 14, **characterised in that** variances between the curve plotting the respectively calculated desired trajectory of the system variables and the curve plotting the detected actual values of the system variables over time, such as the actuating forces ($F_{zactual}$), actual position ($z_{actual}$) of the loading and unloading device (9), the actual speed ($v_{zactual}$) of the loading and unloading device (9) or the deformation of the mast (6) in the z direction, are corrected by means of at least one controller (60).

**16.** Method as claimed in one of claims 12 to 15, **characterised in that** the controller (60) receives the control variance (e) calculated from the desired-actual comparison of the desired trajectory for the desired position ($z_{desired}$) and/or desired speed ($v_{zdesired}$) and the curve plotting the actual position ($z_{actual}$) and/or actual speed ($v_{zactual}$) over time of the loading and unloading device (9), and the controller (60) calculates a differential force ($\Delta F_z$) on the basis of a control algorithm and superimposes it on the desired trajectory for the desired actuating force ($F_{zdesired}$), and an actuator member (56) of the loading and unloading device (9) receives the desired actuating force ($F_{zdesired}$) corrected by the differential force ($\Delta F_z$).

**17.** Method as claimed in one of claims 12 to 16, **characterised in that** the threshold value is detected as a system variable on the basis of the mechanical and dynamic loads on the mast (6) and/or the loading and unloading device (9) during operation and actual values ($q_{zactual}$) are superimposed on the controller (60).

**18.** Method as claimed in claim 12, **characterised in that** a control variance is determined between the desired curve plotting the calculated reference trajectory and the actual curve of the reference trajectory calculated from the determined system variable ($\overline{X}$) in a controller (64) and is forwarded to a computer module (65) as an input variable ($v_3$), and the computer module (65) works out a linear system behaviour by means of mathematical equations between the input variable ($v_3$) and an output variable ($\xi_{1z}$ and calculates the actuating force ($F_z$) from the input variable ($v_3$) and the determined system variable ($\overline{X}$), which are then applied to the actuator member (56) of the loading and unloading device (9).

**19.** Method as claimed in claim 12, **characterised in that** several reference trajectories are fixed for the loading and unloading device (9) and a reference trajectory adapted so as to offer the best match with the mechanical and dynamic loads of the load-bearing apparatus (2) and/or a loading and unloading device (9) and/or the structural design of the load-bearing device (2) and/or loading and unloading device (9) is selected from a list of fixed reference trajectories via means.

**20.** Method as claimed in claim 12, **characterised in that** one reference trajectory exclusively is fixed for the loading and unloading device (9) and a correction factor adapted to the mechanical and dynamic loads and/or the structural design of the load-bearing apparatus (2) and/or the loading and unloading device (9) is determined, and a correction for the loading and unloading device (9) is selected via means by an operator from a list of fixed correction factors and superimposed on the reference trajectory of the loading and unloading device (9).

**21.** Method as claimed in claim 12, **characterised in that** the reference trajectory as a function of the starting and target position and the maximum permissible mechanical and dynamic threshold value is stored in a memory (35') and read into a computer module (36'), in particular a microprocessor, during operation of the load-bearing apparatus (2), and the desired trajectories of the system variables are calculated by detecting the starting position and predefining the target position of the loading and unloading device (9) on the basis of the reference trajectory for the loading and unloading device (9).

**22.** Position regulating device (22') for implementing the method as claimed in one of claims 12 to 21, comprising at least one controller (60) connected to a higher-level computer and a pre-controller (25') with a computer module (36'), in particular a microprocessor, based on a two-dimensional system, and a memory (35') connected to it in a circuit, **characterised in that** a travel unit (4) displaceable by means of a travel drive (17) and a lift unit (8) vertically displaceable on a mast (6) by means of a lift drive (7) of the load-bearing apparatus (2) as well as a loading and unloading device (9) for a load object (10) can be activated by the position regulating device (22'), and at least one reference trajectory optimised to the maximum permissible mechanical and dynamic loads on the load-bearing apparatus (2) and minimised in terms of the time taken by the loading and unloading device (9) manipulating a load object (10) to move between a starting and target position is stored in the memory (35'), and the computer module (36') has a logic system (37') by means of which a desired trajectory for a system variable, at least for a position variable, in particular the desired actuating force ($F_{zdesired}$), of the loading and unloading device (9) is calculated from the reference trajectory on the basis of mathematical equations, and which is connected via control inputs (38') to the higher-level computer and via control outputs (39') to an actuator member (56) of the loading and unloading device (9), and the actuator member (56) of the loading and unloading device (9) reaches its target position free of vibration on the basis of the position variable determined from the desired trajectory.

**23.** Load-bearing apparatus (2), in particular a conveyor vehicle in a shelf storage system, comprising a travel unit (4), a vertical mast (6) secured to it so as to be bending resistant, and a lift unit (8) displaceable along it comprising a loading and unloading device (9) and a position regulating device (22; 22'; 22"), **characterised in that** the position regulating device (22; 22'; 22") is as claimed in claim 11 or 22.

**24.** Load-bearing apparatus (2) as claimed in claim 23, **characterised in that** the position regulating device (22; 22'; 22") is secured directly to the load-bearing apparatus (2).

## Revendications

**1.** Procédé de commande de mouvement, basé sur la planéité, d'un système porte-charge (2), **caractérisé en ce que**, pour une unité de déplacement horizontal (4), apte à être déplacée par un système d'entraînement horizontal (17) et une unité de levage (8), apte à être déplacée verticalement sur un mât (6) par un système d'entraînement vertical (7), du système porte-charge (2), sont définies des trajectoires de référence, optimisées sur le plan des sollicitations mécaniques et dynamiques maximales autorisées, exercées sur le mât (6) et sur les systèmes d'entraînement horizontal et vertical (7, 17) électriques, et optimisées dans le sens d'une diminution du temps pour le déplacement de service du système porte-charge (2) entre une position de départ et une position cible, et lesdites trajectoires de référence sont adaptées au comportement du système porte-charge (2), de telle sorte que pendant le déplacement de service du système porte-charge (2) entre la position de départ et la position cible, la déformation admissible du mât (6) est prédéfinie au moins par une valeur limite mécanique, et la déviation (q) du mât et la vitesse ($\dot{q}$) de celle-ci dans la position cible du système porte-charge (2) sont égales à zéro, et **en ce que**, à partir des trajectoires de référence optimisées sur le comportement du système porte-charge (2), sont calculées des trajectoires théoriques pour des grandeurs du système, au moins pour des grandeurs de réglage, en particulier les forces de réglage théoriques (Fxsoll, Fysoll) de l'unité de déplacement horizontal (4) et de l'unité de levage (8), et les systèmes d'entraînement horizontal et vertical (7, 17) sont sollicités cycliquement avec les grandeurs de réglage et sont guidés, par le réglage de celles-ci, entre la position de départ et la position cible le long des trajectoires théoriques, de telle sorte que, à la fin du déplacement, la position cible de l'unité de déplacement horizontal (4) et de l'unité de levage (8) est atteinte sans oscillation.

**2.** Procédé selon la revendication 1, **caractérisé en ce que**, à l'appui des trajectoires de référence, sont calculées d'autres trajectoires théoriques pour des grandeurs du système, telles que la position théorique (xsoll, ysoll) de l'unité de déplacement horizontal (4) et de l'unité de levage (8), la vitesse théorique (vxsoll, vysoll) de l'unité de déplacement horizontal (4) et de l'unité de levage (8) ou la déformation du mât (6).

**3.** Procédé selon la revendication 1 ou 2, **caractérisé en ce que** les trajectoires théoriques des grandeurs du système sont calculées sur la base d'équations mathématiques selon le principe de la commande basée sur la planéité, et les résultats plans de ceux-ci décrivent une grandeur de calcul pour le comportement du système porte-charge (2), l'évolution dans le temps des résultats plans correspondant aux trajectoires de référence optimisées, et les trajectoires théoriques étant calculées à l'appui de ceux-ci sur la base d'équations mathématiques.

**4.** Procédé selon l'une quelconque des revendications 1 à 3, **caractérisé en ce que** des divergences entre l'évolution de la trajectoire théorique des grandeurs du système, calculée pour chaque unité, et l'évolution dans le temps des valeurs réelles, enregistrées pour chaque unité pour les grandeurs du système, telles que les forces de réglage (Fxist, Fyist), la position réelles (xist, yist) de l'unité de déplacement horizontal (4) et de l'unité de levage (8), la vitesse réelles (vxist, vyist) de l'unité de déplacement horizontal (4) et de l'unité de levage (8) ou la déformation du mât (6), sont corrigées au moyen d'au moins un régulateur (26, 27 ; 44).

**5.** Procédé selon l'une quelconque des revendications 1 à 4, **caractérisé en ce que** le régulateur (26, 27 ; 44) est sollicité par un écart de réglage (e), calculé à partir de la comparaison théorique-réelle de la trajectoire théorique pour la position théorique (xsoll, ysoll) et/ou la vitesse théorique (vxsoll, vysoll) et l'évolution dans le temps de la position réelle (xist, yist) et/ou la vitesse réelle (vxist, vyist) de l'unité de déplacement horizontal (4) et de l'unité de levage (8), et des forces différentielles ($\Delta$Fx, $\Delta$Fy) sont calculées par le régulateur (26, 27 ; 44) selon un algorithme de réglage et sont appliquées aux trajectoires théoriques pour les forces de réglage théoriques (Fxsoll, Fysoll), et **en ce que** des organes de réglage (29, 30) des systèmes d'entraînement horizontal et vertical (7, 17) sont sollicités avec les forces de réglage théoriques (Fxsoll, Fysoll) corrigées avec les forces différentielles ($\Delta$Fx, $\Delta$Fy).

**6.** Procédé selon l'une quelconque des revendications 1 à 5, **caractérisé en ce que** la valeur limite est enregistrée comme grandeur du système (qxist) moyennant les sollicitations mécaniques et dynamiques exercées sur le mât (6) pendant le déplacement de service, et des valeurs réelles sont appliquées au régulateur (44).

**7.** Procédé selon la revendication 1, **caractérisé en ce que** des écarts de réglage, entre l'évolution théorique de la trajectoire de référence calculée pour chaque unité et l'évolution réelle des trajectoires de référence calculées à partir des grandeurs du système ($\overline{x}$) déterminées pour chaque unité, sont déterminés dans un régulateur (64) et sont acheminés en tant que grandeurs d'entrée (v1, v2) vers un module de calcul (65), et **en ce que** le module de calcul (65) induit un comportement linéaire du système au moyen d'équations mathématiques entre les grandeurs d'entrée (v1, v2) et des grandeurs de sortie ($\xi$1x, $\xi$2), et à partir des grandeurs d'entrée (v1, v2) et des grandeurs du système ($\overline{x}$) déterminées sont calculées les forces de réglage (Fx, Fy), par lesquelles sont sollicités les organes de réglage (29, 30) des systèmes d'entraînement horizontal et vertical (7, 17).

**8.** Procédé selon la revendication 1, **caractérisé en ce que** plusieurs trajectoires de référence sont définies respectivement pour l'unité de déplacement horizontal (4) et l'unité de levage (8), et, dans une liste de trajectoires de référence définies, est sélectionnée, par l'intermédiaire de moyens, la trajectoire de référence, la mieux appropriée sur le plan des sollicitations mécaniques et dynamiques du système porte-charge (2) et/ou ajustée à la structure de construction du système porte-charge (2), pour l'unité de déplacement horizontal (4) et l'unité de levage (8).

**9.** Procédé selon la revendication 1, **caractérisé en ce qu'**exclusivement une trajectoire de référence est définie pour l'unité de déplacement horizontal (4) et l'unité de levage (8) et **en ce que** des facteurs de correction, ajustés sur le plan des sollicitations mécaniques et dynamiques du système porte-charge (2) et/ou à la structure de construction du système porte-charge (2), sont déterminés, et **en ce que**, dans une liste de facteurs de correction définis, un utilisateur sélectionne, par l'intermédiaire de moyens, respectivement pour l'unité de déplacement horizontal (4) et l'unité de levage (8), un facteur de correction qui est superposé aux trajectoires de référence de l'unité de déplacement horizontal (4) et de l'unité de levage (8).

**10.** Procédé selon la revendication 1, **caractérisé en ce que** les trajectoires de référence en tant que fonction de la position de départ et de la position cible et des valeurs limites mécaniques et dynamiques maximales admises sont stockées dans une mémoire (35) et, en cours de service du système porte-charge (2), sont chargées dans un composant de calcul (36), en particulier un microprocesseur, et les trajectoires théoriques des grandeurs du système sont calculées sur la base des trajectoires de référence pour l'unité de déplacement horizontal (4) et l'unité de levage (8), moyennant l'enregistrement de la position de départ, ainsi que la définition de la position cible de l'unité de déplacement horizontal (4) et de l'unité de levage (8).

**11.** Dispositif de réglage de la position (22) destiné à la mise en oeuvre du procédé selon l'une quelconque des revendications 1 à 10, qui comporte au moins un régulateur (26, 27 ; 44), relié à un ordinateur prioritaire, et une commande pilote (25) basée sur la planéité, avec un composant de calcul (36), en particulier un microprocesseur, et avec une mémoire (35) reliée à celui-ci par une technique de connexion, **caractérisé en ce** , dans le système porte-charge (2), une unité de déplacement horizontal (4), apte à être déplacée par l'intermédiaire d'un système d'entraînement horizontal (17), et une unité de levage (8), apte à être déplacée verticalement sur un mât (6) par l'intermédiaire d'un système d'entraînement vertical (7), peuvent être activées par le dispositif de réglage de la position (22), sachant que dans la mémoire (35) sont stockées des trajectoires de référence au moins pour l'unité de déplacement horizontal (4) et l'unité de levage (8), lesquelles sont optimisées sur le plan des sollicitations mécaniques et dynamiques maximales admises, exercées sur le mât (6) et sur les systèmes d'entraînement horizontal et vertical (7, 17) électriques, et optimisées dans le sens d'une diminution du temps pour le déplacement de service du système porte-charge (2) entre une position de départ et une position cible, et en ce que le composant de calcul (36) comporte un système logique (37), par lequel, à partir des trajectoires de référence sur la base d'équations mathématiques, sont calculées des trajectoires théoriques pour des grandeurs du système, au moins pour des grandeurs de réglage, en particulier les forces de réglage théoriques (Fxsoll, Fysoll) de l'unité de déplacement horizontal (4) et de l'unité de levage (8), et lequel est relié à l'ordinateur prioritaire via des entrées de commande (38), et à des organes de réglage (29, 30) des systèmes d'entraînement horizontal et vertical (7, 17) via des sorties de commande (39), sachant que les organes de réglage (29, 30) des systèmes d'entraînement horizontal et vertical (7, 17) sont sollicitées par des grandeurs de réglage déterminées à partir des trajectoires théoriques jusqu'à ce que lesdits systèmes d'entraînement atteignent leur position cible, en grande partie sans oscillation.

**12.** Procédé de commande de mouvement, basé sur la planéité, d'un système porte-charge (2), **caractérisé en ce qu'**il est défini au moins une trajectoire de référence, optimisée sur le plan des sollicitations mécaniques et dynamiques maximales admises du système porte-charge (2) comportant une unité de déplacement horizontal (4) et une unité de levage (8) apte à être déplacée verticalement sur un mât (6), et optimisée dans le sens d'une diminution du temps pour le mouvement de déplacement entre une position de départ et une position cible d'un dispositif de chargement et de transfert (9) destiné à manipuler un produit de stockage (10), et ladite trajectoire de référence est adaptée en outre au comportement du système porte-charge (2), de telle sorte que pendant le mouvement de déplacement du dispositif de chargement et de transfert (9) entre la position de départ et la position cible, la déformation admissible du mât (6) est prédéfinie au moins par une valeur limite mécanique, et la déviation (qz) du mât et la vitesse ($\dot{q}z$) de celle-ci dans la position cible du dispositif de chargement et de transfert (9) sont égales à zéro, et **en ce que**, à partir de la trajectoire de référence optimisée sur le comportement du système porte-charge (2) et sur le mouvement de déplacement du dispositif de chargement et de transfert (9), est calculée au moins une trajectoire théorique pour une grandeur du système, au moins pour une grandeur de réglage, en particulier la force de réglage théorique (Fzsoll) du dispositif de chargement et de transfert (9), et un servomoteur (55) du dispositif de chargement et de transfert (9) est sollicité cycliquement avec la grandeur de réglage et est guidé, par le réglage de celle-ci, entre le position de départ et la position cible le long la trajectoire théorique, de telle sorte que, à la fin du mouvement, la position cible du dispositif de chargement et de transfert (9) est atteinte sans oscillation.

**13.** Procédé selon la revendication 12, **caractérisé en ce que**, à l'appui de la trajectoire de référence, sont calculées d'autres trajectoires théoriques pour des grandeurs du système, telles que la position théorique (zsoll) du dispositif de chargement et de transfert (9), la vitesse théorique (vzsoll) du dispositif de chargement et de transfert (9) ou la déformation du mât (6) dans la direction z.

**14.** Procédé selon la revendication 12 ou 13, **caractérisé en ce que** les trajectoires théoriques des grandeurs du système sont calculées sur la base d'équations mathématiques selon le principe de la commande basée sur la planéité, et les résultats plans de ceux-ci décrivent une grandeur de calcul pour le comportement du système porte-charge (2), l'évolution dans le temps des résultats plans correspondant aux trajectoires de référence optimisées, et les trajectoires théoriques étant calculées à l'appui de ceux-ci sur la base d'équations mathématiques.

**15.** Procédé selon l'une quelconque des revendications 12 à 14, **caractérisé en ce que** des divergences entre l'évolution de la trajectoire théorique des grandeurs du système, calculée dans chaque cas, et l'évolution dans le temps des valeurs réelles, enregistrées dans chaque cas pour les grandeurs du système, telles que les forces de réglage (Fzist), la position réelles (zist) du dispositif de chargement et de transfert (9), la vitesse réelles (vzist) du dispositif de chargement et de transfert (9) ou la déformation du mât (6) dans la direction z, sont corrigées au moyen d'au moins un régulateur (60).

**16.** Procédé selon l'une quelconque des revendications 12 à 15, **caractérisé en ce que** le régulateur (60) est sollicité par un écart de réglage (e), calculé à partir de la comparaison théorique-réelle de la trajectoire théorique pour la position théorique (zsoll) et/ou la vitesse théorique (vzsoll) et l'évolution dans le temps de la position réelle (zist) et/ou la vitesse réelle (vzist) du dispositif de chargement et de transfert (9), et une force différentielle ($\Delta$Fz) est calculée par le régulateur (60) selon un algorithme de réglage et est appliquée à la trajectoire théorique pour la force de réglage théorique (Fzsoll), et **en ce qu'**un organe de réglage (56) du dispositif de chargement et de transfert (9) est sollicité avec la force de réglage théorique (Fzsoll) corrigée avec la force différentielle (ΔFz).

**17.** Procédé selon l'une quelconque des revendications 12 à 16, **caractérisé en ce que** la valeur limite est enregistrée comme grandeur du système (qzist) moyennant les sollicitations mécaniques et dynamiques exercées sur le mât (6) et/ou le dispositif de chargement et de transfert (9) en cours de service, et des valeurs réelles sont appliquées au régulateur (60).

**18.** Procédé selon la revendication 12, **caractérisé en ce qu'**un écart de réglage, entre l'évolution théorique de la trajectoire de référence calculée et l'évolution réelle de la trajectoire de référence calculée à partir de la grandeur du système ($\overline{x}$) déterminée, est déterminé dans un régulateur (64) et est acheminé en tant que grandeur d'entrée (v3) vers un module de calcul (65), et **en ce que** le module de calcul (65) induit un comportement linéaire du système au moyen d'équations mathématiques entre la grandeur d'entrée (v3) et une grandeur de sortie (ξ1z), et à partir de la grandeur d'entrée (v3) et de la grandeur du système ($\overline{x}$) déterminée est calculée la force de réglage (Fz), par laquelle est sollicité l'organe de réglage (56) du dispositif de chargement et de transfert (9).

**19.** Procédé selon la revendication 12, **caractérisé en ce que** plusieurs trajectoires de référence sont définies pour le dispositif de chargement et de transfert (9), et, dans une liste de trajectoires de référence définies, est sélectionnée, par l'intermédiaire de moyens, la trajectoire de référence, la mieux appropriée sur le plan des sollicitations mécaniques et dynamiques du système porte-charge (2) et/ou du dispositif de chargement et de transfert (9) et/ou ajustée à la structure de construction du système porte-charge (2) et/ou du dispositif de chargement et de transfert (9).

**20.** Procédé selon la revendication 12, **caractérisé en ce qu'**exclusivement une trajectoire de référence est définie pour le dispositif de chargement et de transfert (9) et **en ce que** des facteurs de correction, ajustés sur le plan des sollicitations mécaniques et dynamiques et/ou à la structure de construction du système porte-charge (2) et/ou du dispositif de chargement et de transfert (9), sont déterminés, et **en ce que**, dans une liste de facteurs de correction définis, un utilisateur sélectionne, par l'intermédiaire de moyens, un facteur de correction pour le dispositif de chargement et de transfert (9), lequel est superposé à la trajectoire de référence du dispositif de chargement et de transfert (9).

**21.** Procédé selon la revendication 12, **caractérisé en ce que** la trajectoire de référence en tant que fonction de la position de départ et de la position cible et des valeurs limites mécaniques et dynamiques maximales admises sont stockées dans une mémoire (35') et, en cours de service du système porte-charge (2), sont chargées dans un composant de calcul (36'), en particulier un microprocesseur, et les trajectoires théoriques des grandeurs du système sont calculées sur la base de la trajectoire de référence pour le dispositif de chargement et de transfert (9), moyennant l'enregistrement de la position de départ, ainsi que la définition de la position cible du dispositif de chargement et de transfert (9).

**22.** Dispositif de réglage de la position (22') destiné à la mise en oeuvre du procédé selon l'une quelconque des revendications 12 à 21, qui comporte au moins un régulateur (60), relié à un ordinateur prioritaire, et une commande pilote (25') basée sur la planéité, avec un composant de calcul (36'), en particulier un microprocesseur, et avec une mémoire (35') reliée à celui-ci par une technique de connexion, **caractérisé en ce que**, dans le système porte-charge (2), une unité de déplacement horizontal (4), apte à être déplacée par l'intermédiaire d'un système d'entraînement horizontal (17), et une unité de levage (8), apte à être déplacée verticalement sur un mât (6) par l'intermédiaire d'un système d'entraînement vertical (7), ainsi qu'un dispositif de chargement et de transfert (9) pour un produit de stockage (10) peuvent être activés par le dispositif de réglage de la position (22'), sachant que dans la mémoire (35') est stockée au moins une trajectoire de référence, optimisée sur le plan des sollicitations mécaniques et dynamiques maximales admises du système porte-charge (2) et optimisées dans le sens d'une diminution du temps pour le mouvement de déplacement entre une position de départ et une position cible du dispositif de chargement et de transfert (9) destiné à manipuler un produit de stockage (10), et **en ce que** le composant de calcul (36') comporte un système logique (37'), par lequel, à partir de la trajectoire de référence sur la base d'équations mathématiques, est calculée une trajectoire théorique pour une grandeur du système, au moins pour une grandeur de réglage, en particulier la force de réglage théorique (Fzsoll) du dispositif de chargement et de transfert (9), et lequel est relié à l'ordinateur prioritaire via des entrées de commande (38'), et à un organe de réglage (56) du dispositif de chargement et de transfert (9) via des sorties de commande (39'), sachant que l'organe de réglage (56) du dispositif de chargement et de transfert (9) est sollicité par des grandeurs de réglage déterminées à partir de la trajectoire théorique jusqu'à ce que ledit dispositif de chargement et de transfert atteigne sa position cible sans oscillation.

**23.** Système porte-charge (2), en particulier véhicule de transport, dans un système de stockage à rayonnages, qui comporte une unité de déplacement horizontal (4), un mât (6) vertical, fixé de manière résistante à la flexion contre cette dernière, et une unité de levage (8), apte à être déplacée le long dudit mât et munie d'un dispositif de chargement et de transfert (9), ainsi qu'un dispositif de réglage de la position (22 ; 22' ; 22"), **caractérisé en ce que** le dispositif de réglage de la position (22 ; 22' ; 22") est réalisé selon la revendication 11 ou 22.

**24.** Système porte-charge (2) selon la revendication 23, **caractérisé en ce que** le dispositif de réglage de la position (22 ; 22' ; 22") est fixé directement au système porte-charge (2).

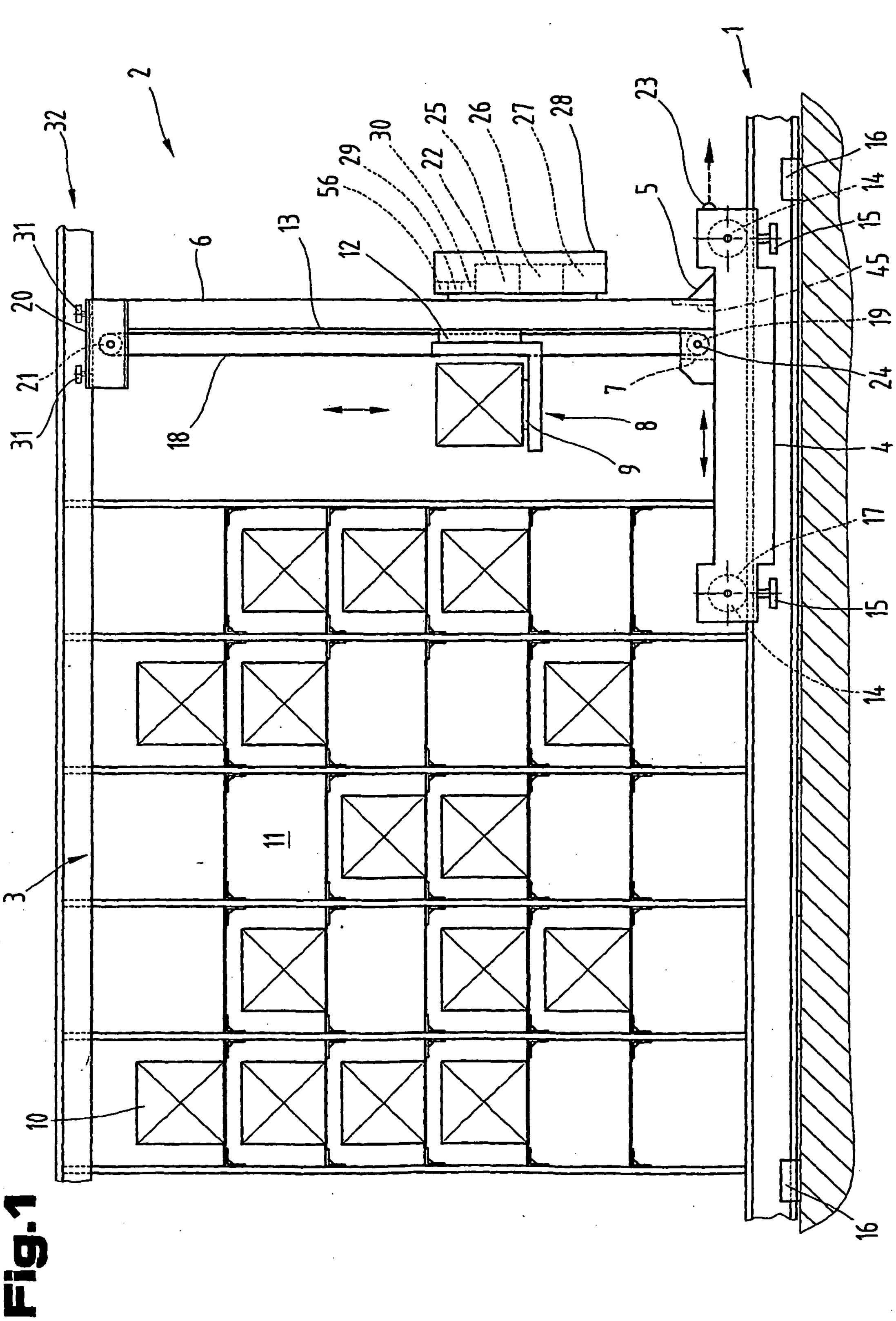
1
2
3
4
5
6
7
8
9
10
11
12
13
14
14
15
15
16
16
17
18
19
20
21
22
23
24
25
26
27
28
29
30
31
31
32
45
56

Fig.1

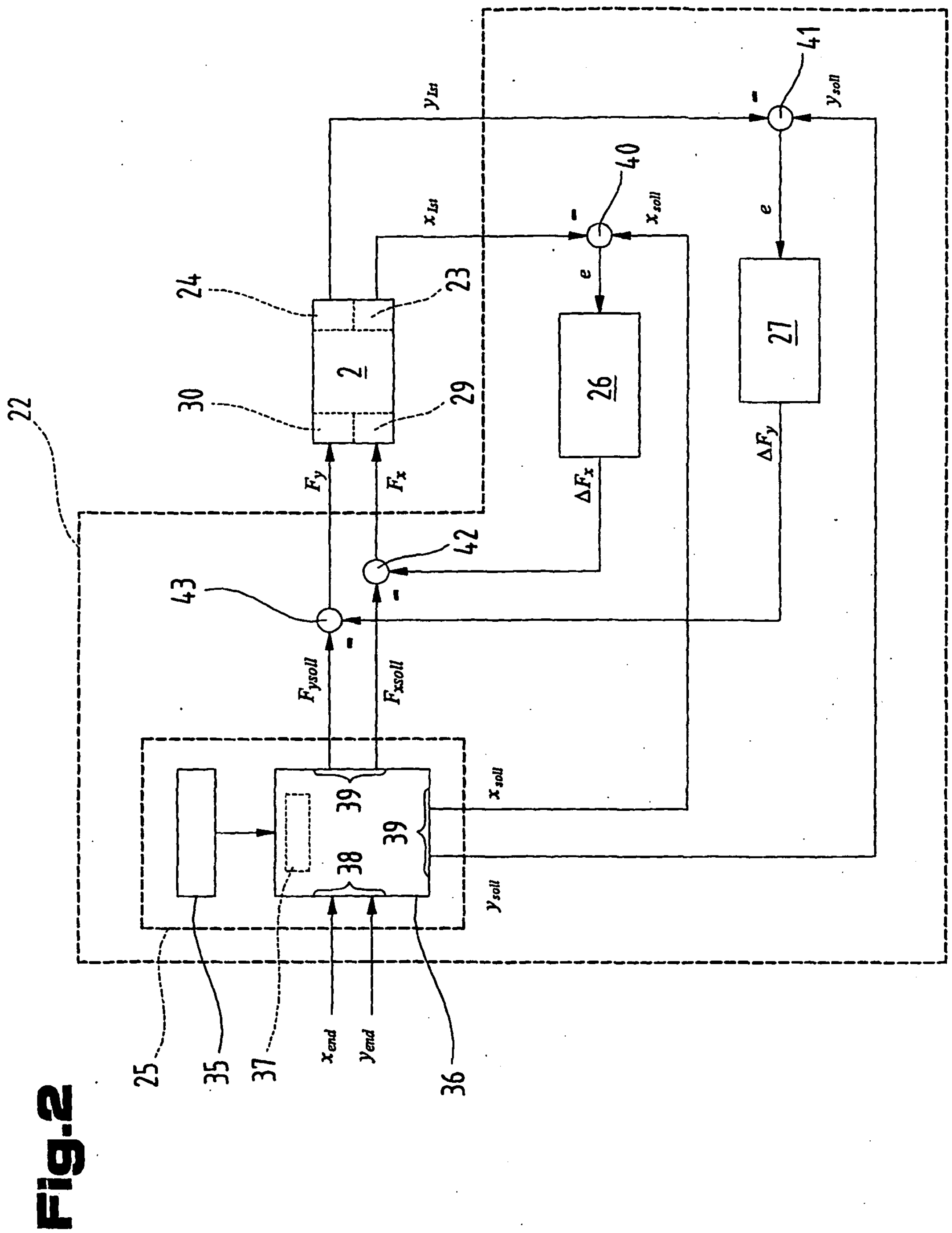
22
2
23
24
29
30
26
27
40
41
42
43
25
35
36
37
38
39
39
$x_{Ist}$
$y_{Ist}$
$x_{soll}$
$y_{soll}$
$x_{soll}$
$y_{soll}$
e
e
$F_y$
$F_x$
$\Delta F_x$
$\Delta F_y$
$F_{ysoll}$
$F_{xsoll}$
$x_{end}$
$y_{end}$

Fig.2

**Fig.3**

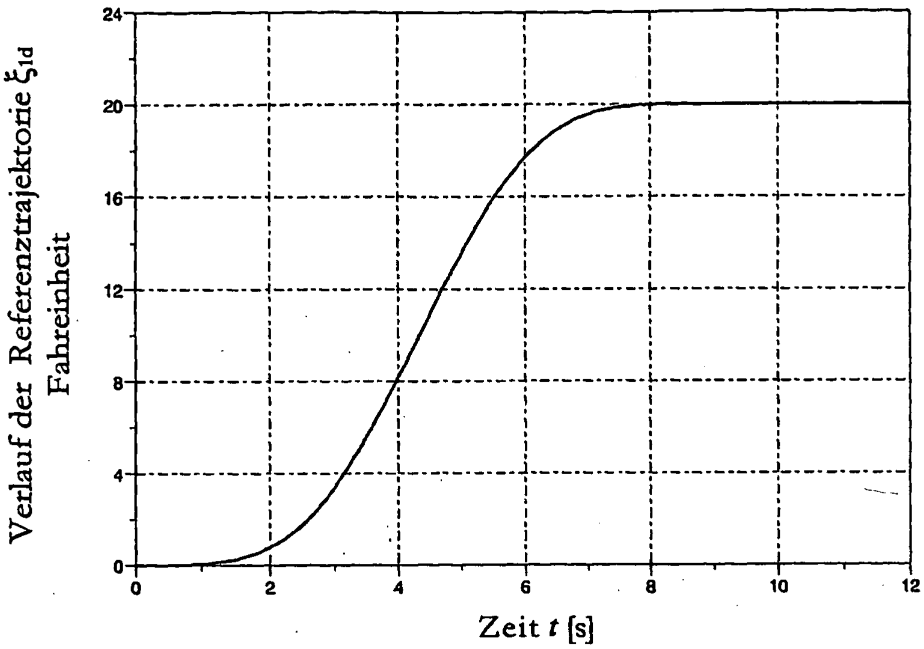

Verlauf der Referenztrajektorie $\xi_{1d}$
Fahreinheit
24
20
16
12
8
4
0
0
2
4
6
8
10
12
Zeit $t$ [s]


**Fig.4**

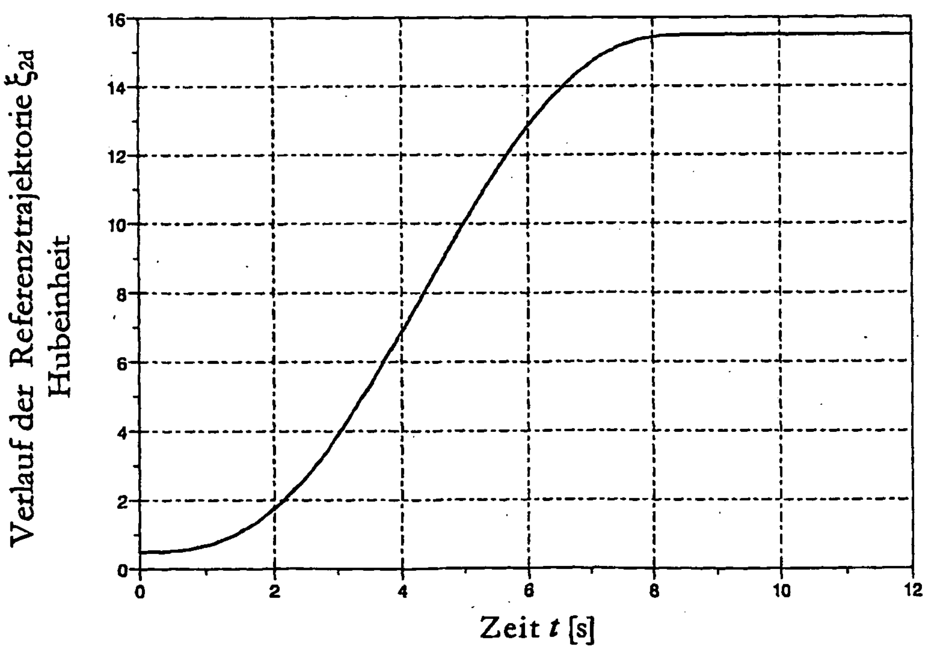

Verlauf der Referenztrajektorie $\xi_{2d}$
Hubeinheit
16
14
12
10
8
6
4
2
0
0
2
4
6
8
10
12
Zeit $t$ [s]

**Fig.5**

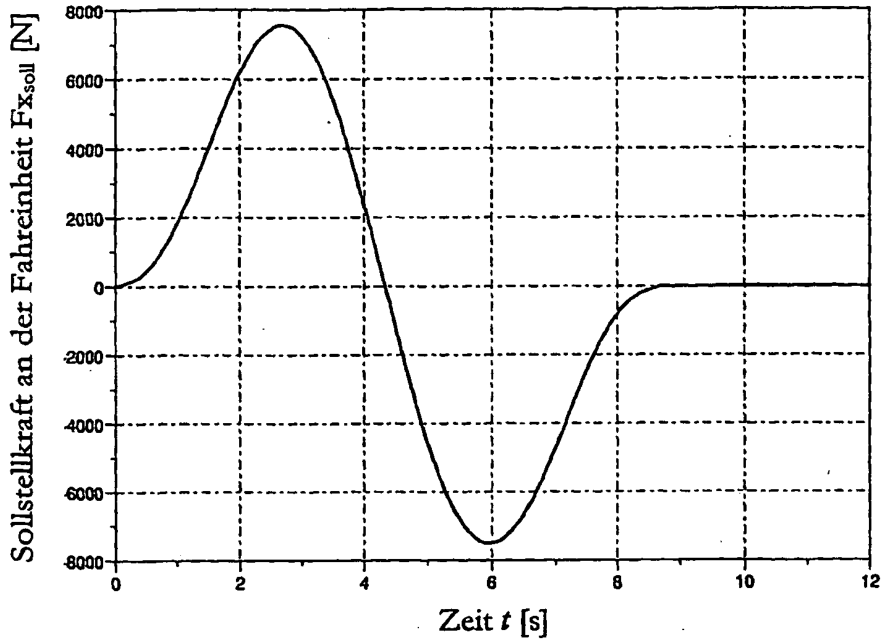
Sollstellkraft an der Fahreinheit $Fx_{soll}$ [N]
8000
6000
4000
2000
0
-2000
-4000
-6000
-8000
0
2
4
6
8
10
12
Zeit t [s]

**Fig.6**

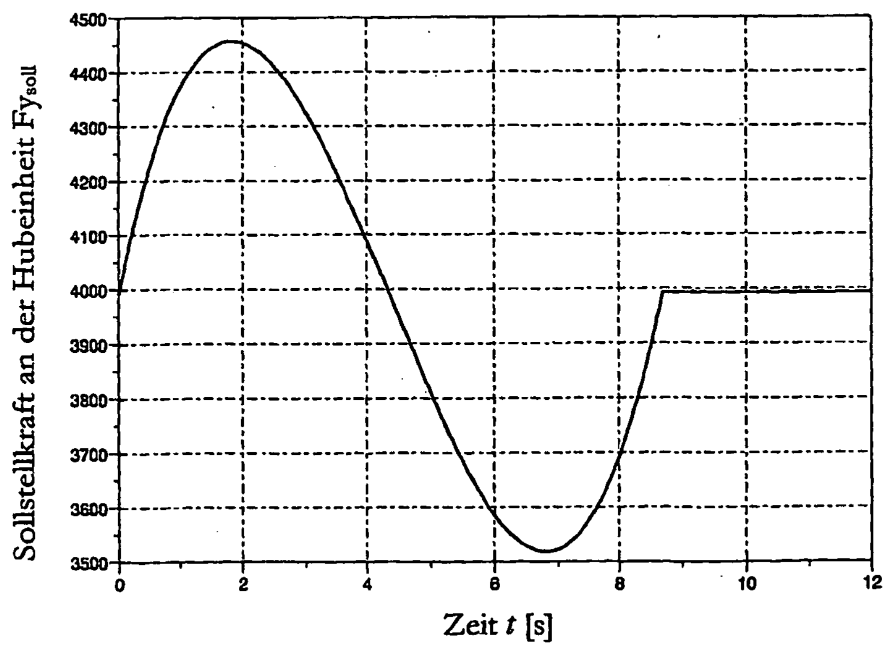
Sollstellkraft an der Hubeinheit $Fy_{soll}$
4500
4400
4300
4200
4100
4000
3900
3800
3700
3600
3500
0
2
4
6
8
10
12
Zeit t [s]

**Fig.7**

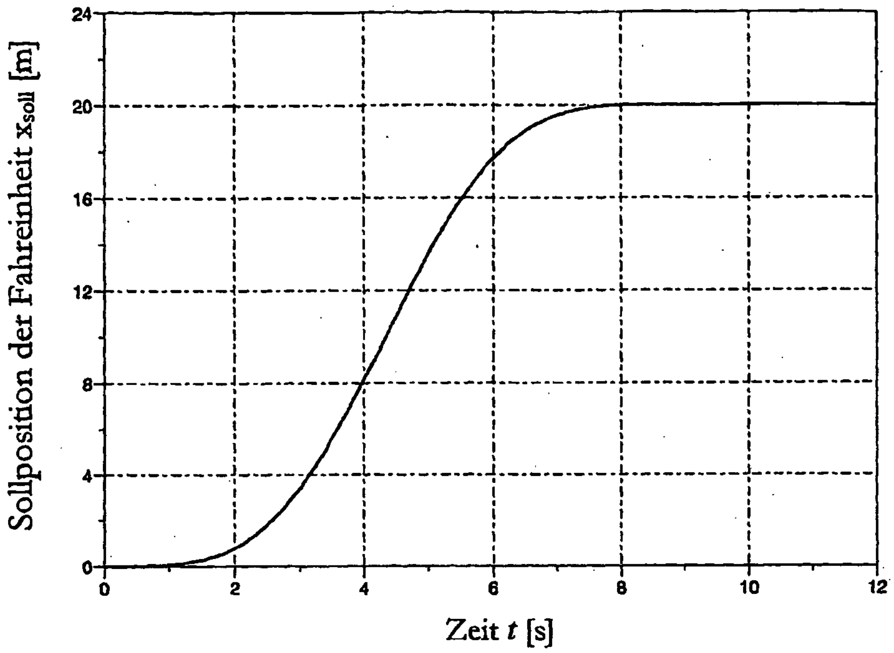
24
20
16
12
8
4
0
0
2
4
6
8
10
12
Sollposition der Fahreinheit $x_{soll}$ [m]
Zeit $t$ [s]

**Fig.8**

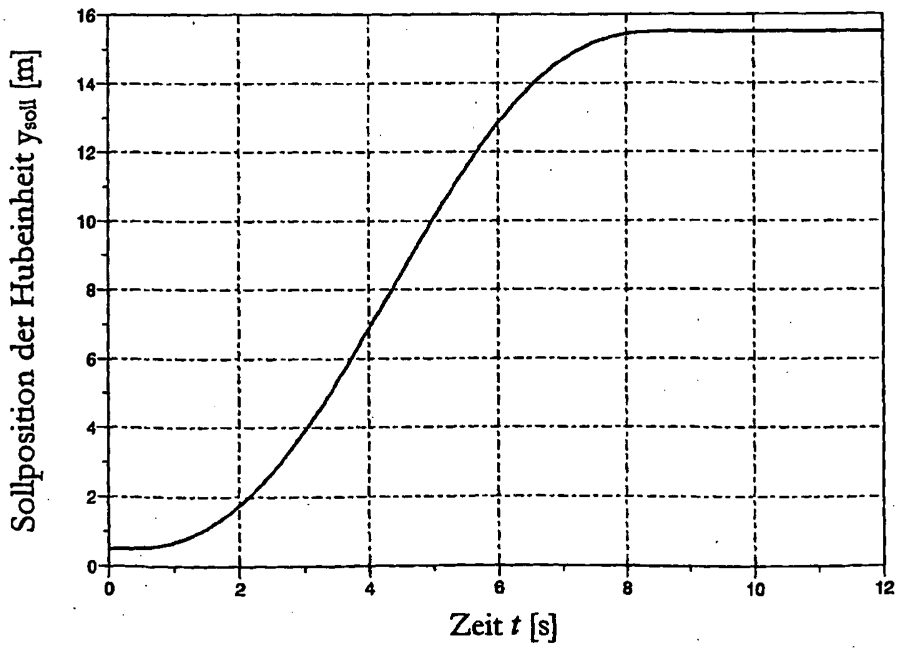
16
14
12
10
8
6
4
2
0
0
2
4
6
8
10
12
Sollposition der Hubeinheit $y_{soll}$ [m]
Zeit $t$ [s]

Fig.9

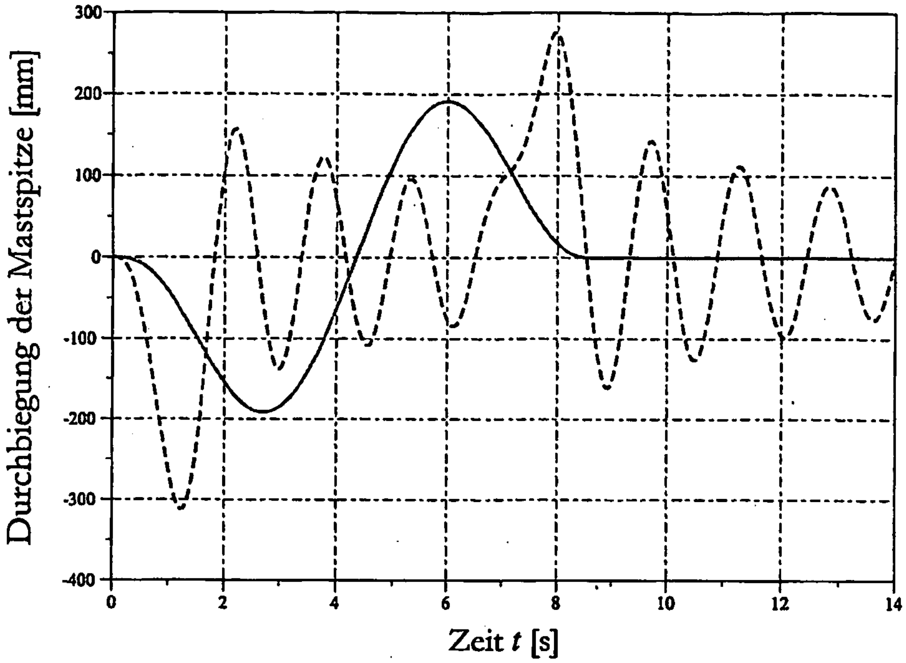
300
200
100
0
-100
-200
-300
-400
Durchbiegung der Mastspitze [mm]
0
2
4
6
8
10
12
14
Zeit t [s]

Fig.10

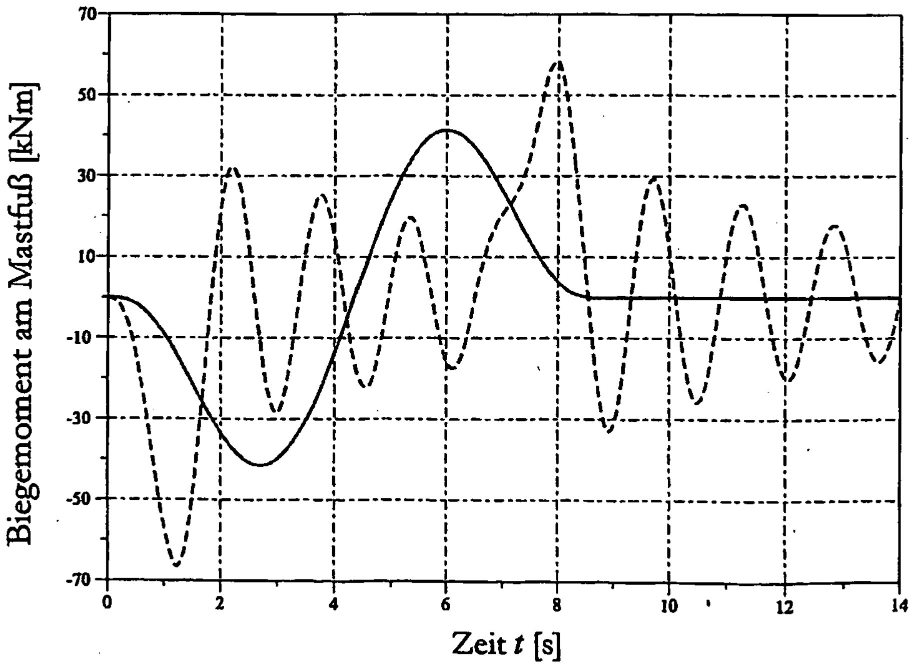
70
50
30
10
-10
-30
-50
-70
Biegemoment am Mastfuß [kNm]
0
2
4
6
8
10
12
14
Zeit t [s]

Fig.11

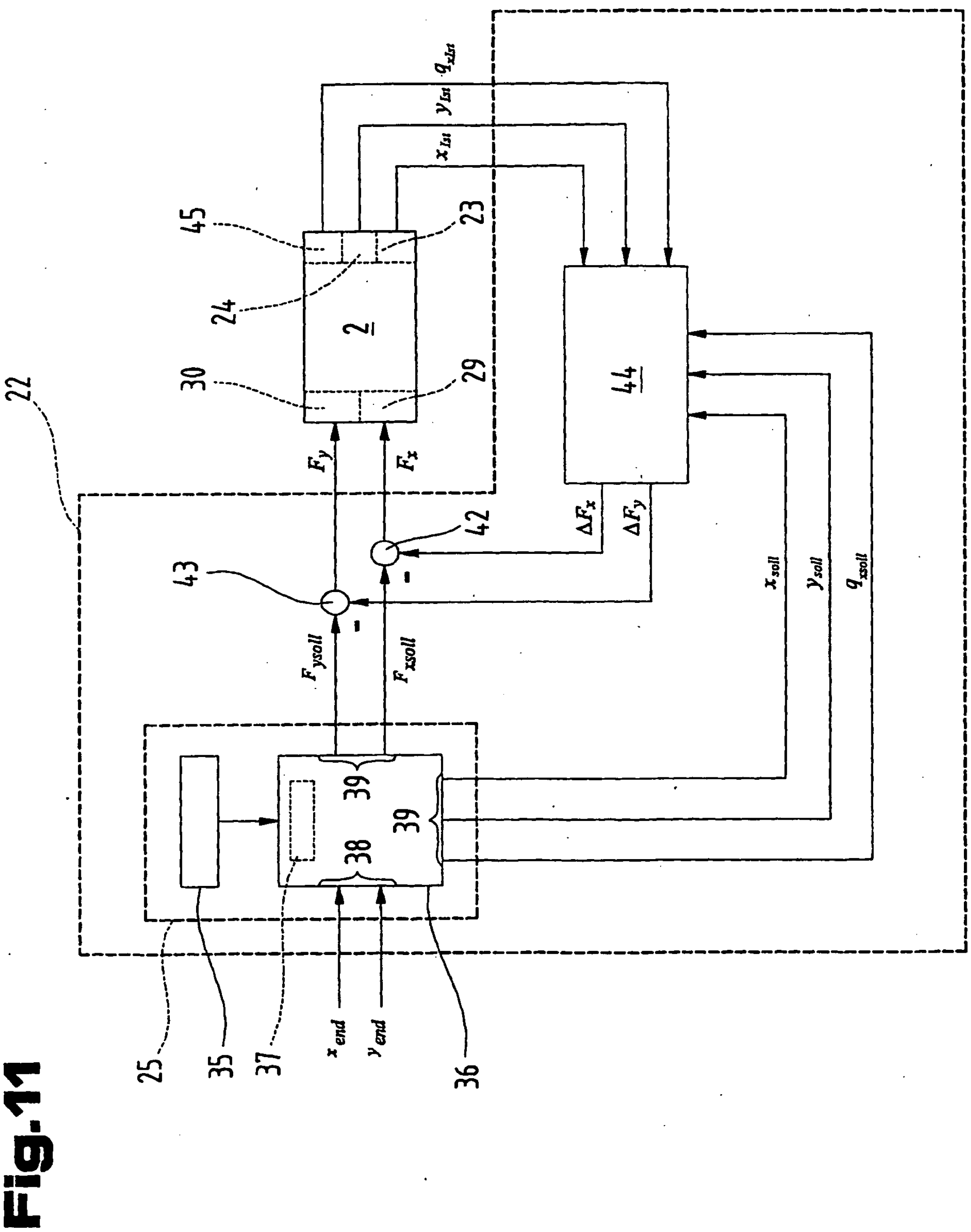
22
45
23
24
2
30
29
44
42
43
25
35
37
36
38
39
39
$F_y$
$F_x$
$F_{ysoll}$
$F_{xsoll}$
$\Delta F_x$
$\Delta F_y$
$x_{Ist}$
$y_{Ist}$
$q_{xIst}$
$x_{soll}$
$y_{soll}$
$q_{xsoll}$
$x_{end}$
$y_{end}$

Fig.12

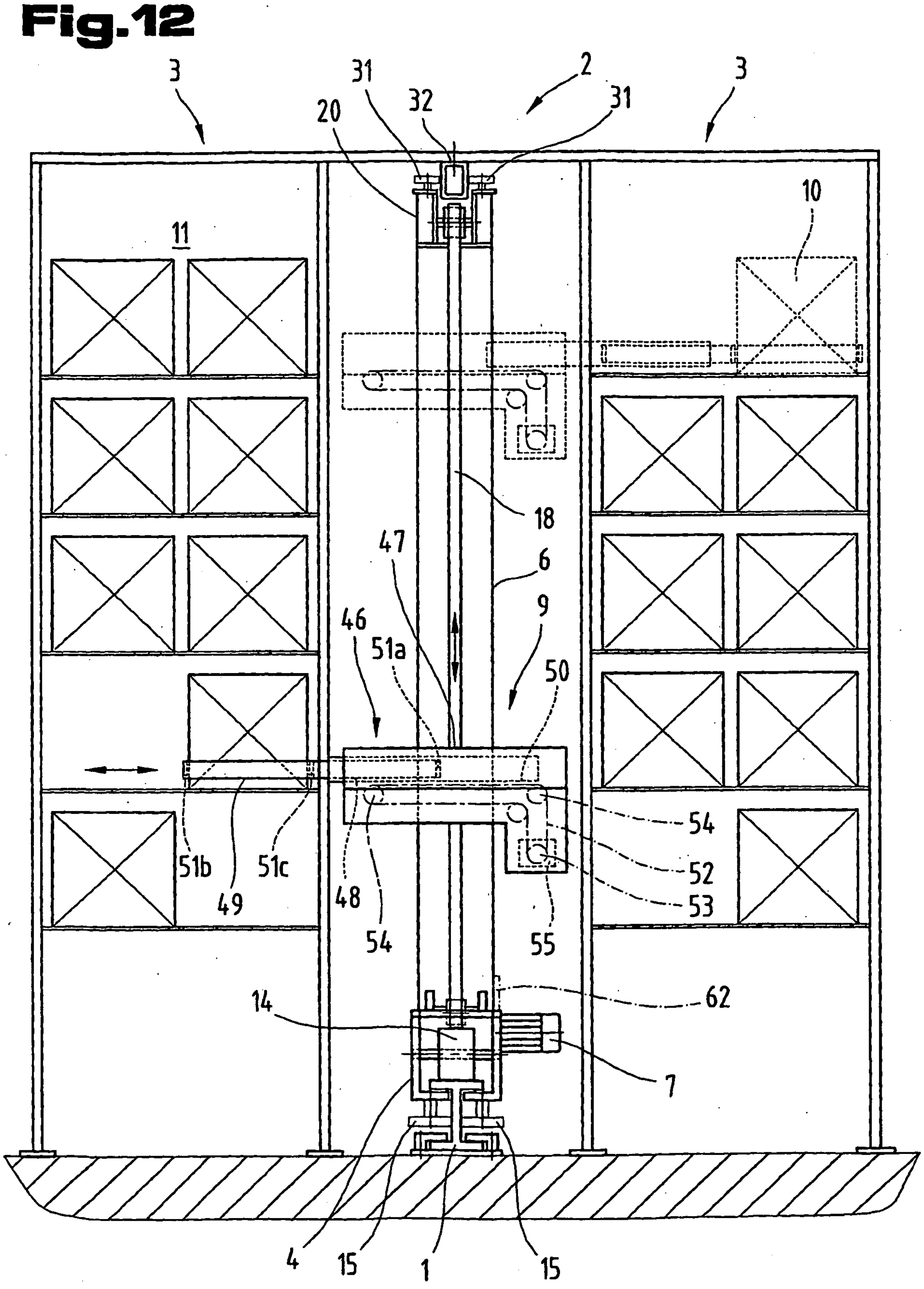
3
31
2
32
31
3
20
11
10
18
47
6
9
46
51a
50
54
52
53
55
54
48
49
51b
51c
62
14
7
4
15
1
15

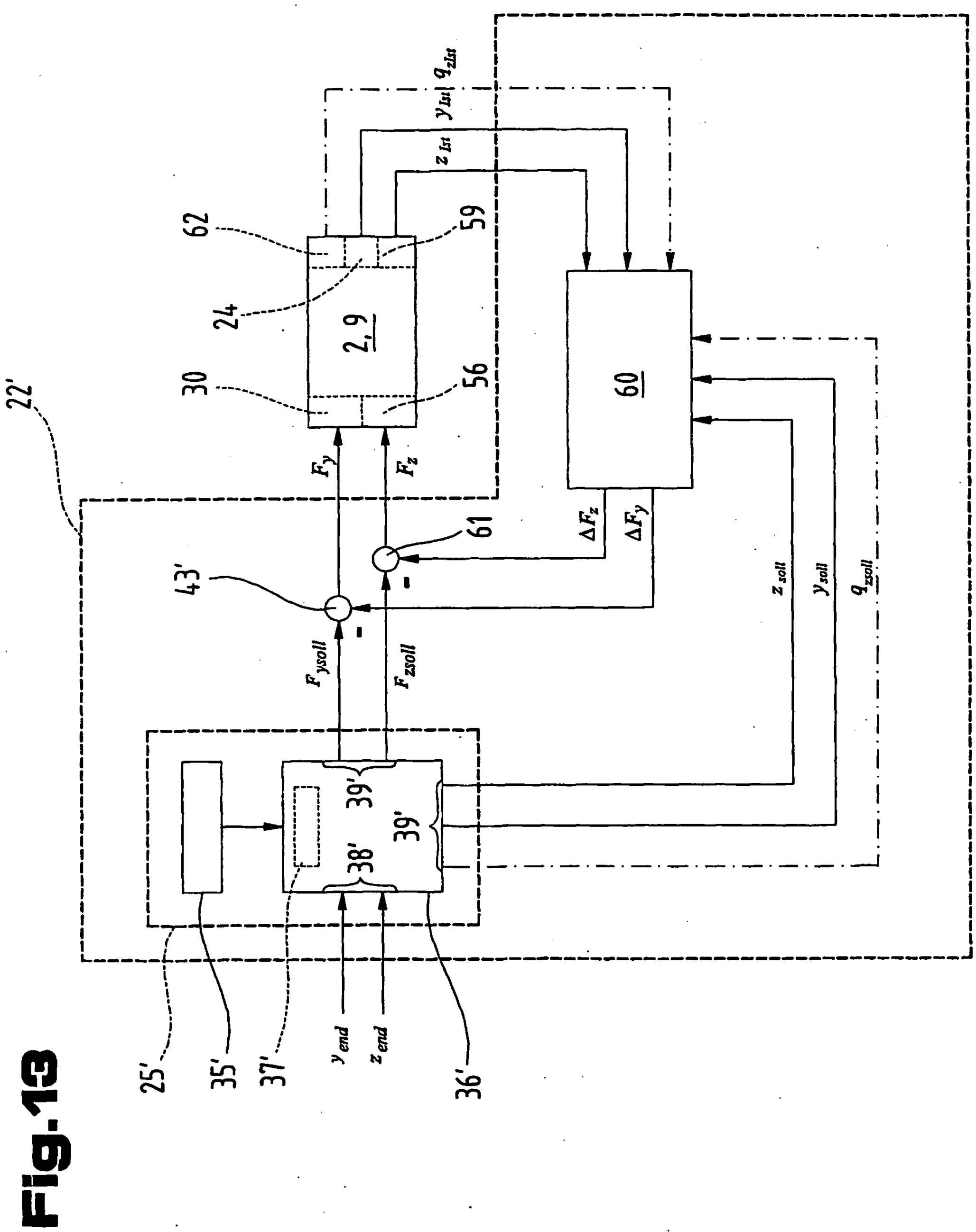
22'
62
59
24
2, 9
30
56
$z_{Ist}$
$y_{Ist}$
$q_{zIst}$
60
$F_y$
$F_z$
61
43'
$\Delta F_z$
$\Delta F_y$
$F_{ysoll}$
$F_{zsoll}$
$z_{soll}$
$y_{soll}$
$q_{zsoll}$
39'
39'
38'
25'
35'
37'
$y_{end}$
$z_{end}$
36'

Fig.13

Fig.14

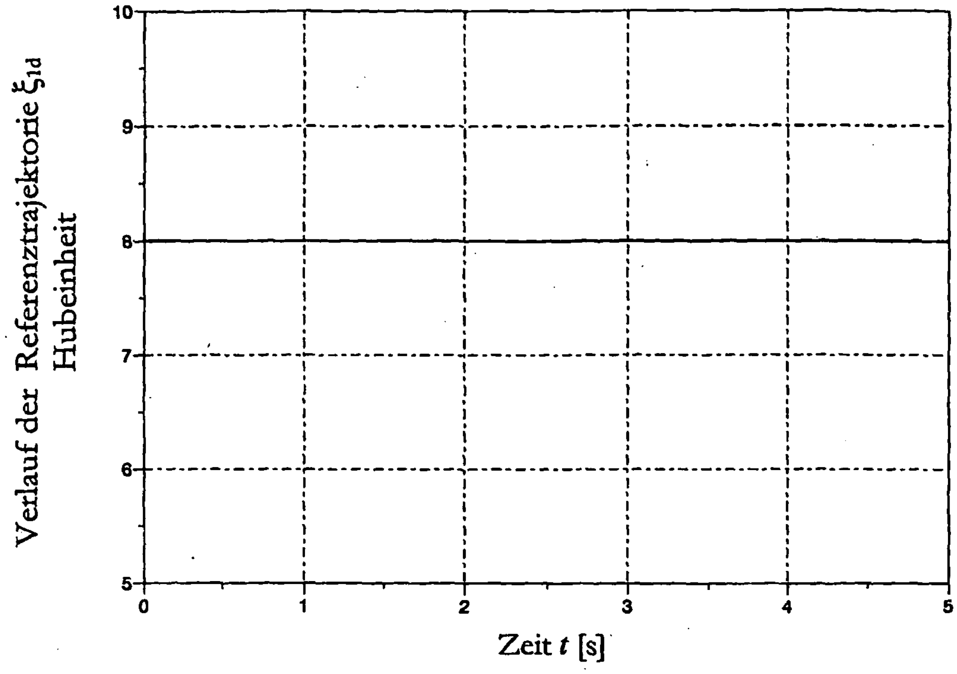
Verlauf der Referenztrajektorie $\xi_{1d}$
Hubeinheit
10
9
8
7
6
5
0
1
2
3
4
5
Zeit $t$ [s]

Fig.15

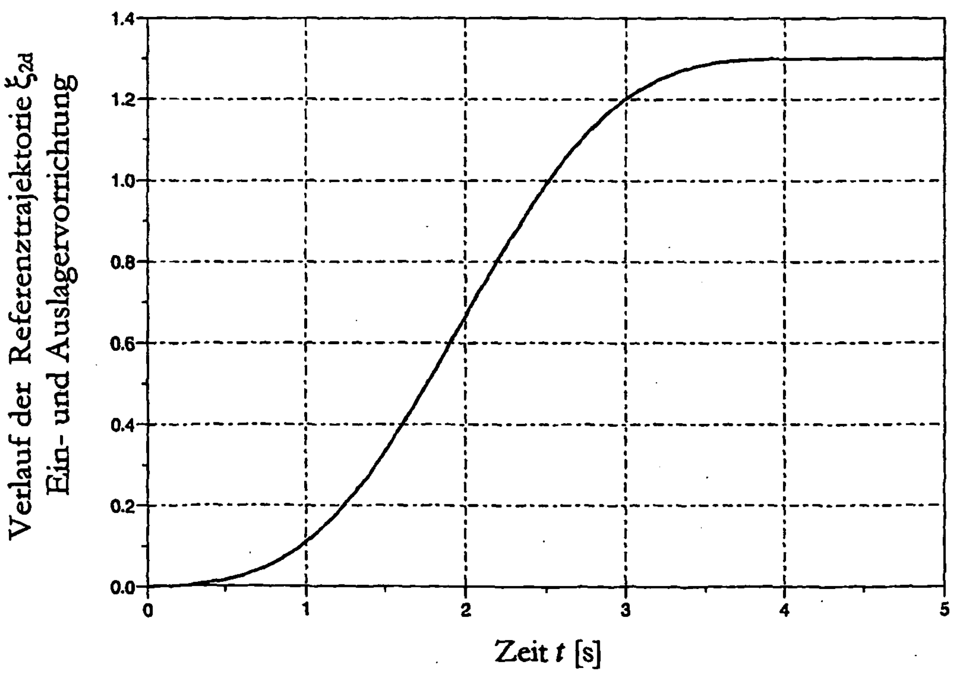
Verlauf der Referenztrajektorie $\xi_{2d}$
Ein- und Auslagervorrichtung
1.4
1.2
1.0
0.8
0.6
0.4
0.2
0.0
0
1
2
3
4
5
Zeit $t$ [s]

# Fig.16

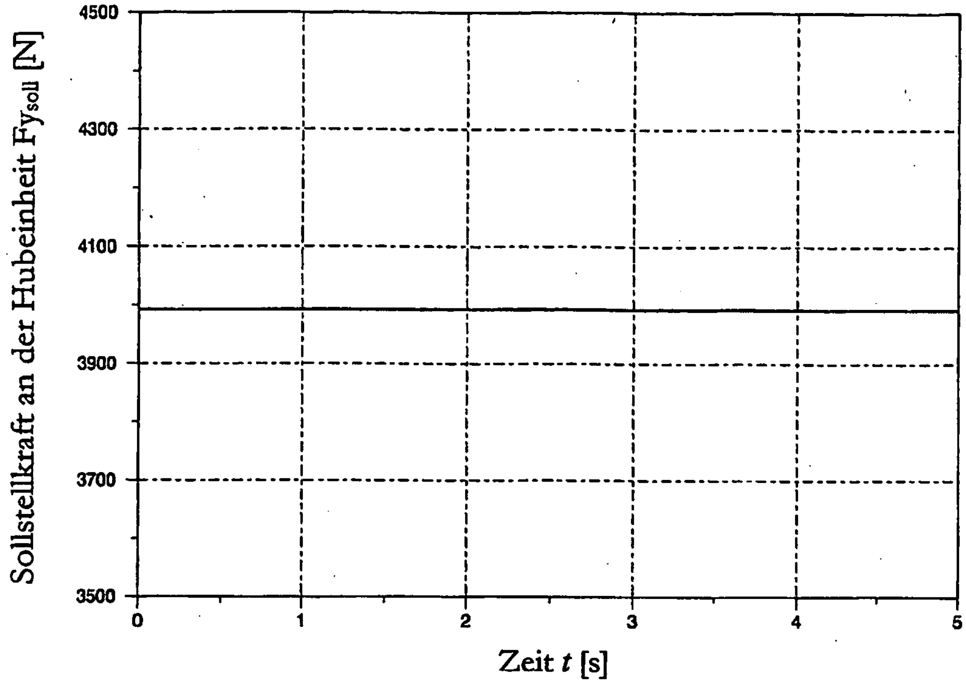
4500
4300
4100
3900
3700
3500
0
1
2
3
4
5
Sollstellkraft an der Hubeinheit $Fy_{soll}$ [N]
Zeit *t* [s]

# Fig.17

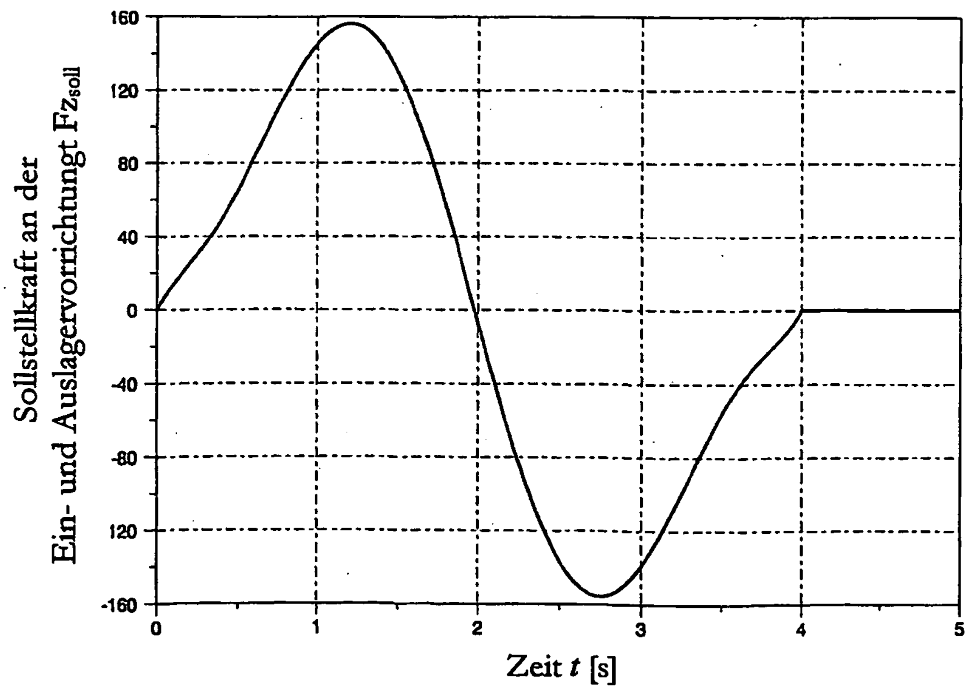
160
120
80
40
0
-40
-80
120
-160
0
1
2
3
4
5
Sollstellkraft an der
Ein- und Auslagervorrichtungt $Fz_{soll}$
Zeit *t* [s]

# Fig.18

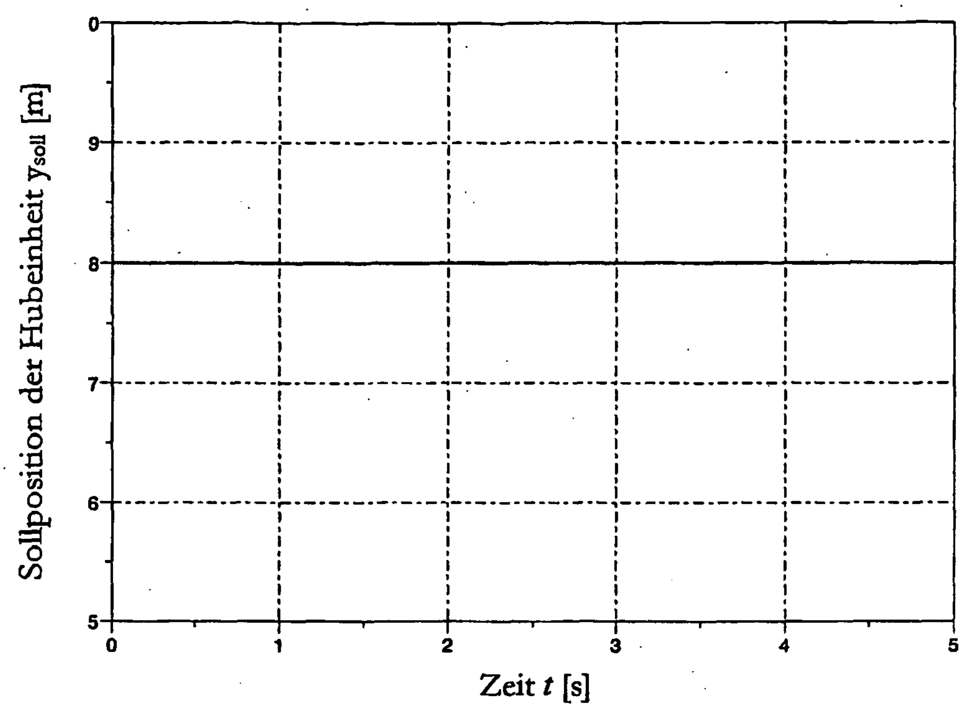
Sollposition der Hubeinheit $y_{soll}$ [m]
10
9
8
7
6
5
0
1
2
3
4
5
Zeit $t$ [s]

# Fig.19

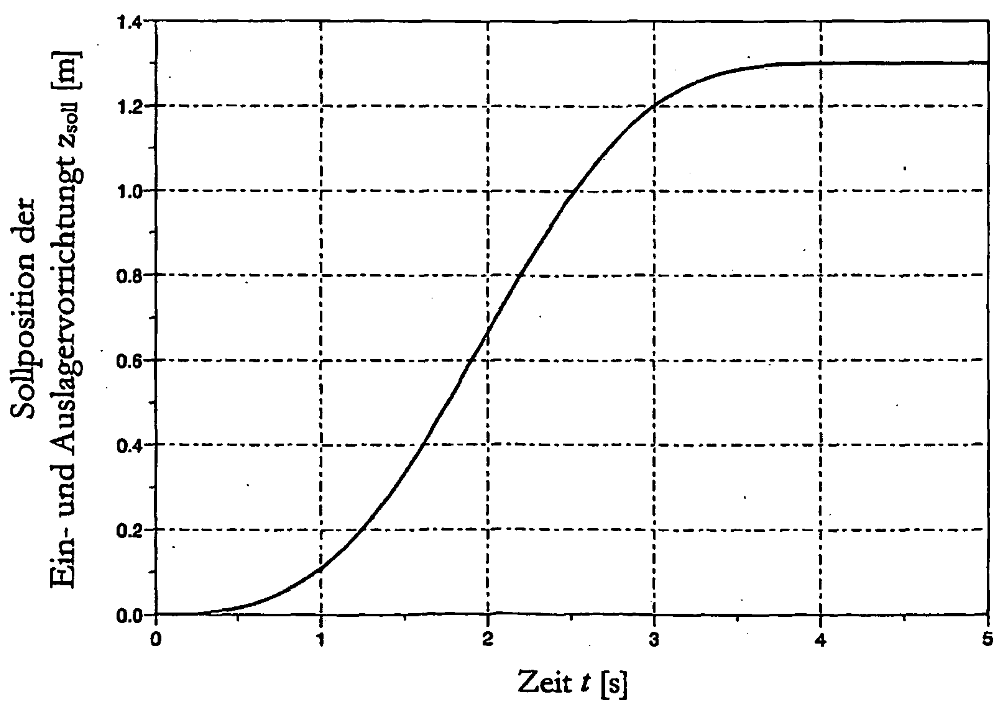
Sollposition der
Ein- und Auslagervorrichtungt $z_{soll}$ [m]
1.4
1.2
1.0
0.8
0.6
0.4
0.2
0.0
0
1
2
3
4
5
Zeit $t$ [s]

Fig.20

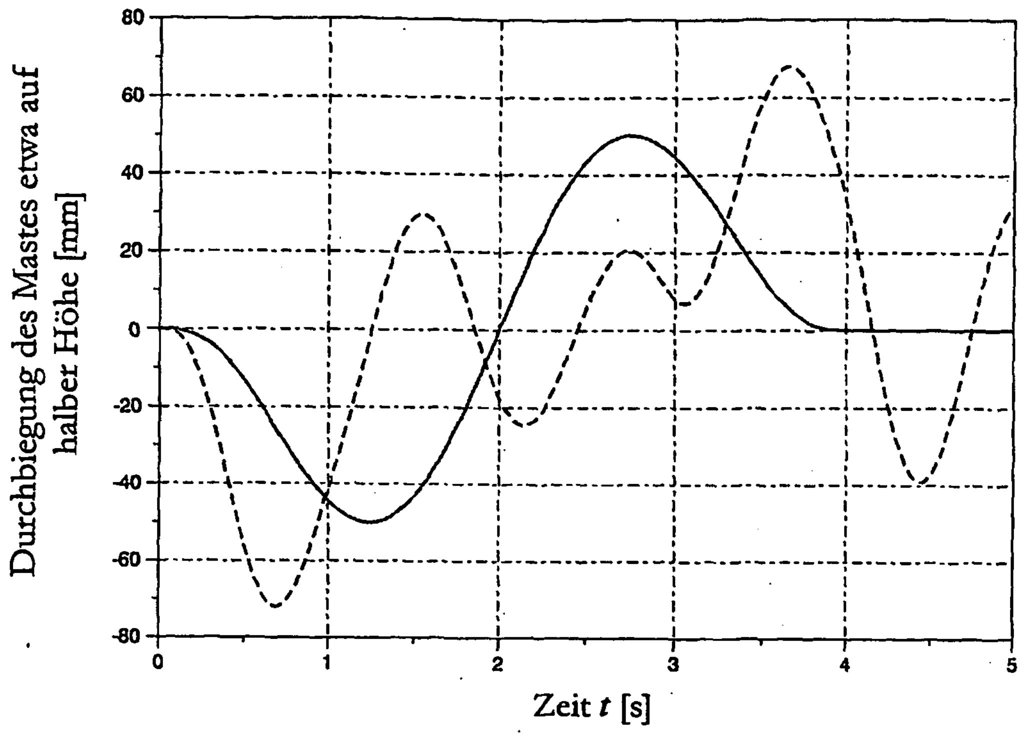
80
60
40
20
0
-20
-40
-60
-80
0
1
2
3
4
5
Durchbiegung des Mastes etwa auf halber Höhe [mm]
Zeit t [s]

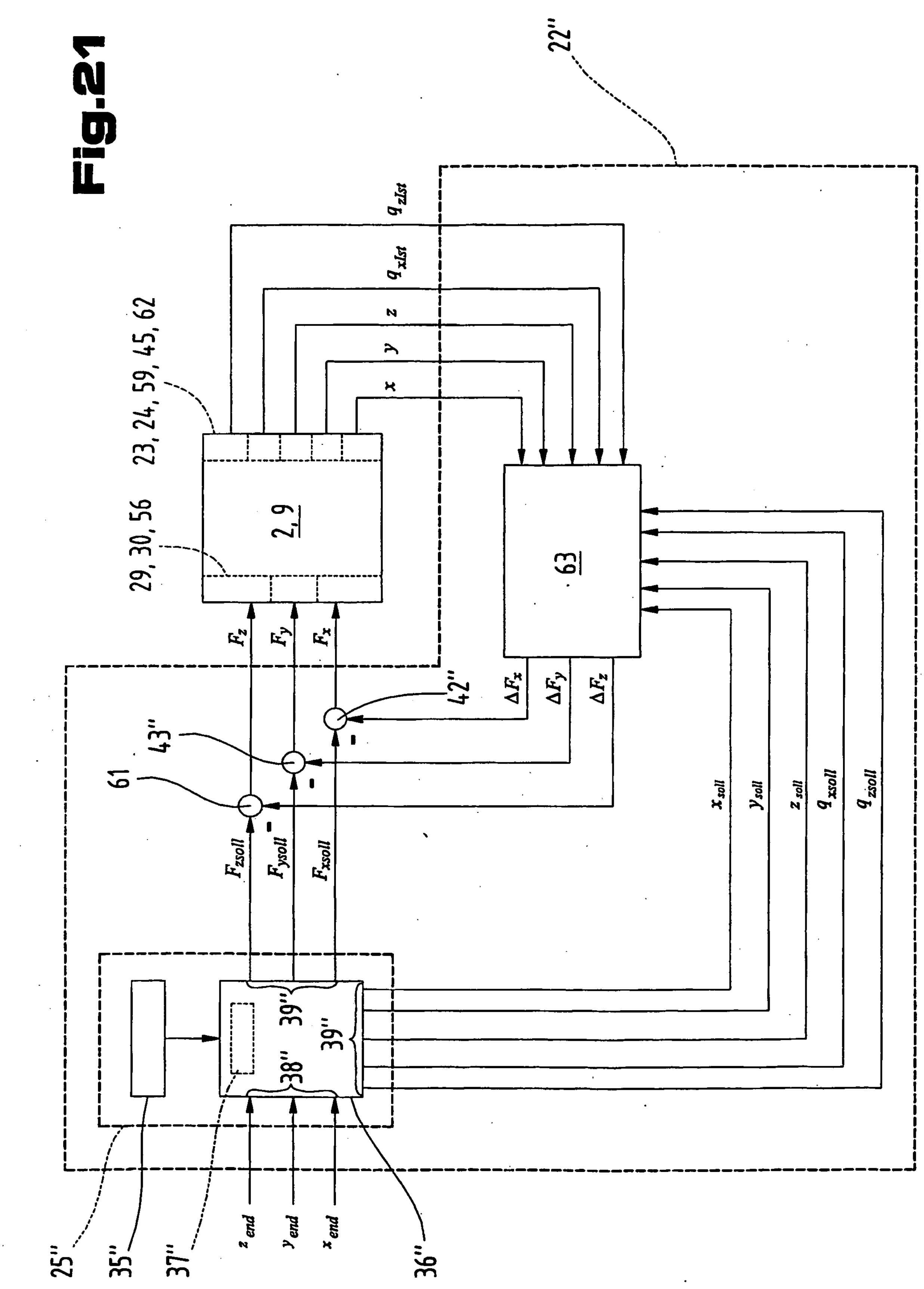
22''
23, 24, 59, 45, 62
29, 30, 56
2, 9
63
$q_{zIst}$
$q_{xIst}$
z
y
x
$F_z$
$F_y$
$F_x$
42''
43''
61
$\Delta F_x$
$\Delta F_y$
$\Delta F_z$
$F_{zsoll}$
$F_{ysoll}$
$F_{xsoll}$
$x_{soll}$
$y_{soll}$
$z_{soll}$
$q_{xsoll}$
$q_{zsoll}$
39''
38''
$z_{end}$
$y_{end}$
$x_{end}$
25''
35''
37''
36''

Fig.21

Fig.22

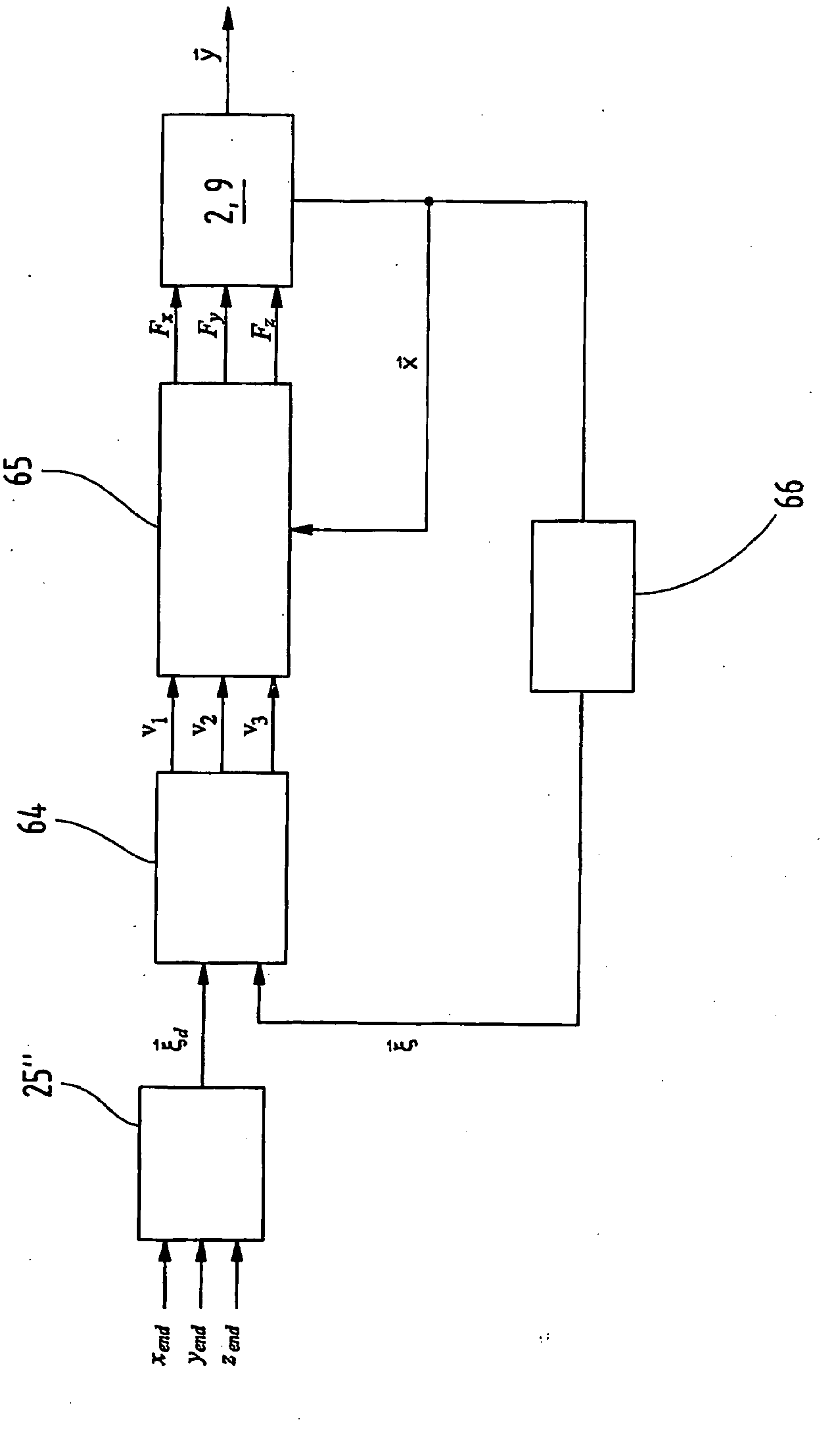

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19641192 A1
- JP 11301815 A
- JP 9272606 A
- EP 0806715 B1
- DE 10064182 A1
- US 20030185656 A1
- WO 03004385 A2
- DE 4330795 A1
- DE 19534291 A1


### In der Beschreibung aufgeführte Nicht-Patentliteratur


- Regelungstechnische Praxis. R. Oldenbourg Verlag, 1997
- **ZAMM Z.** *Angew. Math. Mech.,* 2003, vol. 83 (2), 119-127